# EUROPÄISCHE PATENTSCHRIFT

(11) **EP 2 911 895 B1**
(45) Veröffentlichungstag und Bekanntmachung des Hinweises auf die Patenterteilung: **23.11.2016**
(21) Anmeldenummer: 13766039.5
(22) Anmeldetag: 20.09.2013
(51) Int. Cl.: B60C 23/00, F16J 15/00, F16J 15/16, F16J 15/3216, F16J 15/324, F16J 15/3236, B60B 19/08

(54) **FAHRZEUGACHSBAUGRUPPE MIT INTEGRIERTER DRUCKMITTELLEITUNG ZUR REIFENBEFÜLLUNG**
VEHICLE AXLE ASSEMBLY COMPRISING INTEGRATED PRESSURE MEDIUM LINE FOR FILLING TYRES
ENSEMBLE ESSIEU DE VÉHICULE DOTÉ D'UNE CONDUITE D'AGENT DE PRESSION POUR LE GONFLAGE DES PNEUS

(30) Priorität: 26.10.2012 DE 102012021044; 01.03.2013 DE 102013003562
(43) Veröffentlichungstag der Anmeldung: 02.09.2015
(73) Patentinhaber: GV Engineering GmbH, 71296 Heimsheim (DE)
(72) Erfinder: TSIBERIDIS, Konstantinos, 74076 Heilbronn (DE)
(74) Vertreter: Beyer, Andreas
(86) Internationale Anmeldenummer: PCT/EP2013/069599
(87) Internationale Veröffentlichungsnummer: WO 2014/063873

(56) Entgegenhaltungen:
- EP-A1- 0 656 267
- EP-A1- 1 787 830
- EP-B1- 2 321 561
- WO-A1-00/15451
- WO-A1-2007/090361
- WO-A1-2012/084412
- DE-A1- 3 001 056
- DE-A1- 3 206 488
- FR-A1- 2 874 671
- US-A- 4 165 085
- US-A- 4 427 201
- US-A- 4 804 027

## Beschreibung

Die vorliegende Erfindung betrifft allgemein das Gebiet luftbereifter Fahrzeuge und insbesondere eine Fahrzeugachsbaugruppe mit einer integrierten Druckmittelleitung zur Zuführung eines Druckmittels in einen Reifen. Solche Fahrzeugachsbaugruppen sind beispielsweise bekannt aus der WO 2007/090361 A1 und der WO 00/15451 A1.

Zur Befüllung eines Fahrzeugreifens mit einem Druckmittel, in der Regel Druckluft, ist es bekannt, ein Ventil am Fahrzeugrad vorzusehen, über welches das Druckmittel in den Reifen eingebracht werden kann. Bei Personenkraftwagen, Lastkraftwagen oder Nutzfahrzeugen sind solche Ventile üblicherweise im Bereich einer Felge, auf der der Reifen montiert ist, so angeordnet, dass sie für eine Person, die die Befüllung des Reifens vornehmen will, leicht zugänglich sind. Typischerweise wird dabei eine fahrzeugexterne Druckmittelquelle an das Ventil des Reifens angeschlossen, üblicherweise mittels einer Schlauchleitung, um so den Reifendruck kontrollieren und gegebenenfalls korrigieren zu können.

Dieses Verfahren der Reifendruckregulierung hat grundsätzlich den Nachteil, dass eine Regulierung nur an Orten vorgenommen werden kann, an denen eine Druckmittelquelle vorhanden ist, z.B. an Tankstellen, da in jedem Fall eine Ankopplung an eine fahrzeugexterne Druckmittelquelle vonnöten ist. Grundsätzlich wäre es wünschenswert, eine Reifendruckregulierung autonom vornehmen zu können, beispielsweise um im Fernlastverkehr den Reifendruck schnell an veränderte Beladungsverhältnisse, Fahrbahnoberflächen und Umgebungstemperaturen anzupassen.

Es ist daher Aufgabe der Erfindung, eine Lösung anzugeben, mit der eine Druckmittelzu- und -abfuhr in einen Fahrzeugreifen autonom und vorzugsweise auch während der Fahrt vorgenommen werden kann, wobei dennoch die Dichtflächen eines zur Abdichtung verwendeten Wellendichtrings eine möglichst lange Lebensdauer haben sollen.

Ausgehend von einer Fahrzeugachsbaugruppe, wie sie beispielsweise aus der WO 2007/090361 A1 bekannt ist, ist diese Aufgabe erfindungsgemäß dadurch gelöst, dass wenigstens einer der Wellendichtringe zumindest einen Kanal aufweist, der sich aus einem inneren Hohlraum des Wellendichtrings in im Wesentlichen radialer Richtung zu einem in einem Bereich zwischen dem Kragen und einer Hauptdichtlippe des Wellendichtrings liegenden Seitenabschnitt des Wellendichtrings erstreckt. Auf die besonderen Vorteile einer solchen Ausbildung wird im Folgenden näher eingegangen.

Grundsätzlich hat eine derartige Anordnung den Vorteil, dass eine Druckmittelzuführung von einem fahrzeugfesten Teil, nämlich dem Achskörper, in die relativ zum Achskörper rotierende Nabe und damit in das sich um den Achskörper drehende Rad ermöglicht ist, ohne dass hierzu zusätzliche Dichtungen vorgesehen werden müssen. Erreicht wird dies dadurch, dass zwischen den beiden Wellendichtringen eine ringförmige Kammer vorgesehen wird, die eine zur Druckmittelweiterleitung geeignete Kopplung zwischen dem feststehenden Achskörper und dem sich drehenden Rad herstellt.

Zur Bildung der ringförmigen Kammer wird erfindungsgemäß ein zwischen dem Achskörper und der Nabe befindlicher, im Wesentlichen hohlzylindrischer Raum genutzt. Der axial innere und der axial äußere Wellendichtring werden axial in einem solchen Abstand voneinander angeordnet, dass die ringförmige Kammer gebildet wird.

Die Abdichtung zwischen dem Achskörper und der Nabe mittels der Wellendichtringe kann dabei unmittelbar oder mittelbar erreicht werden. Bei einer unmittelbaren Abdichtung steht der Wellendichtring sowohl mit dem Achskörper als auch mit der Nabe direkt in Kontakt, so dass eine Abdichtung zwischen dem Achskörper und der Nabe alleine durch den Wellendichtring erreicht wird. Bei einer mittelbaren Abdichtung sind zwischen dem Wellendichtring und dem Achskörper bzw. der Nabe weitere Elemente vorhanden, so dass der Wellendichtring nicht direkt mit dem Achskörper und/oder der Nabe in Kontakt ist.

Im Folgenden wird zunächst auf unmittelbar abdichtende Wellendichtringe Bezug genommen. Der Fall der mittelbar abdichtenden Wellendichtringe wird später erläutert. Bei unmittelbar abdichtenden Wellendichtringen wird die ringförmige Kammer durch die Mantelfläche des zylindrischen Achskörpers, die der Mantelfläche des Achskörpers zugewandte Innenfläche der Nabe und die beiden Wellendichtringe begrenzt.

Die erste Druckmittelleitung ist dazu vorgesehen, ein Druckmittel wie etwa Druckluft von einer an Bord des Fahrzeugs befindlichen Druckmittelquelle in die ringförmige Kammer zu leiten. Die Druckmittelquelle kann z.B. ein Kompressor oder ein Druckmittelbehälter sein, in dem beispielsweise Druckluft gespeichert ist. Die erste Druckmittelleitung ist relativ zum Achskörper feststehend. Sie kann außerhalb des Achskörpers geführt sein und an diesem mittels geeigneter Halterungen befestigt sein. Ist die erste Druckmittelleitung außerhalb des Achskörpers geführt, kann sie sich vorzugsweise axial durch einen der beiden Wellendichtringe erstrecken, um in die ringförmige Kammer zu münden. Ebenso ist es möglich, die erste Druckmittelleitung zumindest streckenweise durch den Achskörper zu führen, etwa durch eine in dem Achskörper ausgebildete Bohrung. Die erste Druckmittelleitung kann dann unmittelbar in die ringförmige Kammer münden, d.h. ohne einen der Wellendichtringe zu durchqueren.

Die zweite Druckmittelleitung dient dazu, das Druckmittel aus der ringförmigen Kammer weiterzuleiten und ist an ihrem kammerfernen Ende zur Verbindung mit einem auf der Nabe befestigten Rad ausgestaltet. Die zweite Druckmittelleitung erstreckt sich aus der ringförmigen Kammer heraus und kann dabei zumindest streckenweise durch die Nabe verlaufen, etwa durch eine Bohrung in der Nabe. Ein auf der Nabe befestigtes Rad kann eine Felge und einen auf der Felge montierten Reifen mit einem Ventil zum Anschluss der zweiten Druckmittelleitung umfassen. Die zweite Druckmittelleitung kann somit bis zu dem Reifenventil geführt und an dieses angeschlossen sein, so dass eine Druckmittelzuführung in den Reifen erfolgen kann. Vorteilhaft kann das Reifenventil als Y-Anschluss ausgeführt sein, um eine Druckmittelzuführung wahlweise durch die zweite Druckmittelleitung oder durch eine andere Zuleitung zu ermöglichen, etwa durch eine oben erwähnte Ankopplung an eine externe Druckmittelquelle.

Die beiden Wellendichtringe können an der Nabe fixiert sein, beispielsweise durch Reibschluss, und bei einer Drehung der Nabe um den Achskörper auf der Mantelfläche des Achskörpers gleiten. Gleichermaßen können beide Wellendichtringe am Achskörper fixiert sein und bei einer Drehung der Nabe um den Achskörper auf der Innenfläche der Nabe gleiten. Mündet die erste Druckmittelleitung durch einen der beiden Wellendichtringe in die ringförmige Kammer, so muss der betroffene Wellendichtring relativ zum Achskörper feststehen. Mündet die erste Druckmittelleitung durch den Achskörper in die ringförmige Kammer, so können die beiden Wellendichtringe jeder für sich relativ zum Achskörper oder relativ zur Nabe feststehen.

Die beschriebene Achsbaugruppe ist deshalb besonders vorteilhaft, weil in herkömmlichen Achsbaugruppen, etwa von Lastkraftwagen, typischerweise zwei aneinander anliegende Wellendichtringe bereits vorhanden sind, um zwischen dem Achskörper und der Nabe eine Abdichtung eines Radlagers zu gewährleisten. Die Wellendichtringe dienen dazu, einen Austritt von Schmiermittel aus dem Radlager einerseits und einen Eintritt von Staub oder Schmutzpartikeln in das Radlager andererseits zu unterbinden. Bei der erfindungsgemäßen Lösung werden diese bereits vorhandenen Komponenten lediglich neu angeordnet, d.h. axial voneinander beabstandet, um zwischen den beiden Wellendichtringen einen Kopplungsraum für die zwei Druckmittelleitungen in Form der ringförmigen Kammer zu bilden. Vorteilhaft ist eine solche Lösung auch deshalb, weil etwa im Falle eines Lastkraftwagens oder Nutzfahrzeugs typischerweise bereits eine Druckmittelquelle in Gestalt eines Druckluftkompressors für die Bremsanlage im Fahrzeug vorhanden ist, die zur Reifendruckregulierung verwendet werden kann.

Bei einer Zuführung von Druckmittel durch die erste Druckmittelleitung entsteht in der ringförmigen Kammer ein Überdruck, d.h. ein größerer Druck als der Atmosphärendruck, der danach trachtet, die beiden Wellendichtringe axial auseinanderzudrücken. Um einem axialen Auseinanderdriften der beiden Wellendichtringe entgegenzuwirken, kann wenigstens einer der beiden Wellendichtringe, vorzugsweise jedoch beide, benachbart zu der ringförmigen Kammer mit einem radialen Kragen versehen sein.

Wenn ein Wellendichtring an der Nabe fixiert ist, dann wird ein solcher Kragen am Wellendichtring radial innen ausgebildet sein. Wenn ein Wellendichtring am Achskörper fixiert ist, dann wird der Kragen am Wellendichtring radial außen gebildet sein. Dabei kann der Kragen derart ausgeführt sein, dass er bereits bei Normaldruck, d.h. bei etwa atmosphärischem Druck, mit der Mantelfläche des Achskörpers in Kontakt ist. Ebenfalls denkbar ist, dass der Kragen bei Normaldruck von der Mantelfläche des Achskörpers noch beabstandet ist und sich erst bei einem Überdruck in der Kammer elastisch so verformt, dass er mit der Mantelfläche des Achskörpers in Kontakt kommt. In beiden Fällen führt die von dem Kragen an der kontaktierten Fläche erzeugte Reibkraft zu einer verbesserten axialen Fixierung des jeweiligen Wellendichtrings. Ferner kann an dem Kragen zusätzlich ein ringförmiges Federelement vorgesehen sein, dessen Federkraft die an der kontaktierten Fläche erzeugte Reibkraft weiter verstärkt.

Der Kragen kann zudem eine Dichtlippe aufweisen, die zumindest bei einem Überdruck in der Kammer mit dem Achskörper respektive der Nabe in Kontakt ist. Die Dichtlippe kann vorwiegend zu dem Zweck vorgesehen sein, zusätzlich zur Fixierungswirkung des Kragens eine nochmals verbesserte Abdichtung der ringförmigen Kammer zu bewirken.

Um einem möglichen Auseinanderdriften der beiden Wellendichtringe noch wirksamer zu begegnen, kann auf der Mantelfläche des Achskörpers gegenüber einem radial inneren Kragen eines Wellendichtrings eine Ringnut vorhanden sein, in die der Kragen radial hineinragt. Analog kann auf der Innenfläche der Nabe gegenüber einem radial äußeren Kragen eines Wellendichtrings eine Ringnut vorhanden sein, in die der Kragen radial hineinragt. Bei einem Überdruck in der Kammer wird der Kragen dann gegen die Nutwand gedrückt und stützt sich an ihr ab, so dass der Wellendichtring seine axiale Position beibehält.

Einem axialen Auseinanderdriften der beiden Wellendichtringe kann auch dadurch begegnet werden, dass auf der Mantelfläche des Achskörpers eine sich in Umfangsrichtung erstreckende Rippe vorhanden ist, an der sich ein radial innerer Kragen eines Wellendichtrings zumindest bei einem Überdruck in der Kammer axial abstützt. Analog kann auf der Innenfläche der Nabe eine sich in Umfangsrichtung erstreckende Rippe vorhanden sein, an der sich ein radial äußerer Kragen eines Wellendichtrings zumindest bei einem Überdruck in der Kammer axial abstützt.

Eine derartige Rippe kann dabei einstückig mit dem Achskörper respektive der Nabe ausgebildet sein, sie kann aber auch durch einen in eine Nut eingesetzten Sprengring oder O-Ring aus Elastomermaterial gebildet sein. Gemäß einer Ausführungsform weist die Rippe einen im Wesentlichen rechteckigen Querschnitt auf.

Wiederum kann ein radial innerer Kragen eine Dichtlippe aufweisen, die zumindest bei einem Überdruck in der Kammer mit dem Achskörper oder der Rippe in Kontakt ist. Analog kann ein radial äußerer Kragen eine Dichtlippe aufweisen, die zumindest bei einem Überdruck in der Kammer mit der Nabe oder der Rippe in Kontakt ist. Eine derartige Dichtlippe kann zusätzlich zu der durch das Zusammenwirken des Kragens und der Rippe erreichten Abstützfunktion eine verbesserte Abdichtung der ringförmigen Kammer bewirken.

Gemäß einer anderen Ausgestaltung ist zwischen den beiden Wellendichtringen auf der Mantelfläche des Achskörpers ein Ringflansch mit zwei elastischen, radialen Seitenwänden angebracht. Die erste Druckmittelleitung kann dann im Ringflansch zwischen den beiden Seitenwänden in die ringförmige Kammer münden. Bei einer derartigen Anordnung kann die Abdichtung der Kammer dadurch erfolgen, dass die Seitenwände des Ringflansches bei einem Überdruck in der Kammer elastisch verformt, d.h. auseinander gedrückt und dabei axial gegen jeweils einen der Wellendichtringe gedrückt werden.

In einer Weiterbildung der vorgenannten Ausgestaltung ist auf der Innenfläche der Nabe gegenüber dem Ringflansch ein Ring mit U-förmigem Querschnitt befestigt, dessen Seitenwände radial einwärts gerichtet sind und die elastischen Seitenwände des Ringflansches übergreifen. Die zweite Druckmittelleitung kann sich dann durch den Ring zwischen seinen Seitenwänden in die Nabe erstrecken. Die Abdichtung der ringförmigen Kammer kann hierbei dadurch erfolgen, dass sich die Seitenwände des Ringflansches bei einem Überdruck in der Kammer elastisch verformen und dabei axial gegen jeweils eine der Seitenwände des U-förmigen Rings gedrückt werden.

Die soeben beschriebene Ausführungsform mit einem zwei elastische Seitenwände aufweisenden Ringflansch auf der Mantelfläche des Achskörpers und einem an der Innenfläche der Nabe befestigten Ring mit U-förmigem Querschnitt bzw. umgekehrt (U-förmiger Ring am Achskörper und Ringflansch an der Nabe) kann auch ohne die beiden Wellendichtringe zum Einsatz gelangen, da die ringförmige Kammer in diesem Fall bereits durch das Zusammenwirken des Ringflansches mit dem den U-förmigen Querschnitt aufweisenden Ring festgelegt ist.

Ein axiales Auseinanderdriften der beiden Wellendichtringe kann auch dadurch unterbunden werden, dass die beiden Wellendichtringe axial starr miteinander gekoppelt sind. Eine solche starre Kopplung kann beispielsweise durch Anbringen eines oder mehrerer starrer Verbindungselemente zwischen den beiden Wellendichtringen erreicht werden. Die beiden Wellendichtringe können auch als eine Einheit gefertigt, beispielsweise gegossen sein, wobei gleichzeitig der zwischen beiden Wellendichtringen erforderliche Freiraum zur Zu- und/oder Abführung von Reifenfüllluft zusammen mit den benötigten, radialen Durchlässen ohne weiteres konstruktiv vorgesehen werden kann.

In ähnlicher Weise kann einem Auseinanderdriften der beiden Wellendichtringe dadurch entgegengewirkt werden, dass die beiden Wellendichtringe axial elastisch miteinander gekoppelt sind. Eine elastische Kopplung kann beispielsweise durch Anbringen eines oder mehrerer Federelemente zwischen den beiden Wellendichtringen realisiert werden. Das Federelement bzw. die Federelemente können dabei so ausgestaltet sein, dass sie eine dem Auseinanderdriften der Wellendichtringe entgegenwirkende Zugkraft erst dann ausüben, wenn in der ringförmigen Kammer ein Überdruck herrscht. Auch eine Kombination aus starrer und elastischer Kopplung der beiden Wellendichtringe ist möglich, beispielsweise um einem bestimmten Bereich der Wellendichtringe eine definierte Verformung in axialer Richtung zu gestatten.

Gemäß einer weiteren Ausführungsform kann wenigstens einer der beiden Wellendichtringe in ein zwischen dem Achskörper und der Nabe angeordnetes Kugellager integriert sein. In diesem Fall wird die Abdichtung zwischen dem Achskörper und der Nabe nicht unmittelbar durch den Wellendichtring erreicht, sondern lediglich mittelbar. Ein solcher Wellendichtring ist vorzugsweise zwischen dem radial inneren Laufring und dem radial äußeren Laufring des Kugellagers so angeordnet, dass er im Bereich zwischen den Laufringen eine abdichtende Außenhaut für das Kugellager bildet, die ein Eindringen von Staub und Schmutzpartikeln in das Kugellager sowie einen Austritt von Schmiermitteln aus dem Kugellager verhindert. Der radial innere Laufring des Kugellagers liegt dabei flächig an der Mantelfläche des Achskörpers an und ist relativ zum Achskörper fixiert. Der radial äußere Laufring des Kugellagers liegt flächig an der Innenfläche der Nabe an und ist relativ zur Nabe fixiert. Die ringförmige Kammer wird bei dieser Anordnung an ihrer kugellagerzugewandten Seite demnach durch den integrierten Wellendichtring sowie die der ringförmigen Kammer zugewandten Seitenflächen der beiden Laufringe begrenzt.

Ein axiales Wegdriften eines solchen Wellendichtrings bei einem Überdruck in der Kammer wird in der Regel durch die Fixierung des Kugellagers relativ zum Achskörper und zur Nabe verhindert. Zusätzlich ist es aber durchaus vorstellbar, analog zu den oben beschriebenen Wellendichtringen auch für derartige integrierte Wellendichtringe eine Stützstruktur vorzusehen, z.B. als Nut oder Rippe an einem der Laufringe, an welcher sich ein jeweiliger Kragen zumindest bei einem Überdruck in der ringförmigen Kammer abstützen kann.

Grundsätzlich sind zur Bildung der ringförmigen Kammer beliebige Kombinationen von mittelbar und unmittelbar abdichtenden Wellendichtringen denkbar. So kann gemäß einer Ausgestaltung die ringförmige Kammer zwischen einem axial inneren, unmittelbar abdichtenden Welldichtring und einem axial äußeren, mittelbar abdichtenden Wellendichtring festgelegt sein. Auch eine umgekehrte Anordnung ist vorstellbar, also eine Begrenzung der Kammer durch einen axial inneren, mittelbar abdichtenden Welldichtring und einen axial äußeren, unmittelbar abdichtenden Wellendichtring. Sind in einer Fahrzeugachsbaugruppe zwei voneinander beabstandete Kugellager mit integrierten Wellendichtringen vorhanden, so ist es gemäß einer weiteren Ausführungsform möglich, die ringförmige Kammer zwischen den beiden Kugellagern, d.h. zwischen zwei mittelbar abdichtenden Wellendichtringen zu bilden.

Schließlich kann auch ein Ventil zur Druckentlastung der ringförmigen Kammer vorhanden sein. Nach erfolgter Druckmittelzuführung kann damit ein Überdruck in der ringförmigen Kammer abgebaut werden, um zu vermeiden, dass sowohl die beiden Druckmittelleitungen als auch die ringförmige Kammer permanent unter hohem Druck stehen.

Weitere vorteilhafte Ausführungsformen der beschriebenen Fahrzeugachsbaugruppe ergeben sich durch besondere Ausgestaltungen der Wellendichtringe, die im Folgenden beschrieben sind.

Gemäß einer Ausführungsform kann wenigstens einer der Wellendichtringe, insbesondere im Bereich des Kragens, einen Kern aus einem den Wellendichtring versteifenden Material aufweisen. Der Kern ist stabiler ausgeführt als das restliche Wellendichtringmaterial und kann beispielsweise durch einen Versteifungsring aus Metall realisiert sein, der in das Wellendichtringmaterial eingebettet ist. Bei einem Überdruck in der Kammer wird der Wellendichtring, respektive der Kragen, durch den Kern stabilisiert und kann so dem Druck in der Kammer besser standhalten.

Darüber hinaus kann dann, wenn der Kern nicht nur im Kragen angeordnet ist, vorgesehen sein, dass ein im Bereich des Kragens vorhandener Abschnitt des Kerns bezüglich des übrigen Kerns schwenkbar ist bzw. zum übrigen Kern gelenkig angeordnet ist. Dies kann dadurch erreicht werden, dass der Kern im Bereich des Übergangs von dem Abschnitt im Kragenbereich auf den übrigen Kern eine Materialschwächung aufweist, beispielweise durch dünner ausgebildetes Material oder durch Aussparungen. Auch denkbar ist, den Kern mehrteilig auszuführen, so dass der im Bereich des Kragens vorhandene Abschnitt des Kerns von dem übrigen Kern getrennt ist. Durch eine solche Anordnung ist gewährleistet, dass sich der Kragen bei einem Überdruck in der Kammer - trotz der durch den Kern bereitgestellten Versteifung - ausreichend verformen kann, um mit der Mantelfläche des Achskörpers respektive der Innenfläche der Nabe dichtend in Kontakt zu kommen.

In allen Ausführungsformen der erfindungsgemäßen Fahrzeugachsbaugruppe kommt wenigstens ein Wellendichtring zum Einsatz, der den Raum zwischen dem Achskörper und der Nabe abdichtet. Solche Wellendichtringe weisen üblicherweise zwischen ihrer radial äußeren Dichtfläche und ihrer radial inneren Dichtfläche einen Hohlraum auf. Gemäß einer vorteilhaften Ausgestaltung der Erfindung kann dieser Hohlraum mit Schmiermittel befüllt sein, welches nach und nach durch geeignete Auslässe aus dem Wellendichtring zu der dynamisch belasteten Dichtfläche austreten kann, d.h. zu der Dichtfläche, an der es aufgrund der Drehung der Nabe um den Achskörper zu einer Relativbewegung zwischen dem Wellendichtring und der gegenüberliegenden Bauteilfläche kommt. Auf diese Weise findet an dieser Stelle eine permanente Schmierung statt, die die Reibungsbeanspruchung der Dichtung deutlich verringert und dadurch ihre Lebensdauer stark erhöht. Bei bekannten Wellendichtringen ist der genannte Hohlraum in Axialrichtung offen. Je nach Einbausituation muss der Wellendichtring deshalb dahingehend modifiziert werden, dass diese axiale Öffnung des Hohlraums verschlossen ist, um ein Austreten der Schmiermittelfüllung durch diese Öffnung zu vermeiden.

Bei der erfindungsgemäßen Achsbaugruppe weist deshalb wenigstens einer der Wellendichtringe zumindest einen Kanal auf, der sich aus einem inneren Hohlraum des Wellendichtrings in im Wesentlichen radialer Richtung zu einer in einem Bereich zwischen dem Kragen und einer Hauptdichtlippe des Wellendichtrings liegenden Umfangsfläche des Wellendichtrings erstreckt. Durch einen solchen Kanal kann in dem Hohlraum befindliches Schmiermittel zu dem Kragen und der Hauptdichtlippe gelangen und dort für eine permanente Schmierung und Kühlung der Dichtflächen des Wellendichtrings auf dem Achskörper bzw. der Nabe sorgen.

Zum Zwecke einer dauerhaften Vorhaltung von Schmiermittel kann der Hohlraum auf der von der ringförmigen Kammer abgewandten Seite des Wellendichtrings mit einer Abdeckung versehen sein. Eine ringförmige Abdeckung kann z. B. zwischen die sich im Wesentlichen axial erstreckenden, den Hohlraum einschließenden Schenkel des Wellendichtrings geklemmt sein und so den Hohlraum nach außen hin abdichten. Der Hohlraum kann sich dabei durchgehend in Umfangsrichtung des Wellendichtrings erstrecken oder nur entlang eines Teils der Umfangsrichtung des Wellendichtrings. Bei Ausführungsformen, bei denen sich die erste Druckmittelleitung durch den Wellendichtring erstreckt, ist sie auch durch die Abdeckung geführt.

Der abgedichtete Hohlraum kann mit einem Schmiermittel befüllt sein und als Schmiermitteldepot dienen, welches nach und nach Schmiermittel zur Schmierung und Kühlung der Dichtflächen des Wellendichtrings durch den zumindest einen Kanal abgibt. Wellendichtringe mit vorbefülltem Schmiermitteldepot können vorgefertigt sein und als "selbstschmierende" Wellendichtringe in einer erfindungsgemäßen Fahrzeugachsbaugruppe verbaut werden.

Gemäß einer Weiterbildung kann in dem Hohlraum ein schwammartiger Schaumstoff vorhanden sein, der wenigstens einen Teil des Hohlraums ausfüllt und den zumindest einen Kanal überdeckt. Mit "schwammartig" ist hier insbesondere eine gewisse Saugfähigkeit bzw. die generelle Eignung zur Flüssigkeitsaufnahme gemeint und so versteht es sich, dass anstelle von Schaumstoff auch andere Materialien mit vergleichbaren Eigenschaften zum Einsatz kommen können. Die Anordnung eines schwammartigen Schaumstoffs unmittelbar vor bzw. über einem Kanal bewirkt, dass in dem Hohlraum des Wellendichtrings befindliches Schmiermittel nicht sofort durch den Kanal abfließen kann, sondern von dem Schaumstoff zunächst aufgenommen und gespeichert wird, um dann allmählich in den Kanal abgegeben zu werden. Auch ein Zwischenraum zwischen dem Kragen und der Hauptdichtlippe kann zumindest teilweise mit einem schwammartigen Schaumstoff ausgefüllt sein. Aus dem Hohlraum des Dichtrings über den zumindest einen Kanal in diesen Zwischenraum eintretendes Schmiermittel kann dann von dem Schaumstoff aufgenommen und anschließend von diesem gleichmäßig auf die Dichtflächen auf der Mantelfläche des Achskörpers bzw. der Innenfläche der Nabe verteilt werden. Vorzugsweise füllt der Schaumstoff den gesamten zwischen dem Kragen, der Hauptdichtlippe und dem Achskörper bzw. der Nabe gebildeten Hohlraum aus und steht insbesondere mit dem Kragen, der Hauptdichtlippe und dem Achskörpers bzw. der Nabe in Kontakt, um für eine entsprechende Schmierung und Kühlung der Dichtflächen des Wellendichtrings zu sorgen.

Ferner können ein innerer Hohlraum des axial äußeren Wellendichtrings und ein innerer Hohlraum des axial inneren Wellendichtrings durch wenigstens eine Leitung miteinander verbunden sein. Eine solche Leitung ermöglicht das Passieren von Schmiermittel aus einem Hohlraum in den anderen, so dass sich in einem Hohlraum befindliches Schmiermittel auf beide Hohlräume verteilen kann. Bei starr miteinander gekoppelten Wellendichtringen kann die Leitung durch zwischen den Wellendichtringen vorhandene Verbindungselemente geführt werden. Sind die beiden Wellendichtringe als Einheit gefertigt, kann die Leitung durch Abschnitte geführt sein, die die beiden Wellendichtringe miteinander verbinden.

Die Leitung kann sich in axialer Richtung erstrecken. Um einen besseren Transport von Schmiermittel speziell von einem Hohlraum in den Hohlraum des anderen Wellendichtrings zu erreichen - dies kann erforderlich sein, wenn lediglich einer der beiden Hohlräume Schmiermittel vorhält und dieses Schmiermittel auch zur Schmierung des anderen Wellendichtrings verwendet werden soll -, kann die Leitung von einem Wellendichtring in Richtung des anderen Wellendichtrings auch radial ansteigen und/oder sich schräg entgegen einer Hauptdrehrichtung der Nabe erstrecken. Bei Wellendichtringen mit radial innerem Kragen, d.h. bei Wellendichtringen, die sich bei einer Drehung der Nabe um den Achskörper mit der Nabe mitdrehen, werden auf diese Weise die in den Wellendichtringen wirkenden Fliehkräfte ausgenutzt. Da das Schmiermittel bei einer Drehbewegung der Wellendichtringe fliehkraftbedingt radial nach außen gedrückt wird, kann es vergleichsweise leicht durch eine radial ansteigende Leitung fließen. Gleichermaßen wird das Schmiermittel aufgrund seiner Trägheit langsamer als die Wellendichtringe bewegt, so dass es auch vergleichsweise leicht durch eine sich entgegen der Hauptdrehrichtung der Wellendichtringe erstreckende Leitung fließen kann. Bei Wellendichtringen mit axial äußerem Kragen, die gegenüber dem Achskörper drehfest sind, treten derartige Fliehkräfte nicht auf. Dennoch kann auch hier ein von dem einen Wellendichtring in Richtung des anderen Wellendichtrings radial ansteigender Verlauf der Leitung einen besseren Transport von Schmiermittel gewährleisten, da hier das Schmiermittel schwerkraftbedingt dazu 'tendiert, sich im bodennahen Teil des Hohlraums eines Wellendichtrings zu sammeln. Das Schmiermittel kann dann durch eine radial ansteigende Leitung (welche im bodennahen Bereich der Wellendichtringe von dem einen Wellendichtring zu dem anderen Wellendichtring einen abfallenden Verlauf aufweist) von dem Hohlraum des einen Wellendichtrings in den Hohlraum des anderen Wellendichtrings leicht abfließen.

Ist in den Hohlräumen der beiden Wellendichtringe ein schwammartiger Schaumstoff vorhanden, so füllt der Schaumstoff die Hohlräume vorzugsweise so aus, dass die Öffnungen der Leitung nicht durch den Schaumstoff verdeckt sind, damit Schmiermittel ungehindert durch die Leitung fließen kann. In einer konkreten Ausgestaltung kann der Schaumstoff beispielsweise eine sich in axialer Richtung erstreckende Abschlussfläche aufweisen, die jenseits einer Ein- bzw. Austrittsöffnung der Leitung liegt. An der Abschlussfläche kann zudem eine mit Durchlassöffnungen versehene, axial verlaufende Trennwand im Wellendichtring vorgesehen sein, die den Hohlraum in einen mit Schaumstoff ausgefüllten Teil und einen schaumstofffreien, als Schmiermitteldepot dienenden Teil unterteilt. Durch die Durchlassöffnungen steht der Schaumstoff mit dem Schmiermitteldepot in Verbindung.

Gemäß einem weiteren Aspekt wird die eingangs genannte Aufgabe gelöst durch eine Fahrzeugachsbaugruppe mit einer Nabe, die um eine Mittellängsachse drehbar an einem zylindrischen Achskörper gelagert ist. An einer Innenfläche der Nabe ist ein Ringprofil mit U-förmigem Querschnitt vorhanden, dessen Seitenwände axial oder radial verlaufen. Zwischen den Seitenwänden ist ein bezüglich des Achskörpers drehfester Dichtring angeordnet, der in dem Ringprofil eine ringförmige Kammer begrenzt. Eine erste Druckmittelleitung erstreckt sich durch den Dichtring und mündet in die ringförmige Kammer. Eine zweite Druckmittelleitung, die sich aus der ringförmigen Kammer heraus durch das Ringprofil und die Nabe erstreckt, ist zur Verbindung mit einem auf der Nabe befestigten Rad ausgestaltet. Ferner weist der Dichtring zumindest einen Kanal auf, der sich aus einem inneren Hohlraum des Dichtrings bei einem Ringprofil mit axial verlaufenden Seitenwänden in im Wesentlichen radialer Richtung bzw. bei einem Ringprofil mit radial verlaufenden Seitenwänden in im Wesentlichen axialer Richtung zu einem in einem Bereich zwischen einem Kragen und einer Hauptdichtlippe des Dichtrings liegenden Umfangsabschnitt des Dichtrings erstreckt.

Diese Ausführungsform der Fahrzeugachsbaugruppe gestattet es, eine ringförmige Kammer ohne die beiden Wellendichtringe zu bilden. Stattdessen wird die ringförmige Kammer nur durch das mit der Innenfläche der Nabe verbundene Ringprofil und den Dichtring begrenzt, der zwischen den Seitenwänden des Ringprofils angeordnet ist.

Das mit der Innenfläche der Nabe verbundene Ringprofil kann als separates Teil ausgestaltet sein, welches an der Innenfläche der Nabe befestigt ist, es kann aber auch einstückig mit der Nabe ausgebildet sein, beispielsweise zusammen mit dem Nabenkörper gegossen sein, wenn die Nabe ein Gußteil ist.

Wie bei der zuerst beschriebenen Fahrzeugachsbaugruppe entsteht bei einer Druckmittelzuführung in der ringförmigen Kammer ein Überdruck, der hier danach trachtet, den Dichtring axial aus dem Ringprofil herauszudrücken.

Um einem solchen Herausdrücken des Dichtrings entgegenzuwirken, kann eine Halterung vorgesehen sein, die bei axial verlaufenden Seitenwänden des Ringprofils die axiale Position des Dichtrings und bei radial verlaufenden Seitenwänden des Ringprofils die radiale Position des Dichtrings fixiert. Eine solche Halterung kann beispielsweise als Anschlag auf der ersten Druckmittelleitung nahe der Mündung derselben in die ringförmige Kammer realisiert sein, an dem sich der Dichtring bei axial verlaufenden Seitenwänden des Ringprofils axial und bei radial verlaufenden Seitenwänden des Ringprofils radial abstützt. Auch kann eine Abstützung an dem Ringprofil vorgesehen sein, etwa in Gestalt einer Umfangsrippe, die innen an einer Seitenwand oder an beiden Seitenwänden des Ringprofils ausgebildet ist. Ferner kann der Dichtring benachbart zu der ringförmigen Kammer bei axial verlaufenden Seitenwänden des Ringprofils radial innen und radial außen bzw. bei radial verlaufenden Seitenwänden des Ringprofils-axial innen und axial außen mit einem Kragen versehen sein, welcher zumindest bei einem Überdruck in der Kammer gegen die Seitenwände des Ringprofils gedrückt wird und durch die so entstehende Reibkraft bei axial verlaufenden Seitenwänden zu einer axialen Fixierung des Dichtrings bzw. bei radial verlaufenden Seitenwänden zu einer radialen Fixierung des Dichtrings beiträgt. Im Falle axial verlaufender Seitenwände des Ringprofils kann der radial innere und der radial äußere Kragen sich auch formschlüssig in der ringförmigen Kammer axial abstützen und im Fall radial verlaufender Seitenwände des Ringprofils kann sich der axial innere und der axial äußere Kragen formschlüssig in der ringförmigen Kammer radial abstützen, beispielsweise an einer Stützstruktur, die innen an den Seitenwänden des Ringprofils vorhanden ist. Eine solche Stützstruktur kann analog der zuerst beschriebenen Fahrzeugachsbaugruppe ausgeführt sein, z.B. als Nut oder Rippe, an der sich der jeweilige Kragen zumindest bei einem Überdruck in der ringförmigen Kammer abstützen kann.

Wie bei der zuerst beschriebenen Fahrzeugachsbaugruppe ergeben sich weitere vorteilhafte Ausführungsformen durch besondere Ausgestaltungen des Dichtrings. So kann auch hier der vorgesehene Dichtring, insbesondere im Bereich wenigstens eines der beiden Kragen, einen Kern aus einem den Dichtring versteifenden Material aufweisen und ein im Bereich eines Kragens vorhandener Abschnitt des Kerns kann relativ zum restlichen Kern schwenkbar sein bzw. gelenkig zu diesem angeordnet sein. Ferner kann der Hohlraum auf der von der ringförmigen Kammer abgewandten Seite des Dichtrings mit einer Abdeckung versehen sein und der so abgedichtete Hohlraum kann mit einem Schmiermittel befüllt sein, welches nach und nach zur Schmierung der Dichtflächen des Dichtrings abgegeben werden kann. Zudem kann in dem Hohlraum ein schwammartiger Schaumstoff vorhanden sein, der wenigstens einen Teil des Hohlraums ausfüllt und den zumindest einen Kanal überdeckt. Ebenso kann ein Zwischenraum zwischen dem Kragen und der Hauptdichtlippe zumindest teilweise mit einem schwammartigen Schaumstoff ausgefüllt sein.

Mit allen zuvor beschriebenen Ausgestaltungen ist eine autonome Reifendruckregulierung darstellbar. Mit "Reifendruckregulierung" ist hier einerseits eine Reifendruckregelung gemeint, die die Einhaltung eines gewünschten Reifendrucks auf Anforderung oder auch automatisch sicherstellt, und andererseits eine gewünschte Reifendruckänderung, um den Reifendruck beispielsweise veränderten Verhältnissen (Beladung, Temperatur etc.) anzupassen, oder auch beides in Kombination. Zur Realisierung einer automatischen Reifendruckregelung können Signale von Sensoren oder Aufnehmern verwendet werden, die ohnehin bei vielen Fahrzeugen schon vorhanden sind, um beispielsweise die Aufteilung von Bremskraft zwischen einer Vorderachse und einer Hinterachse eines Fahrzeugs beladungsabhängig zu variieren.

Ausgewertet werden können zu diesem Zweck etwa Signale einer Vorrichtung, welche das Maß der beladungsabhängigen Einfederung einer Hinterachse eines Fahrzeugs angeben, oder Signale, die den Druck in Luftfederelementen einer Achse angeben, oder ein Signal einer elektrischen Steckkupplung einer Anhängerkupplung, welches mitteilt, dass sich ein Anhänger am Fahrzeug befindet etc.

Mehrere Ausführungsbeispiele einer erfindungsgemäßen Fahrzeugachsbaugruppe werden im Folgenden unter Bezugnahme auf die beigefügten, schematischen Zeichnungen näher erläutert. Es zeigt:
- Figur 1: eine Längsschnittansicht eines Ausführungsbeispiels einer erfindungsgemäßen Fahrzeugachsbaugruppe in einer Übersicht;
- Figur 2: einen Teil der Längsschnittansicht der Fahrzeugachsbaugruppe aus Figur 1 in vergrößerter Darstellung und mit einer Modifikation zur Zuführung eines Reifendichtmittels;
- Figuren 3a und 3b: eine Detailansicht eines Ausführungsbeispiels mit zwei Wellendichtringen, die beide einen radial inneren Kragen aufweisen;
- Figuren 4a und 4b: eine Detailansicht eines Ausführungsbeispiels mit zwei Wellendichtringen, die beide einen radial inneren Kragen mit einem Federelement aufweisen;
- Figuren 5a und 5b: eine Detailansicht eines Ausführungsbeispiels mit zwei Wellendichtringen mit radial innerem Kragen und in dem Achskörper gebildeten Ringnuten;
- Figuren 6a und 6b: eine Detailansicht eines Ausführungsbeispiels mit zwei Wellendichtringen mit radial innerem Kragen und auf dem Achskörper ausgebildeten Rippen;
- Figuren 7a und 7b: eine Detailansicht eines Ausführungsbeispiels mit einem Wellendichtring mit radial innerem Kragen und einem Wellendichtring mit radial äußerem Kragen;
- Figuren 8a und 8b: eine Detailansicht eines Ausführungsbeispiels mit einem Wellendichtring mit radial innerem Kragen, einem Wellendichtring mit radial äußerem Kragen und zugehörigen, in Achskörper und Nabe ausgebildeten Ringnuten;
- Figuren 9a und 9b: eine Detailansicht eines Ausführungsbeispiels mit einem Wellendichtring mit radial innerem Kragen, einem Wellendichtring mit radial äußerem Kragen und zugehörigen, auf Achskörper und Nabe ausgebildeten Rippen;
- Figuren 10a und 10b: eine Detailansicht eines Ausführungsbeispiels mit einem zwischen zwei Wellendichtringen auf dem Achskörper angeordneten Ringflansch;
- Figuren 11a und 11b: eine Detailansicht eines Ausführungsbeispiels mit einem zwischen zwei Wellendichtringen auf dem Achskörper angeordneten Ringflansch und einem auf der Nabe angeordneten U-förmigen Ring;
- Figuren 12a und 12b: eine Detailansicht eines Ausführungsbeispiels mit zwei starr gekoppelten Wellendichtringen, die jeder einen radial inneren Kragen aufweisen;
- Figuren 13a und 13b: eine Detailansicht eines Ausführungsbeispiels mit zwei elastisch gekoppelten Wellendichtringen, die jeder einen radial inneren Kragen aufweisen;
- Figuren 14a und 14b: eine Detailansicht eines Ausführungsbeispiels mit zwei starr gekoppelten Wellendichtringen mit radial innerem Kragen und zugehörigen, auf dem Achskörper ausgebildeten Rippen;
- Figuren 15a und 15b: eine Detailansicht eines Ausführungsbeispiels mit zwei elastisch gekoppelten Wellendichtringen mit radial innerem Kragen und zugehörigen, auf dem Achskörper ausgebildeten Rippen;
- Figuren 16a und 16b: eine Detailansicht eines Ausführungsbeispiels mit zwei elastisch gekoppelten Wellendichtringen mit radial innerem Kragen und auf dem Achskörper ausgebildeten Flachrippen;
- Figuren 17a und 17b: eine Detailansicht eines Ausführungsbeispiels mit zwei starr gekoppelten Wellendichtringen und elastisch gekoppelten radial inneren Kragen sowie auf dem Achskörper ausgebildeten Flachrippen;
- Figur 18: eine Längsschnittansicht eines Ausführungsbeispiels einer Achsbaugruppe mit einem Kugellager, bei dem der axial äußere Wellendichtring in das Kugellager integriert ist;
- Figur 19: eine Längsschnittansicht eines Ausführungsbeispiels einer Achsbaugruppe mit zwei Kugellagern, bei dem der axial äußere Wellendichtring in das axial innere der beiden Kugellager integriert ist;
- Figur 20: eine Längsschnittansicht eines Ausführungsbeispiels einer Achsbaugruppe mit zwei Kugellagern, bei dem beide Wellendichtringe in jeweils eines der beiden Kugellager integriert sind;
- Figuren 21a und 21b: eine Detailansicht eines Ausführungsbeispiels mit einem U-förmigem Ringprofil mit axial verlaufenden Seitenwänden und einem darin angeordneten Dichtring;
- Figuren 22a und 22b: eine Detailansicht eines Ausführungsbeispiels mit einem U-förmigem Ringprofil mit axial verlaufenden Seitenwänden, einem darin angeordneten Dichtring und auf den Seitenwänden ausgebildeten Rippen;
- Figuren 23a und 23b: eine Detailansicht eines Ausführungsbeispiels mit einem U-förmigem Ringprofil mit axial verlaufenden Seitenwänden, einem darin angeordneten Dichtring und auf den Seitenwänden ausgebildeten Flachrippen;
- Figuren 24a und 24b: eine Detailansicht eines Ausführungsbeispiels mit einem U-förmigem Ringprofil mit radial verlaufenden Seitenwänden und einem darin angeordneten Dichtring;
- Figuren 25a und 25b: eine Detailansicht eines Ausführungsbeispiels mit einem U-förmigem Ringprofil mit radial verlaufenden Seitenwänden, einem darin angeordneten Dichtring und auf den Seitenwänden ausgebildeten Rippen;
- Figuren 26a und 26b: eine Detailansicht eines Ausführungsbeispiels mit einem U-förmigem Ringprofil mit radial verlaufenden Seitenwänden, einem darin angeordneten Dichtring und auf den Seitenwänden ausgebildeten Flachrippen;
- Figuren 27a und 27b: eine Detailansicht eines Ausführungsbeispiels mit zwei zusätzlich versteiften Wellendichtringen, die beide einen radial inneren Kragen aufweisen und deren schmiermittelbefüllte Hohlräume durch Leitungen miteinander verbunden sind;
- Figuren 28a und 28b: eine Detailansicht eines Ausführungsbeispiels mit zwei zusätzlich versteiften Wellendichtringen, die beide einen radial äußeren Kragen aufweisen und deren Hohlräume durch Leitungen miteinander verbunden sind;
- Figuren 29a und 29b: eine Detailansicht eines Ausführungsbeispiels mit zusätzlich versteiften, als eine Einheit gefertigten Wellendichtringen, die radial äußere Kragen aufweisen, mit schwammartigen Schaumstoffen versehen sind und deren Hohlräume durch eine Leitung miteinander verbunden sind;
- Figuren 30a und 30b: eine Detailansicht eines Ausführungsbeispiels mit einem U-förmigem Ringprofil mit axial verlaufenden Seitenwänden und einem darin angeordneten, versteiften Dichtring mit einem schmiermittelbefüllten Hohlraum;
- Figuren 31a und 31b: eine Detailansicht eines Ausführungsbeispiels mit einem U-förmigem Ringprofil mit axial verlaufenden Seitenwänden und einem darin angeordneten, versteiften und einen schmiermittelbefüllten Hohlraum aufweisenden Dichtring, dessen radial innere Hauptdichtlippe mit dem Achskörper in Kontakt ist; und
- Figuren 32a und 32b: eine Detailansicht eines Ausführungsbeispiels mit einem U-förmigem Ringprofil mit axial verlaufenden Seitenwänden und einem darin angeordneten, versteiften und mit einem schwammartigen Schaumstoff versehenen Dichtring, dessen radial innere Hauptdichtlippe mit dem Achskörper in Kontakt ist.

In der folgenden Beschreibung von Ausführungsbeispielen werden gleiche Bezugszeichen verwendet, um gleiche oder gleichwirkende Elemente zu bezeichnen.

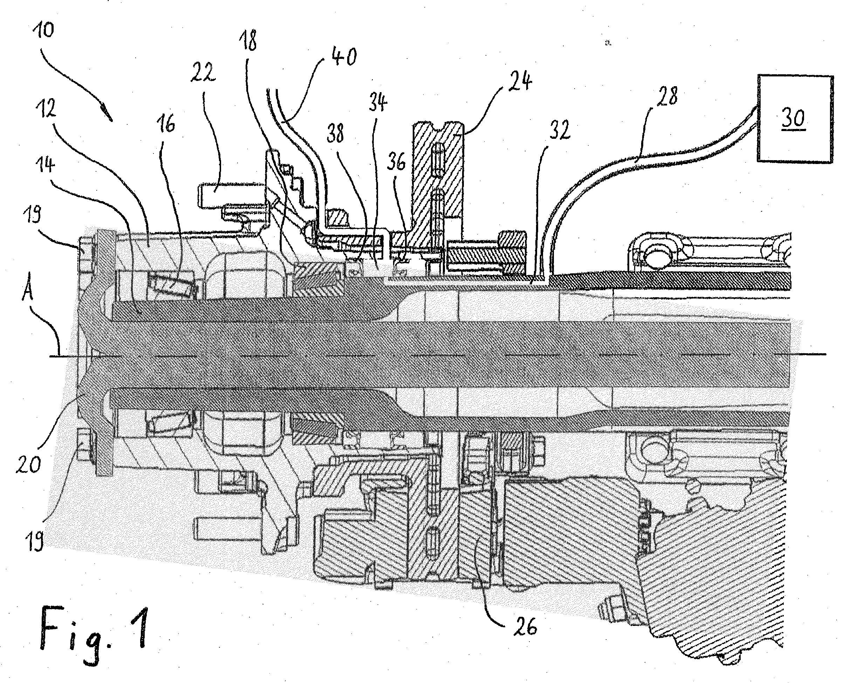

Figur 1 zeigt im Längsschnitt eine Fahrzeugachsbaugruppe 10 mit einer Nabe 12, die um eine Mittellängsachse A drehbar an einem zylindrischen, hohlen Achskörper 14 gelagert ist. Im gezeigten Ausführungsbeispiel ist die Lagerung der Nabe 12 durch zwei entlang der Achse A voneinander beabstandete Kugellager 16 und 18 realisiert. Die Nabe 12 ist mittels Schrauben 19 an einer durch den Achskörper 14 verlaufenden Antriebswelle 20 befestigt, welche die von einem nicht dargestellten Motor generierte Antriebskraft auf die Nabe 12 überträgt, um letztere um den Achskörper 14 zu drehen. An der Nabe 12 sind Bolzen 22 vorhanden, an denen ein hier nicht dargestelltes Rad mittels einer Felge auf die Nabe aufgesetzt und befestigt werden kann. Ferner ist an der Radnabe 12 eine sich mit ihr um den Achskörper 14 drehende Bremsscheibe 24 befestigt, um mittels einer fahrzeugfesten Bremse 26 auf dem Fachmann bekannte Art und Weise ein an der Nabe 12 angebrachtes Fahrzeugrad abbremsen zu können.

Eine erste Druckmittelleitung 28 ist mit einer hier nur schematisch dargestellten, im Fahrzeug vorhandenen Druckmittelquelle 30 verbunden, die beispielsweise ein Kompressor zur Erzeugung von Druckluft oder ein Behälter mit unter Druck stehendem Reifenfüllmittel sein kann. Im gezeigten Ausführungsbeispiel verläuft die erste Druckmittelleitung 28 von der Druckmittelquelle 30 ausgehend zunächst außerhalb des Achskörpers 14 und geht dann in einen Abschnitt 32 über, der innerhalb des Achskörpers 14 ausgebildet ist und in eine zwischen dem Achskörper 14 und der Nabe 12 gebildete ringförmige Kammer 34 mündet. Der innerhalb des Achskörpers 14 verlaufende Abschnitt 32 kann wie dargestellt durch eine Bohrung im Achskörper 14 realisiert sein.

Die ringförmige Kammer 34 ist radial außen durch die Innenfläche der Nabe 12, radial innen durch die Mantelfläche des Achskörpers 14 und seitlich durch je einen axial inneren Wellendichtring 36 und einen axial äußeren Wellendichtring 38 begrenzt und stellt damit einen unmittelbar durch die Wellendichtringe 36 und 38 abgedichteten, um den Achskörper 14 herum verlaufenden Hohlraum bereit. Aus der ringförmigen Kammer 34 heraus verläuft eine zweite Druckmittelleitung 40, die an ihrem kammerfernen Ende zur Verbindung mit einem auf der Nabe 12 befestigten Rad ausgestaltet ist. Die zweite Druckmittelleitung 40 verläuft streckenweise durch die Nabe 12, etwa durch eine Bohrung in der Nabe 12, und kann in ihrem weiteren Verlauf beispielsweise durch eine hier nicht näher dargestellte Felge bis hin zu einem Ventil eines auf der Felge montierten Reifens geführt sein. Beispielsweise kann das Reifenventil als Y-Anschluss ausgeführt sein, um ein Druckmittel wahlweise durch die zweite Druckmittelleitung 40 oder durch eine andere Zuleitung, z.B. von einer externen Druckmittelquelle, in den Reifen einspeisen zu können.

Zum besseren Verständnis der weiteren Beschreibung ist besonders darauf hinzuweisen, dass von den bisher beschriebenen Komponenten lediglich der Achskörper 14 und die erste Druckmittelleitung 28 sowie die Druckmittelquelle 30 feststehend sind. Diejenigen Komponenten jedoch, die unmittelbar oder mittelbar mit der Nabe 12 verbunden sind, drehen sich mit der Nabe 12 um den Achskörper 14, sobald die Nabe 12 durch die Antriebswelle 20 angetrieben wird. Es dreht sich also insbesondere die zweite Druckmittelleitung 40, welche im Verlauf der Drehung über die ringförmige Kammer 34 bzw. den durch sie gebildeten, abgedichteten Hohlraum immer ftuidleitend mit der ersten Druckmittelleitung 28 gekoppelt ist. Da diese Kopplung unabhängig von der jeweiligen Drehstellung der Nabe 12 ist, kann eine Druckmittelzufuhr oder -abfuhr nicht nur im Stillstand, sondern auch während der Fahrt bei sich drehender Nabe 12 erfolgen. Mit der beschriebenen Anordnung kann eine Reifendruckregulierung daher ohne weiteres automatisiert werden.

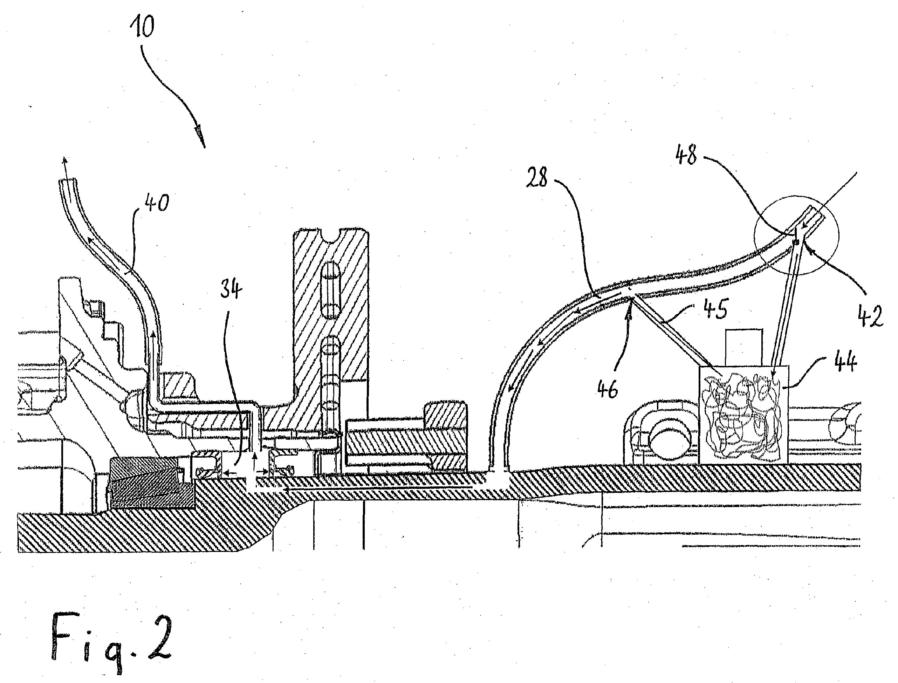

Gemäß einer Weiterbildung kann die beschriebene Anordnung der Achsbaugruppe 10 nicht nur zur Zuführung eines gasförmigen Druckmittels wie beispielsweise Druckluft, sondern auch zur Zuführung eines flüssigen Druckmittels beispielsweise einem Reifendichtmittel verwendet werden. Dies kann insbesondere im Falle einer Reifenpanne vorteilhaft sein. Eine derartige Ausführungsform erfordert nur geringfügige Modifikationen der in Figur 1 gezeigten Achsbaugruppe 10 im Bereich der ersten Druckmittelleitung 28. Dies ist beispielhaft in Figur 2 dargestellt, wo die erste Druckmittelleitung 28 sich an einer Abzweigungsstelle 42 verzweigt und die Abzweigung sodann in ein ein Reifendichtmittel enthaltendes Reservoir 44 geführt ist. Aus dem Reservoir 44 heraus führt eine Verbindungsleitung 45 das Reifendichtmittel falls notwendig in die Druckmittelleitung 28, in die die Verbindungsleitung 45 an einer Vereinigungsstelle 46 mündet. Im dargestellten Ausführungsbeispiel ist an der Abzweigungsstelle 42 ein Umschaltmechanismus 48 vorgesehen, der jeweils nur einen der beiden Leitungswege freischaltet, d.h. entweder die Hauptleitung 28 oder die zum Reservoir 44 führende Abzweigung. Wird der Umschaltmechanismus 48 auf die Abzweigung eingestellt, so wird das sich in dem Reservoir 44 befindende Reifendichtmittel in die erste Druckmittelleitung 28 eingeleitet und von dort über die ringförmige Kammer 34 in die zweite Druckmittelleitung 40 bis in den Reifen geführt. Es versteht sich, dass diese Anordnung zur Einleitung eines Reifendichtmittels lediglich exemplarisch ist. Grundsätzlich sind auch andere Anordnungen denkbar, mittels derer ein Reifendichtmittel in die Druckmittelleitung 28 eingeleitet werden kann, beispielsweise durch eine manuelle Andockung.

In einer weiteren Ausgestaltung der Achsbaugruppe 10 ist eine Druckentlastungseinrichtung vorhanden. Da bei einer Druckmittelzuführung sowohl in der ersten und der zweiten Druckmittelleitung 28 und 40 als auch in der ringförmigen Kammer 34 ein Überdruck von bis zu 10 oder sogar 15 bar erzeugt wird, ist es sinnvoll, nach Beendigung der Druckregulierung eine Druckentlastung durchzuführen, um zu verhindern, dass die Druckmittelleitungen 28 und 40 und die Kammer 34 ständig unter Druck stehen. Die Druckentlastungseinrichtung kann ein Entlastungsventil sein, beispielsweise ein mechanisches oder ein elektronisch gesteuertes Ventil, das an einer geeigneten Stelle in der ersten Druckmittelleitung 28, der zweiten Druckmittelleitung 40 oder im Bereich der ringförmigen Kammer 34 angeordnet ist und eine kontrollierte Druckentlastung bewirken kann.

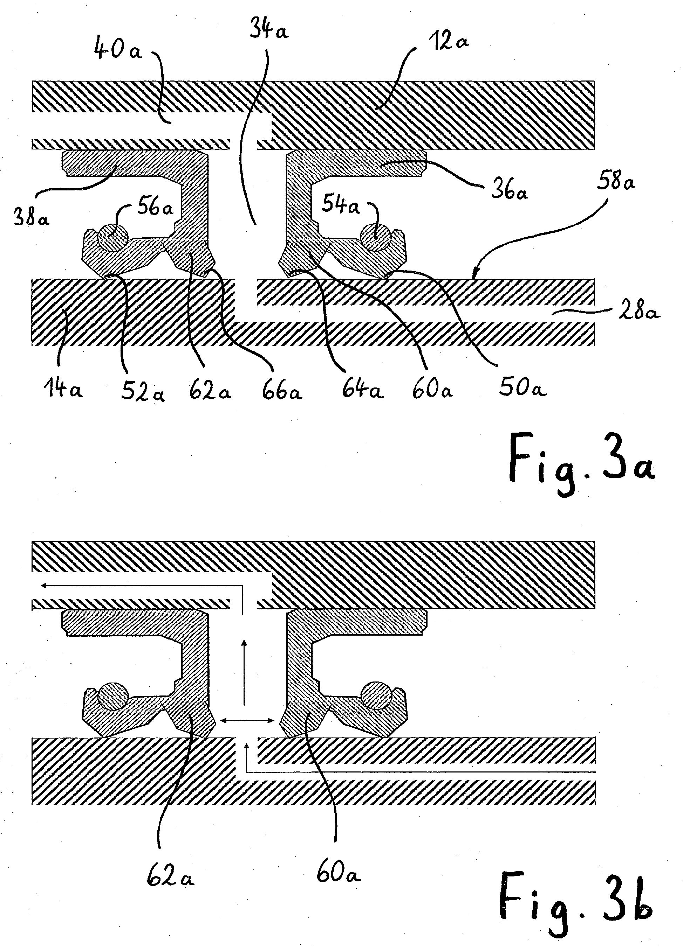

Bezüglich der näheren Ausgestaltung der ringförmigen Kammer 34 sowie der diese axial seitlich begrenzenden Wellendichtringe 36 und 38 wird nun auf die Figuren 3 bis 17 verwiesen, welche jeweils anhand einer Detailansicht im Längsschnitt für den Bereich der ringförmigen Kammer 34 unterschiedliche Ausführungsbeispiele veranschaulichen. Dabei zeigt jeweils die mit Kleinbuchstabe "a" nummerierte Figur den Zustand der Anordnung bei Normaldruck und die mit Kleinbuchstabe "b" nummerierte Figur den Zustand derselben Anordnung bei einem in der Kammer 34 herrschenden Überdruck. Gleiche oder gleichwirkende Elemente werden weiter mit gleichen Bezugszeichen wie in den vorangehenden Figuren bezeichnet, jedoch werden die Bezugszeichen für jedes der folgenden Ausführungsbeispiele mit eigenen Kleinbuchstaben ergänzt. Soweit sich jeweils nachstehend nichts anderes ergibt, wird zur Erläuterung von Elementen mit Bezugszeichen gleicher Nummer auf die vorstehenden Erläuterungen verwiesen.

In dem in den Figuren 3a und 3b gezeigten Ausführungsbeispiel sind zwischen dem Achskörper 14a und der Nabe 12a ein axial innerer Wellendichtring 36a und ein axial äußerer Wellendichtring 38a angeordnet. Als Wellendichtringe können handelsübliche Wellendichtringe, beispielsweise sogenannte Simmerringe^{®}, eingesetzt werden. Beide Wellendichtringe 36a und 38a haften jeweils radial außen durch Reibschluss an der Nabe 12a und sind jeweils radial innen mit einer Hauptdichtlippe 50a bzw. 52a versehen, die durch eine von einer Schlauchfeder 54a bzw. 56a erzeugte Anpresskraft gegen den Achskörper 14a gedrückt wird und somit eine unmittelbare Abdichtung zwischen dem Achskörper 14a und der Nabe 12a bewirkt. Bei einer Drehung der Nabe 12a um den Achskörper 14a drehen sich die beiden Wellendichtringe 36a und 38a aufgrund des erwähnten Reibschlusses mit der Nabe 12a mit, so dass die Hauptdichtlippen 50a und 52a über die Mantelfläche 58a des Achskörpers 14a gleiten.

Beide Wellendichtringe 36a und 38a sind außerdem radial innen und benachbart zu der ringförmigen Kammer 34a mit jeweils einem Kragen 60a bzw. 62a versehen. Beide Kragen 60a und 62a weisen eine Dichtlippe 64a bzw. 66a auf, die beide zumindest bei einem Überdruck in der Kammer 34a, dargestellt in Figur 3b, mit der Mantelfläche 58a des Achskörpers 14a in Kontakt stehen und zusätzlich zu den Hauptdichtlippen 50a bzw. 52a eine abdichtende Wirkung erzeugen. Im in Figur 3a gezeigten Ausführungsbeispiel stehen die Dichtlippen 64a und 66a bei Normaldruck nicht in Kontakt mit dem Achskörper 14a, sondern werden erst bei einem Überdruck in der Kammer 34a gegen die Mantelfläche 58a des Achskörpers 14a gedrückt. Es versteht sich aber, dass die Kragen 60a und 62a mit den Dichtlippen 64a und 66a bereits bei Normaldruck mit dem Achskörper 14a in Kontakt stehen können.

Die bei einem Überdruck in der Kammer 34a generierte Anpresskraft, die die Kragen 60a und 62a mit den Dichtlippen 64a und 66a auf die Mantelfläche 58a des Achskörpers 14a drückt, lässt die beiden Wellendichtringe 36a und 38a stärker an der Mantelfläche 58a des Achskörpers 14a haften, wodurch die Wellendichtringe 36a und 38a ihre axiale Position länger beibehalten können. Einer Kraft, die einem Überdruck in der Kammer 34a eine axiale Auseinanderbewegung der beiden Wellendichtringe 36a und 38a bewirken möchte, wird durch das Anpressen der Kragen 60a bzw. 62a an die Mantelfläche 58a des Achskörpers 14a entgegnet und ein axiales Auseinanderdriften der beiden Wellenringe 36a und 38a dadurch deutlich erschwert.

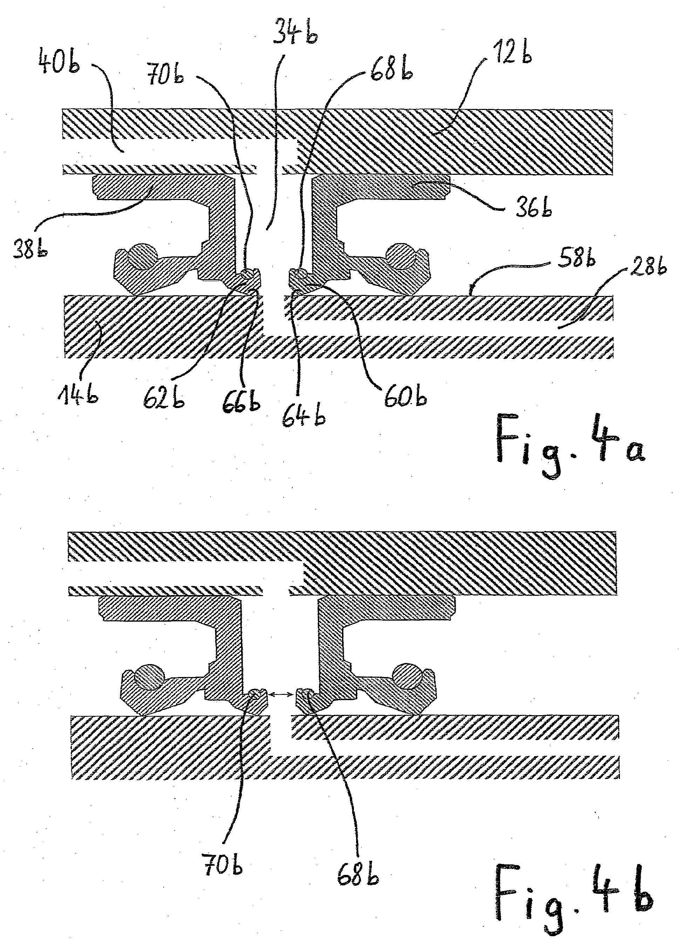

Eine Weiterbildung dieses Ausführungsbeispiels zeigen die Figuren 4a und 4b. Im Unterschied zum vorigen Ausführungsbeispiel sind hier die Kragen 60b und 62b zusätzlich mit einem ringförmigen Federelement 68b bzw. 70b versehen, dessen Federkraft die oben genannte Anpresskraft, welche die Kragen 60b und 62b mit den Dichtlippen 64b und 66b auf die Mantelfläche 58b des Achskörpers 14b drückt, weiter verstärkt. Die Federelemente 68b und 70b können hierzu beispielsweise als Schlauchfedern ausgeführt sein. Anders als im vorigen Ausführungsbeispiel stehen die Kragen 60b und 62b bzw. die Dichtlippen 64b und 66b aufgrund der durch die Federelemente 68b und 70b erzeugte Anpresskraft bereits bei einem Normaldruck in der Kammer 34b mit der Mantelfläche 58b des Achskörpers 14b in Kontakt. Es ist jedoch auch vorstellbar, gegenüber den Kragen 60b und 62b bzw. den Dichtlippen 64b und 66b an der Mantelfläche 58b des Achskörpers 14b eine sich in Umfangsrichtung erstreckende Aussparung vorzusehen, so dass die durch die Federelemente 68b und 70b erzeugte Federkraft nicht ganz ausreicht, um die Kragen 60b und 62b bzw. die Dichtlippen 64b und 66b bei Normaldruck im Bereich der Aussparung gegen den Achskörper 14b zu drücken. In diesem Fall würden die Kragen 60b und 62b bzw. die Dichtlippen 64b und 66b den Achskörper 14b im Bereich der Aussparung erst bei einem Überdruck in der Kammer 34b kontaktieren.

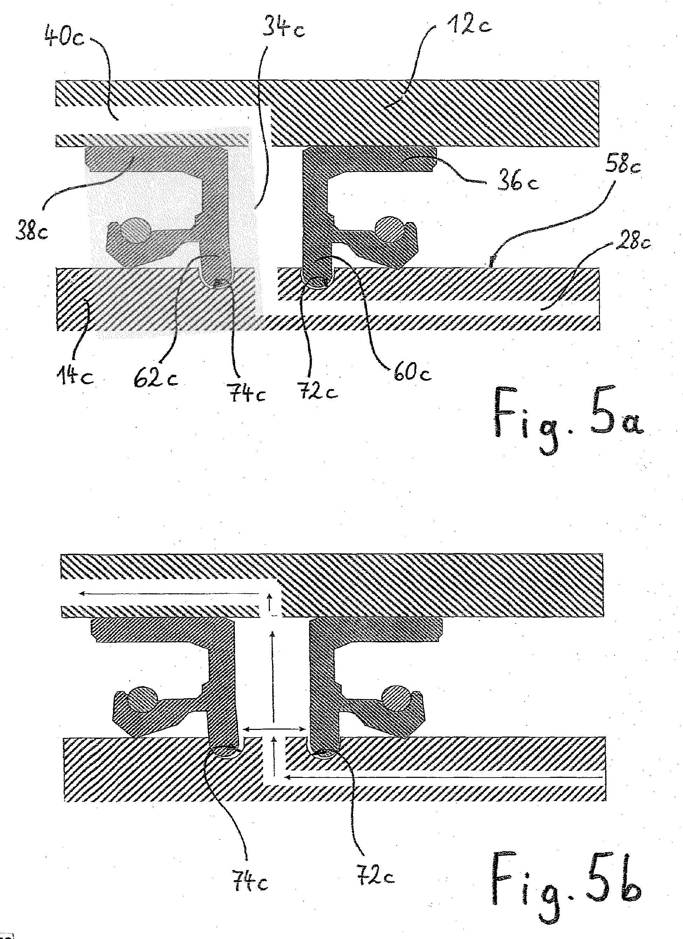

Wie einem axialen Auseinanderdriften der beiden Wellendichtringe 36 und 38 noch wirksamer begegnet werden kann, ist in dem Ausführungsbeispiel nach den Figuren 5a und 5b gezeigt. Dieses Ausführungsbeispiel unterscheidet sich von dem in den Figuren 3a und 3b gezeigten Beispiel darin, dass die radial inneren Kragen 60c und 62c der Wellendichtringe 36c und 38c radial einwärts länger ausgebildet sind, so dass sie radial in auf der Mantelfläche 58c des Achskörpers 14c vorhandene Ringnuten 72c bzw. 74c hineinragen. Bei einem Überdruck in der Kammer 34c werden die Kragen 60c und 62c gegen die seitlichen Wände der Ringnuten 72c und 74c gepresst, wie dies in Figur 5b dargestellt ist. Ein axiales Auseinanderdriften der beiden Wellenringe 36c und 38c wird durch diese Abstützung wirksam verhindert. Außerdem ergibt sich durch den Kontakt der Kragen 60c und 62c an den Wänden der Ringnuten 72c und 74c eine zusätzliche Abdichtung der ringförmigen Kammer 34c.

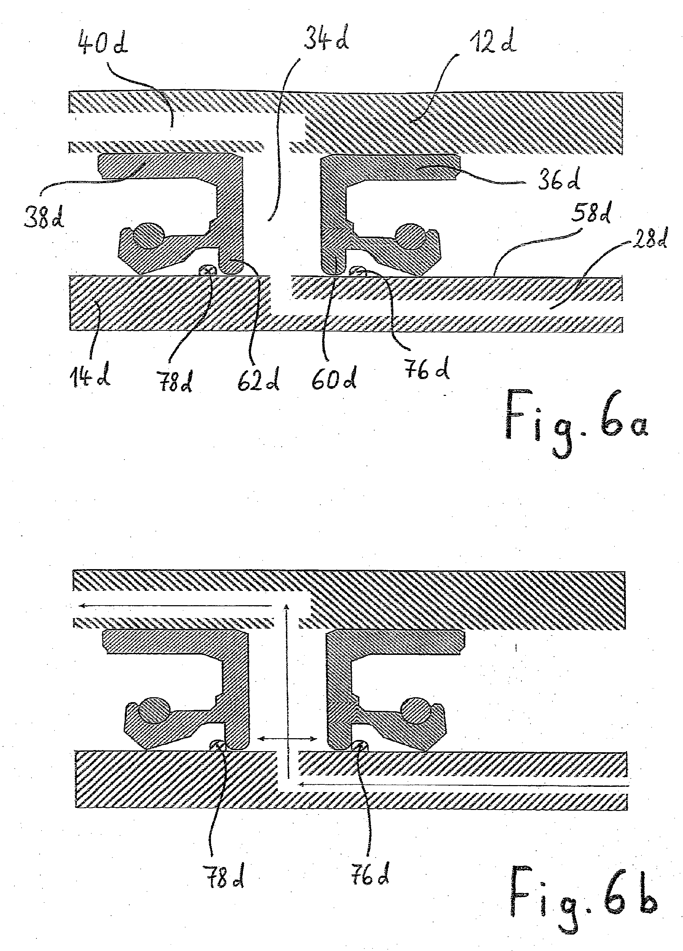

Die Figuren 6a und 6b zeigen ein weiteres Beispiel, wie einem axialen Auseinanderdriften der beiden Wellendichtringe 36 und 38 entgegnet werden kann. Das hier gezeigte Ausführungsbeispiel unterscheidet sich von dem in den Figuren 3a und 3b gezeigten Beispiel darin, dass auf der Mantelfläche 58d des Achskörpers 14d sich in Umfangsrichtung erstreckende Rippen 76d und 78d vorhanden sind, an denen sich die Kragen 60d und 62d zumindest bei einem Überdruck in der Kammer 34d axial abstützen. Im in Figur 6a gezeigten Ausführungsbeispiel sind die Kragen 60d und 62d bei Normaldruck noch von den Rippen 76d und 78d beabstandet und kommen erst bei einem Überdruck mit den Rippen 76d und 78d in Kontakt. Es versteht sich aber, dass auch bei Normaldruck bereits ein Kontakt zwischen den Kragen 60d bzw. 62d und den Rippen 76d bzw. 78d vorhanden sein kann.

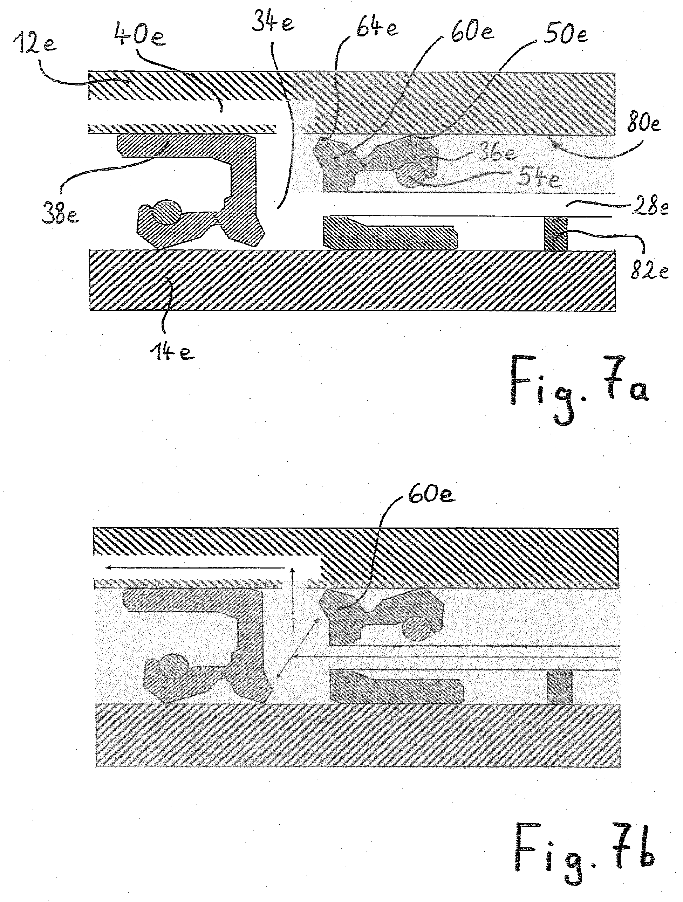

Ein anderes Ausführungsbeispiel ist in den Figuren 7a und 7b gezeigt. Dieses Ausführungsbeispiel unterscheidet sich von dem Beispiel nach den Figuren 3a und 3b dadurch, dass der innere Wellendichtring 36e durch Reibschluss an dem Achskörper 14e gehalten ist und daher bezüglich des Achskörpers 14e drehfest ist. Der Wellendichtring 36e ist mit einer Hauptdichtlippe 50e versehen, die durch eine von einer Schlauchfeder 54e erzeugte Anpresskraft gegen die Nabe 12e gedrückt wird und somit eine Abdichtung zwischen dem Achskörper 14e und der Nabe 12e bewirkt. Bei einer Drehung der Nabe 12e um den Achskörper 14e steht der Wellendichtring 36e relativ zum Achskörper 14e fest, während die mit der Nabe 12e in Kontakt stehende Hauptdichtlippe 50e auf der Innenfläche 80e der Nabe 12e gleitet.

Der Wellendichtring ist 36e ist zudem benachbart zu der ringförmigen Kammer 34e radial außen mit einem Kragen 60e versehen. Der Kragen 60e weist eine Dichtlippe 64e auf, die zumindest bei Überdruck in der ringförmigen Kammer 34e, dargestellt in Figur 7b, mit der Innenfläche 80e der Nabe 12e in Kontakt ist und zusätzlich zu der Dichtlippe 50e eine abdichtende Wirkung erzeugt. Im in Figur 7a gezeigten Ausführungsbeispiel steht die Dichtlippe 64e bei Normaldruck noch nicht in Kontakt mit der Nabe 12e, sondern wird erst bei einem Überdruck in der Kammer 34e gegen die Innenfläche 80e der Nabe 12e gedrückt. Es versteht sich aber, dass der Kragen 60e mit der Dichtlippe 64e schon bei Normaldruck in der Kammer 34e mit der Nabe 12e in Kontakt stehen kann.

Weiter unterscheidet sich dieses Ausführungsbeispiel von dem Beispiel nach den Figuren 3a und 3b dadurch, dass die erste Druckmittelleitung 28e hier nicht durch eine parallel zur Achse A verlaufende Bohrung im Achskörper 14e geführt ist, sondern in dem Hohlraum zwischen der Nabe 12e und dem Achskörper 14e verläuft und sich durch den inneren Wellendichtring 36e erstreckt, um in die ringförmige Kammer 34e zu münden. Hierbei ist eine geeignete Halterung 82e vorgesehen, die die erste Druckmittelleitung 28e am Achskörper 14e fixiert.

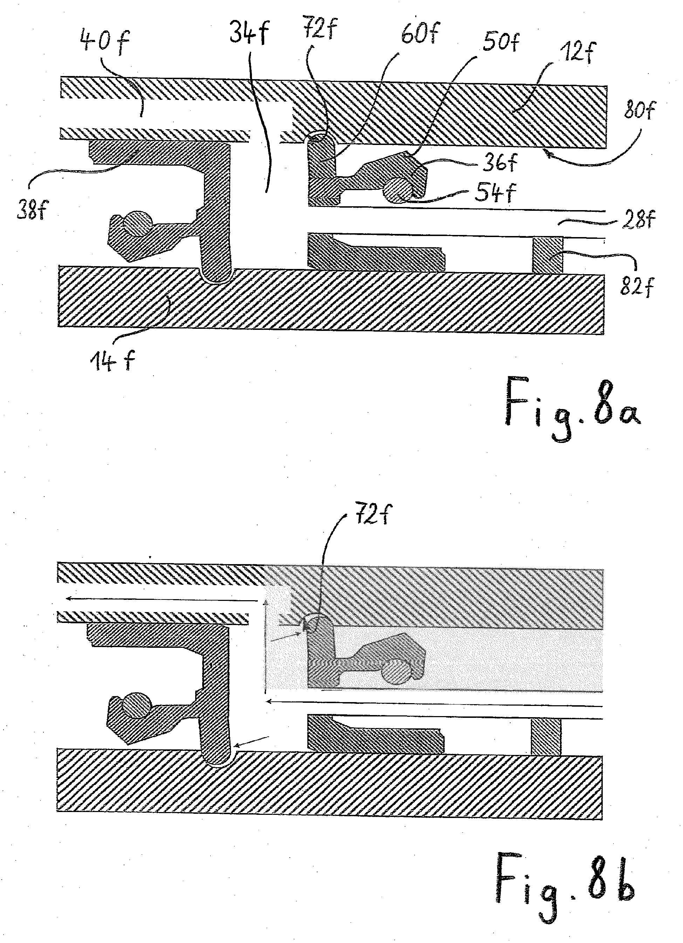

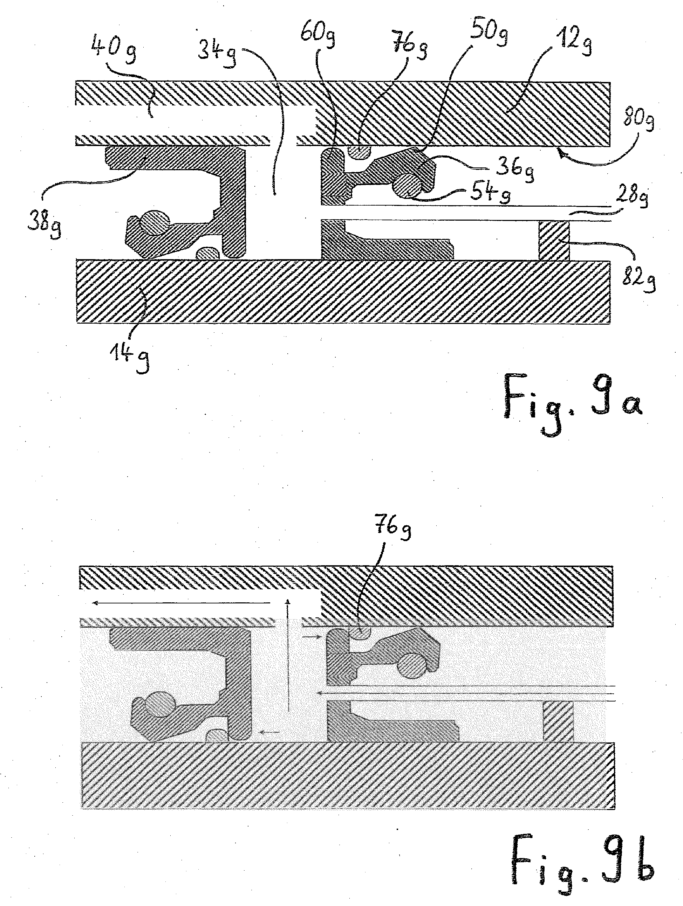

Auf analoge Weise unterscheiden sich auch die in den Figuren 8a und 8b bzw. 9a und 9b gezeigten Ausführungsbeispiele von den Ausführungsbeispielen nach den Figuren 5a und 5b bzw. 6a und 6b.

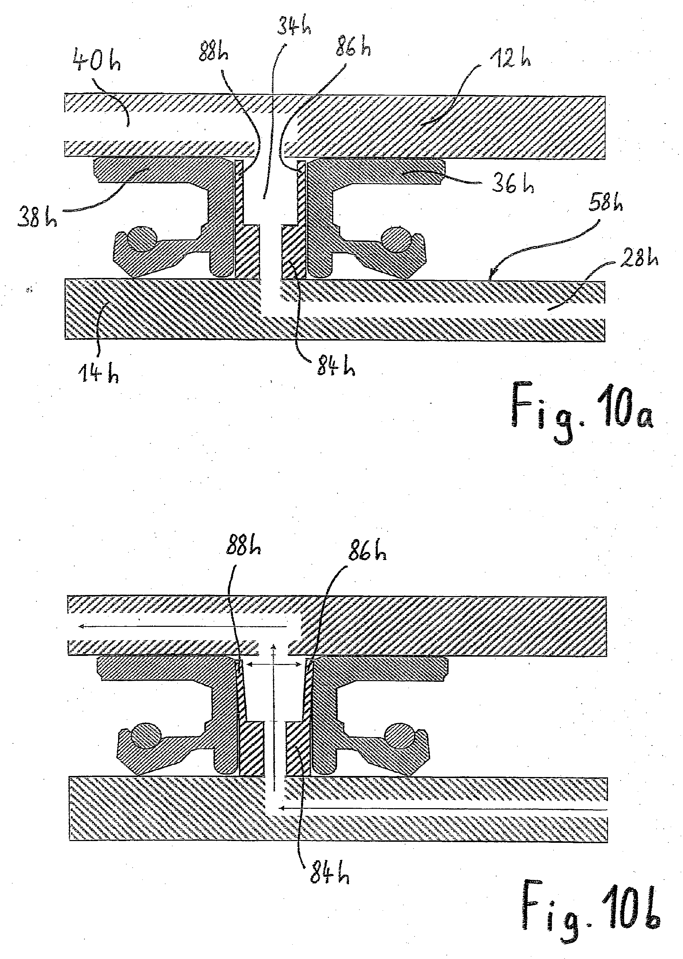

Eine weitere Ausführungsform ist in den Figuren 10a und 10b dargestellt. Dieses Ausführungsbeispiel unterscheidet sich von dem Beispiel nach den Figuren 3a und 3b dadurch, dass zwischen den beiden Wellendichtringen 36h und 38h auf der Mantelfläche 58h des Achskörpers 14h ein Ringflansch 84h mit zwei elastischen, radialen Seitenwänden 86h und 88h angebracht ist, wobei die erste Druckmittelleitung 28h im Ringflansch 84h zwischen den beiden Seitenwänden 86h und 88h in die ringförmige Kammer 34h mündet. Bei dieser Anordnung erfolgt die Abdichtung der Kammer 34h dadurch, dass zumindest bei einem Überdruck in der Kammer 34h sich die Seitenwände 86h und 88h des Ringflansches 84h elastisch verformen, dabei auseinander gedrückt werden und axial gegen jeweils einen der Wellendichtringe 36h und 38h gedrückt werden. Diese Situation ist in Figur 10b gezeigt.

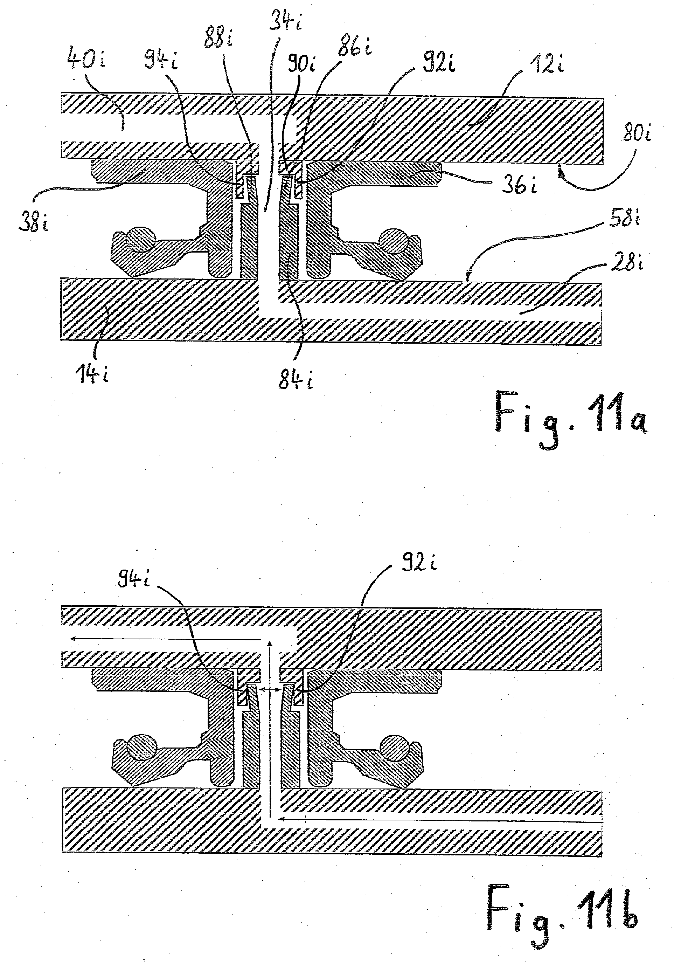

Eine Abwandlung dieser Ausführungsform ist in den Figuren 11a und 11b veranschaulicht. Zusätzlich zum vorangegangenen Beispiel ist hier auf der Innenfläche 80i der Nabe 12i gegenüber dem Ringflansch 84i ein Ring 90i mit U-förmigem Querschnitt befestigt, dessen Seitenwände 92i und 94i radial einwärts gerichtet sind und die elastischen Seitenwände 86i und 88i des Ringflansches 84i übergreifen. Die zweite Druckmitteleitung 40i erstreckt sich zwischen den Seitenwänden 92i und 94i durch den Ring 90i in die Nabe 12i. In diesem Beispiel werden die elastischen Seitenwände 86i und 88i des Ringflansches 84i bei einem Überdruck in der Kammer 34i nicht gegen die Wellendichtringe 36i und 38i gedrückt, sondern gegen die Seitenwände 92i und 94i des Rings 90i. Diese Situation ist in Figur 11b veranschaulicht. Eine Abdichtung der ringförmigen Kammer 34i findet hier also zwischen den Seitenwänden 86i und 88i des Ringflansches 84i und den Seitenwänden 92i und 94i des Rings 90i statt. Es versteht sich, dass in diesem Fall die Wellendichtringe 36i und 38i in Bezug auf die Abdichtung der ringförmigen Kammer 34i entbehrlich sind, da die ringförmige Kammer 34i bereits durch das Zusammenwirken des Ringflansches 84i mit dem den U-förmigen Querschnitt aufweisenden Ring 90i definiert ist.

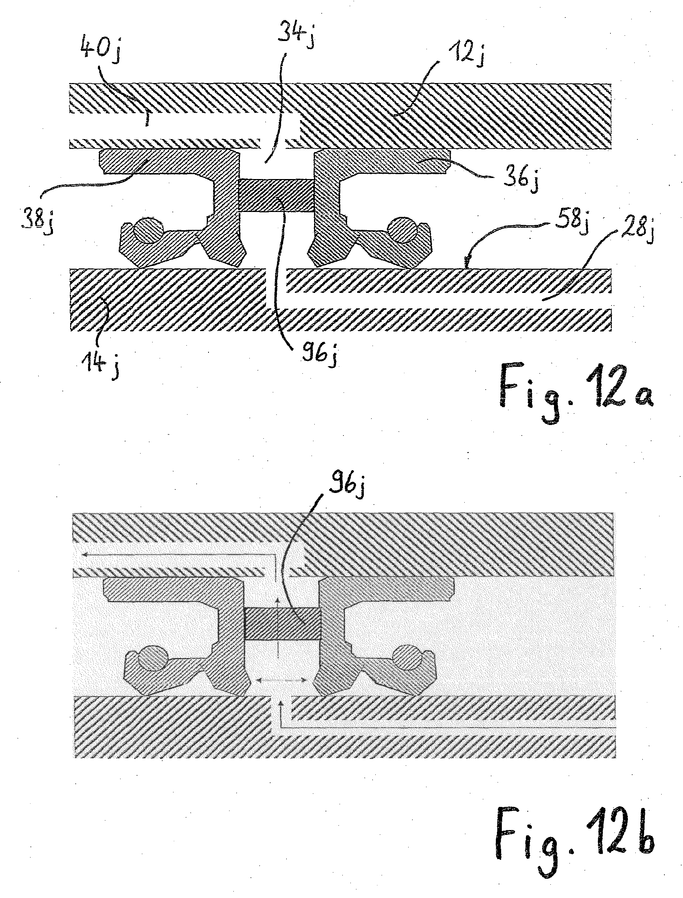

Die Figuren 12a und 12b zeigen eine Weiterbildung des Ausführungsbeispiels nach den Figuren 3a und 3b, in dem die beiden Wellendichtringe 36j und 38j axial starr miteinander gekoppelt sind. In dem dargestellten Ausführungsbeispiel ist zwischen den beiden Wellendichtringen 36j und 38j ein sich in Umfangsrichtung erstreckendes Verbindungselement 96j befestigt, das die beiden Wellendichtringe 36j und 38j axial starr voneinander beabstandet hält. Wenn sich das Verbindungselement 96j durchgehend in Umfangsrichtung erstreckt, muss es mindestens eine Öffnung aufweisen, damit ein Druckmittel durch die Kammer 34j von der ersten Druckmittelleitung 28j zu der zweiten Druckmittelleitung 40j gelangen kann. Vorteilhafterweise können anstelle eines durchgehenden Verbindungselements mit einer oder mehreren Öffnungen auch mehrere einzelne, voneinander beabstandete Verbindungselemente zwischen den Wellendichtringen 36j und 38j befestigt sein, beispielsweise eine Anzahl einzelner Stege oder Stifte. Es versteht sich, dass bei einer derartigen Ausgestaltung ein axiales Auseinanderdriften der beiden Wellendichtringe 36j und 38j nicht mehr möglich ist.

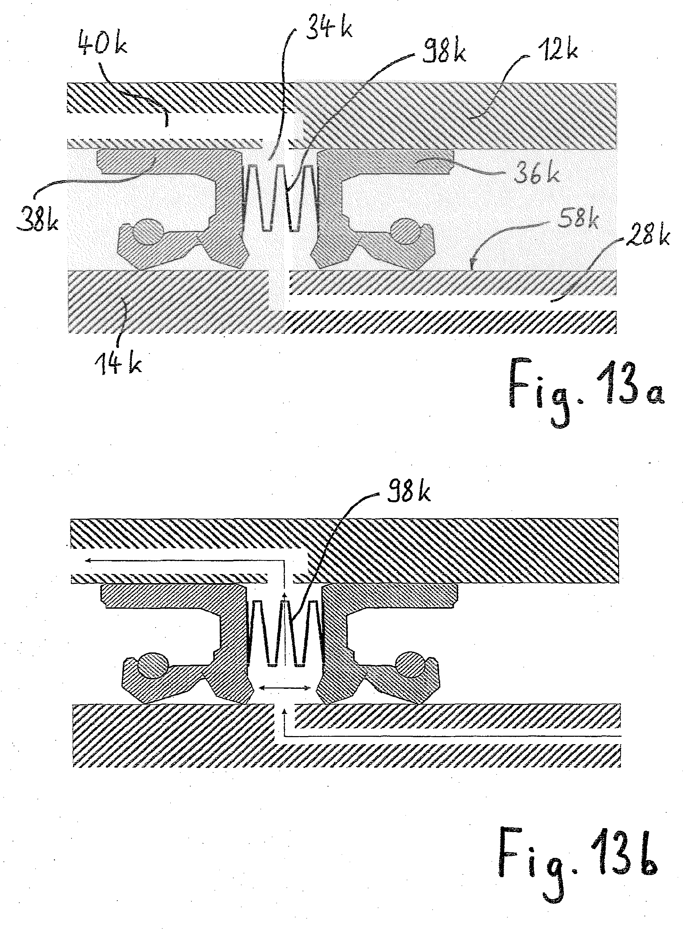

Anstelle einer starren Koppelung kann auch eine elastische Koppelung der Wellendichtringe vorgesehen sein. Dies ist in dem Ausführungsbeispiel der Figuren 13a und 13b gezeigt, welches sich von dem vorigen Ausführungsbeispiel lediglich darin unterscheidet, dass anstelle des starren Verbindungselements 96j ein Federelement 98k zwischen den beiden Wellendichtringen 36k und 38k befestigt ist. Das Federelement 98k kann etwa, wie dargestellt, durch eine Schraubenzugfeder gebildet sein, deren Zugkraft der bei einem Überdruck in der Kammer 34k entstehenden Kraft entgegenwirkt, die die beiden Wellendichtringe 36k und 38k in axialer Richtung auseinanderdrücken möchte. Ein axiales Auseinanderdriften der beiden Wellendichtringe 36k und 38k wird auf diese Weise lokal eingeschränkt oder verhindert und bei einer Druckentlastung in der Kammer 34k nehmen die beiden Wellendichtringe 36k und 38k ihre ursprüngliche Position wieder ein. Es versteht sich, dass auch mehrere Federelemente zwischen den beiden Wellendichtringen 36k und 38k befestigt sein können. Auch versteht es sich, dass andere Federtypen als eine Schraubenzugfeder verwendet werden können.

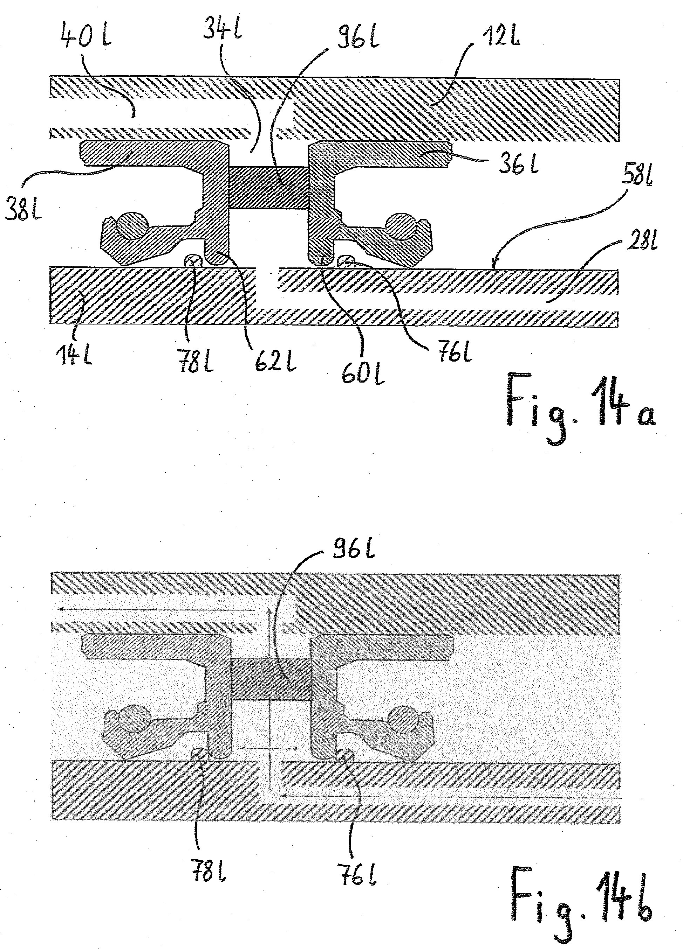

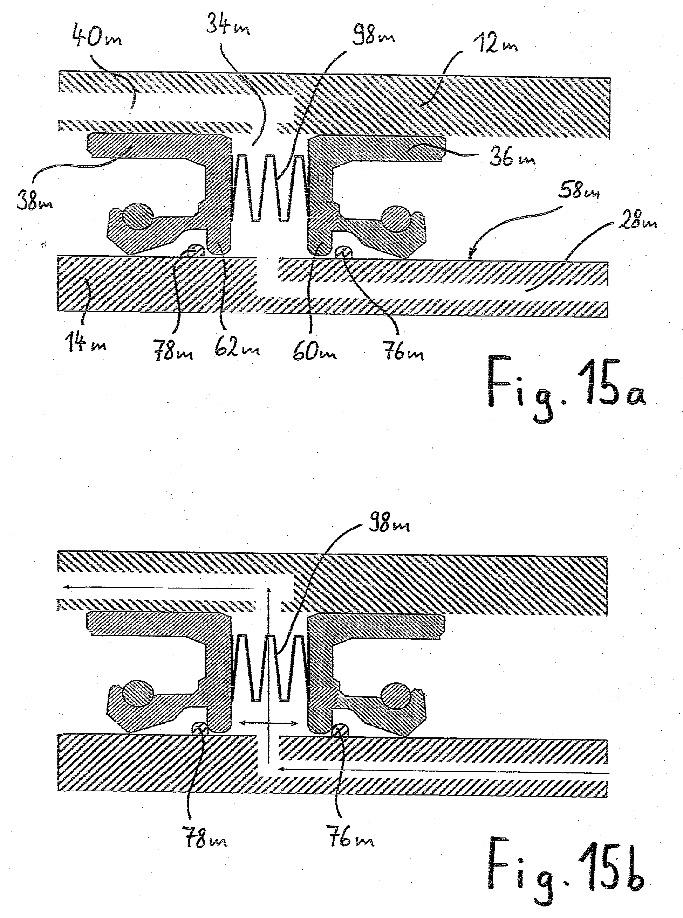

Weitere Ausführungsbeispiele ergeben sich durch beliebige Kombination der Merkmale der vorig beschriebenen Ausführungsbeispiele. Die Figuren 14a und 14b sowie die Figuren 15a und 15b zeigen exemplarisch zwei derartige Kombinationen. In den Figuren 14a und 14b sind die Merkmale der Ausführungsbeispiele nach den Figuren 6a und 6b sowie den Figuren 12a und 12b kombiniert. In Figuren 15a und 15b sind die Merkmale der Ausführungsbeispiele nach den Figuren 6a und 6b sowie den Figuren 13a und 13b kombiniert.

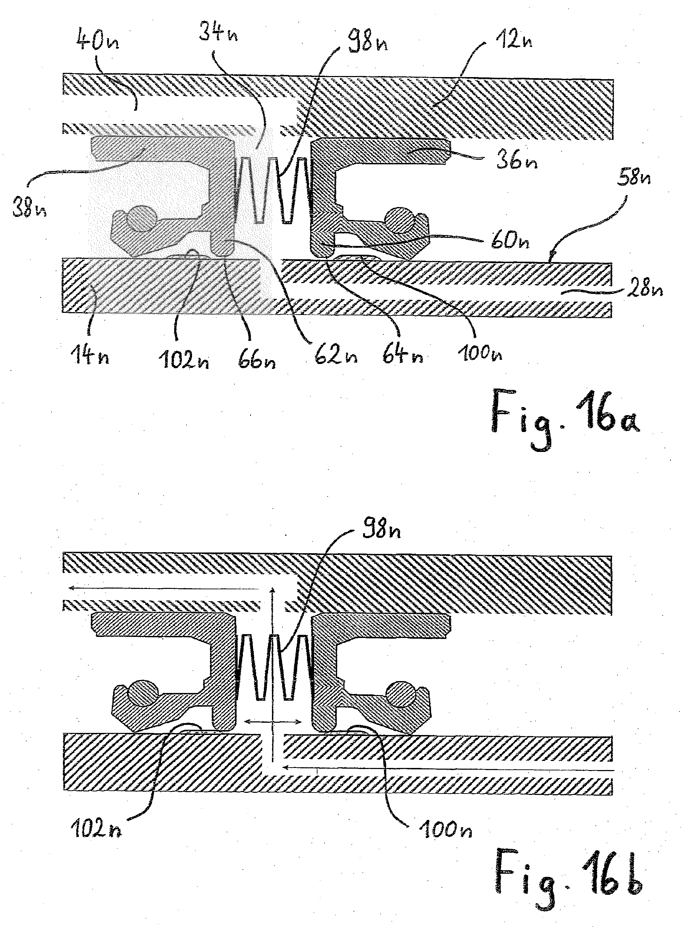

Die Figuren 16a und 16b zeigen beispielhaft eine Variation des Ausführungsbeispiels der Figuren 15a und 15b. Der Unterschied besteht hier darin, dass die auf der Mantelfläche 58n des Achskörpers 14n vorhandenen Rippen 100n und 102n als Flachrippen ausgebildet sind. Bei dieser Ausführungsform stützen sich bei einem Überdruck in der Kammer 34n die Kragen 60n und 62n nicht in axialer Richtung an den Flachrippen 100n und 102n ab, sondern werden in axialer Richtung auf die Flachrippen 100n und 102n aufgeschoben, so dass die Kragen 60n und 62n bzw. deren Dichtlippen 64n und 66n radial auf die Flachrippen 100n und 102n gedrückt werden. Bei einer Druckentlastung werden die beiden Wellendichtringe 36n und 38n durch das Federelement 98n wieder axial von den Flachrippen 100n und 102n heruntergezogen. Diese Ausführungsform ist vor allem dann von Vorteil, wenn eine Druckregulierung während der Fahrt des Fahrzeugs vorgenommen wird. So sind die bei einem in der Kammer 34n vorhandenen Überdruck auftretenden Reibkräfte zwischen den Dichtlippen 64n und 66n und den Flachrippen 100n und 102n deutlich geringer als zwischen den Kragen 60m und 62m und den Rippen 76m und 78m gemäß dem Ausführungsbeispiel nach den Figuren 15a und 15b.

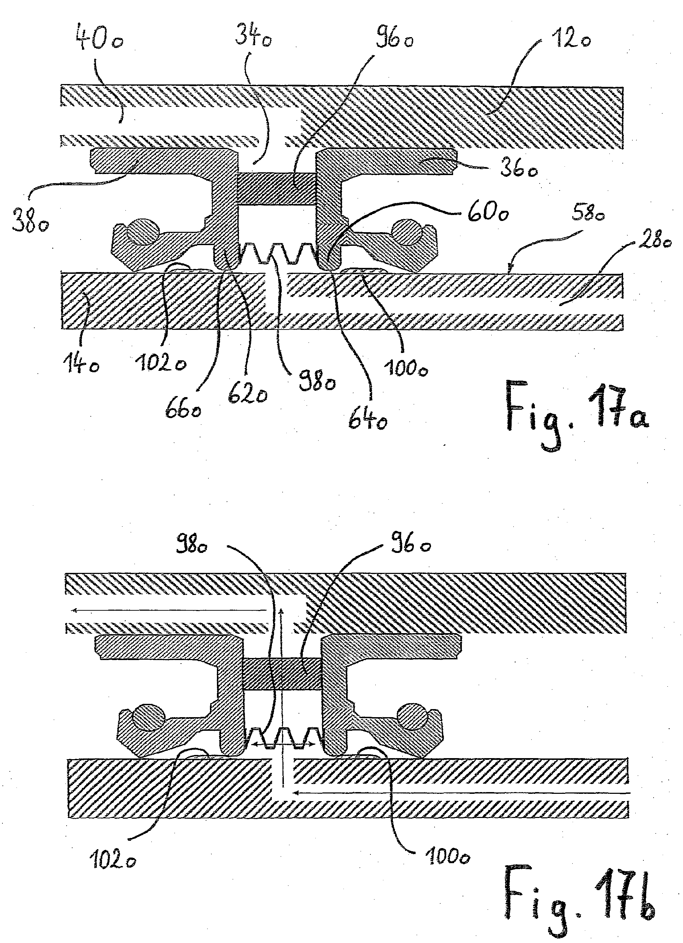

Eine weitere Kombinations- bzw. Variationsmöglichkeit der vorigen Ausführungsbeispiele ist durch die Figuren 17a und 17b gegeben. Hier werden die Wellendichtringe 36o und 38o durch ein starres Verbindungselement 96o axial fest voneinander beabstandet gehalten. Zusätzlich ist ein Federelement 98o vorgesehen, welches lediglich im Bereich zwischen den Kragen 60o und 62o angeordnet ist. Diese Anordnung hält die beiden Wellendichtringe 36o und 38o bei einem Überdruck in der Kammer 34o grundsätzlich fest voneinander beabstandet, während sich die Kragen 60o und 62o aufgrund ihrer Elastizität axial etwas auseinanderbewegen können. Eine Verformung ist daher lediglich in einem bestimmten Bereich der Wellendichtringe 36o und 38o gestattet. Im gezeigten Ausführungsbeispiel werden die Kragen 60o und 62o in axialer Richtung auf die Flachrippen 100o und 102o aufgeschoben, so dass die Kragen 60o und 62o bzw. deren Dichtlippen 64o und 66o radial auf die Flachrippen 100o und 102o gedrückt werden. Bei Druckentlastung werden die beiden Kragen 60o und 62o durch das Federelement 98o wieder axial von den Flachrippen 100o und 102o heruntergezogen.

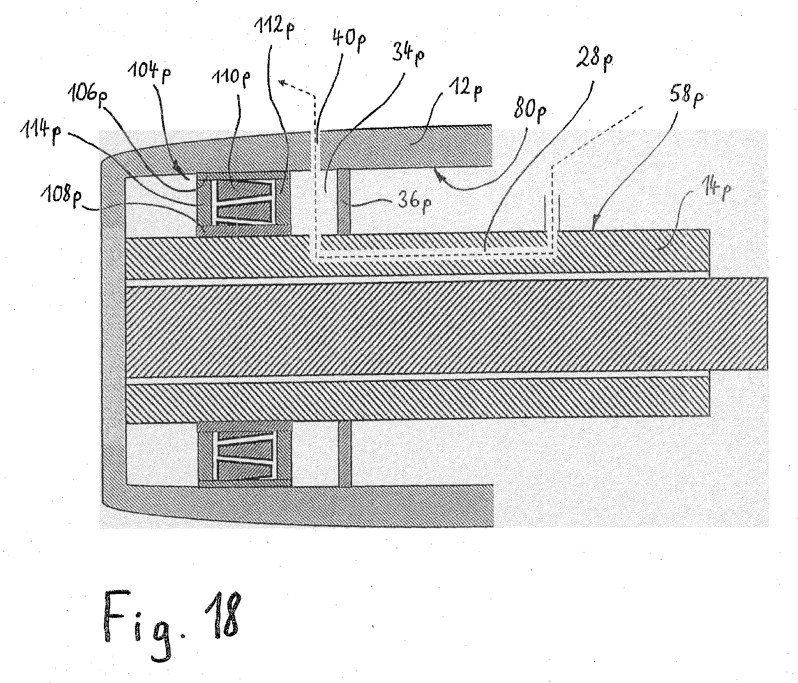

Die Figuren 18 bis 20 veranschaulichen nun schematisch weitere Ausführungsbeispiele, bei welchen zur Bildung der ringförmigen Kammer 34 mittelbar abdichtende Wellendichtringe zum Einsatz kommen.

In dem in Figur 18 gezeigten Ausführungsbeispiel ist zwischen dem Achskörper 14p und der Nabe 12p ein Kugellager 104p angeordnet. Das Kugellager 104p umfasst einen zylindrischen, radial äußeren Laufring 106p, der flächig an der Innenfläche 80p der Nabe 12p anliegt und relativ zur Nabe 12p fixiert ist. Das Kugellager 104p umfasst weiter einen zylindrischen, radial inneren Laufring 108p, der flächig an dem Achskörper 14p anliegt und relativ zum Achskörper 14p fixiert ist. Zwischen den beiden Laufringen 106p und 108p sind Kegelrollen 110p angeordnet, die eine kontrollierte Drehung des radial äußeren Laufrings 106p um den radial inneren Laufring 108p ermöglichen. Axial außen sind zwischen den beiden Laufringen 106p und 108p zwei Wellendichtringe 112p und 114p angeordnet, deren Wirkungsweise ähnlich den oben beschriebenen Wellendichtringen 36 und 38 ist, mit dem Unterschied, dass die Wellendichtringe 112p und 114p radial außen, anstelle die Nabe 12p zu kontaktieren, mit dem radial äußeren Laufring 106p in Kontakt stehen und radial innen, anstelle den Achskörper 14p zu kontaktieren, mit dem radial inneren Laufring 108p in Kontakt stehen. Die beiden Wellendichtringe 112p und 114p bewirken eine Abdichtung zwischen dem Achskörper 14p und der Nabe 12p daher lediglich mittelbar.

Grundsätzlich sind zur Bildung einer ringförmigen Kammer 34 beliebige Kombinationen von mittelbar und unmittelbar abdichtenden Wellendichtringen denkbar. In dem in Figur 18 gezeigten Ausführungsbeispiel wird die ringförmige Kammer 34p beispielsweise durch den axial inneren, unmittelbar abdichtenden Welldichtring 36p und den axial äußeren, mittelbar abdichtenden Wellendichtring 108p festgelegt. Genauer ist die ringförmige Kammer 34p also durch die Mantelfläche 58p des Achskörpers 14p, die Innenfläche 80p der Nabe 12p, den axial inneren Wellendichtring 36p, den axial äußeren Wellendichtring 112p sowie durch die der ringförmigen Kammer 34p zugewandten Flächen der beiden Laufringe 106p und 108p des Kugellagers 104p begrenzt.

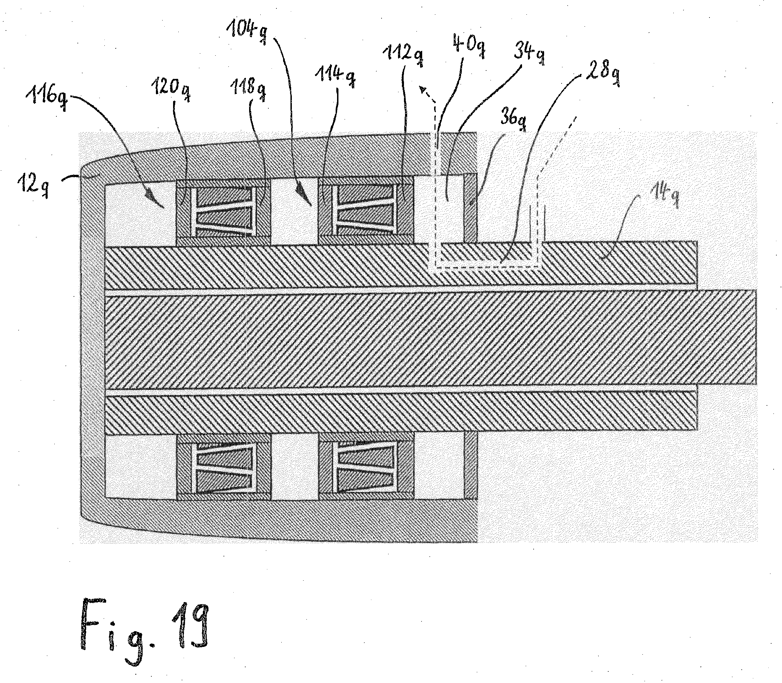

Figur 19 zeigt ein weiteres Ausführungsbeispiel, welches sich von dem vorhergehenden Beispiel dadurch unterscheidet, dass die hier dargestellte Achsbaugruppe ein zweites zwischen dem Achskörper 14q und der Nabe 12q angeordnetes Kugellager 116q mit entsprechenden Wellendichtringen 118q und 120q umfasst. Im gezeigten Beispiel ist das Kugellager 116q axial weiter außen als das Kugellager 104q angebracht. In einer Ausgestaltung mit zwei Kugellagern 104q und 116q ist es freilich denkbar, die ringförmige Kammer 34q auch an anderer Stelle als in Figur 19 dargestellt anzuordnen. Durch entsprechende Platzierung des unmittelbar abdichtenden Wellendichtrings 36q ist es ohne Weiteres möglich, die ringförmige Kammer 34q durch Zusammenwirken des Wellendichtrings 36q mit jeweils einem beliebigen der Wellendichtringe 112q, 114q, 118q und 120q zu bilden.

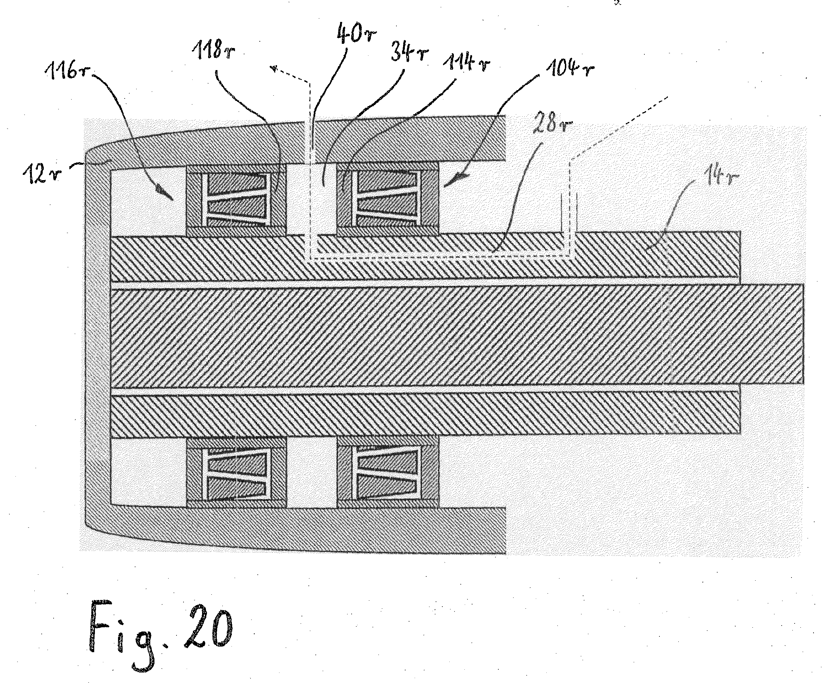

Figur 20 zeigt eine weitere Ausführungsform, die sich von dem Beispiel nach Figur 19 dadurch unterscheidet, dass die ringförmige Kammer 34r hier zwischen den beiden mittelbar abdichtenden Wellendichtringe 114r und 118r der benachbarten, voneinander beabstandeten Kugellager 104r und 116r gebildet wird. Auf einen unmittelbar abdichtenden Wellendichtring wird hier gänzlich verzichtet.

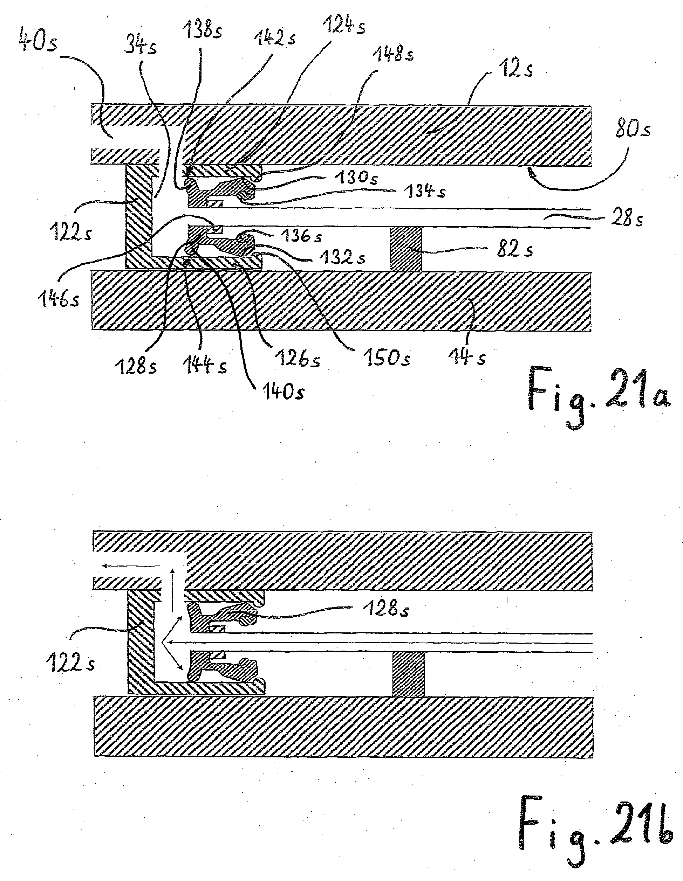

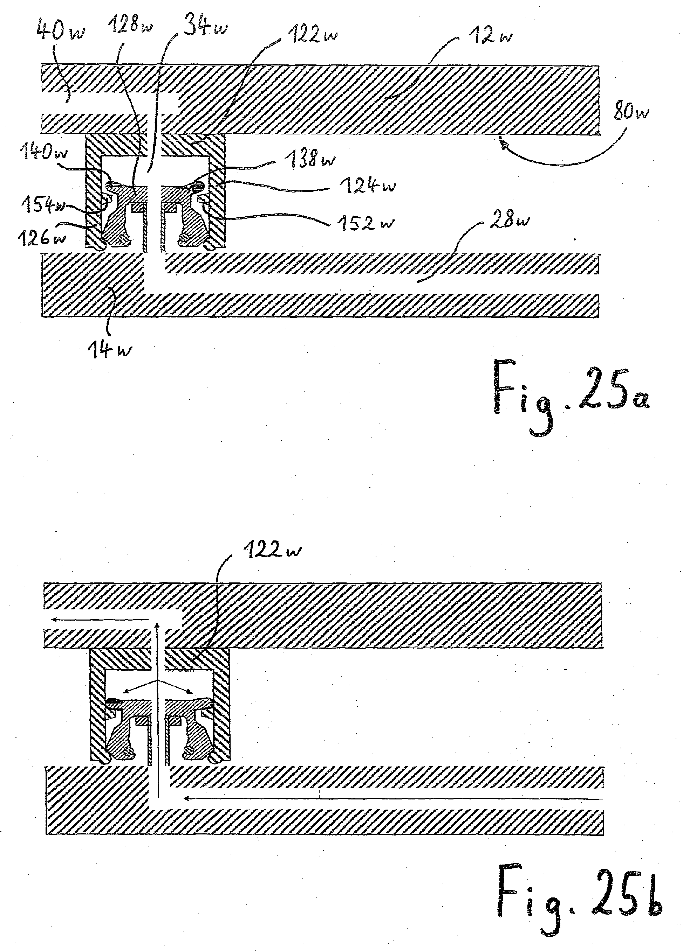

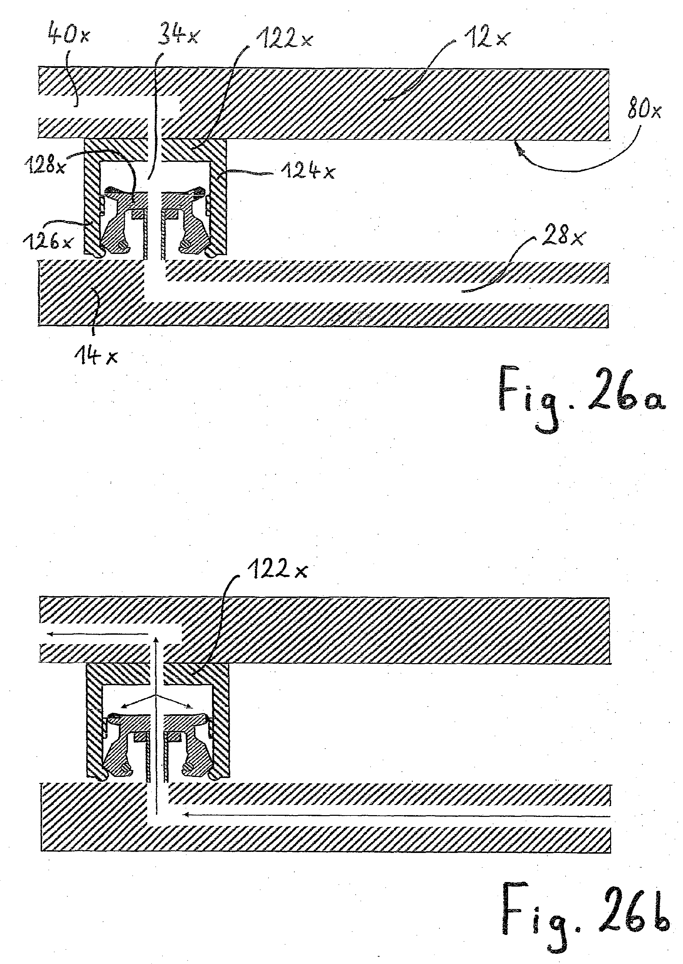

Die im Folgenden beschriebenen Figuren 21 bis 26 zeigen im Weiteren nun Ausführungsformen einer Fahrzeugachsbaugruppe, die im Gegensatz zu den obig beschriebenen Ausführungsformen ohne den axial inneren und axial äußeren Wellendichtring auskommt.

Wie in Figuren 21a und 21b gezeigt ist, wird bei einer solchen Achsbaugruppe die ringförmige Kammer 34s durch ein mit der Innenfläche 80s der Nabe 12s verbundenes Ringprofil 122s mit U-förmigem Querschnitt, dessen Seitenwände 124s und 126s axial verlaufen, und einen zwischen den Seitenwänden 124s und 126s angeordneten Dichtring 128s begrenzt. Der Dichtring 128s ist in diesem Fall bezüglich des Achskörpers 14s drehfest. Die erste Druckmittelleitung 28s ist ebenfalls bezüglich des Achskörpers 14s fest und erstreckt sich durch den Dichtring 128s, um in die ringförmige Kammer 34s zu münden. Die zweite Druckmittelleitung 40s erstreckt sich aus der ringförmigen Kammer 34s zunächst durch das Ringprofil 122s und anschließend durch die Nabe 12s. Der Dichtring 128s kann beispielsweise durch einen handelsüblichen doppelseitig wirkenden Simmerring^{®} gegeben sein.

Der Dichtring 128s ist sowohl radial innen als auch radial außen mit einer Hauptdichtlippe 130s bzw. 132s versehen, die jeweils durch eine von einer Schlauchfeder 134s bzw. 136s erzeugte Anpresskraft gegen die Seitenwand 124s bzw. 126s gedrückt wird und somit eine Abdichtung zwischen den beiden Seitenwänden 124s bzw. 126s bewirkt. Bei einer Drehung der Nabe 12s um den Achskörper 14s steht der Dichtring 128s relativ zum Achskörper 14s fest, während die mit den Seitenwänden 124s bzw. 126s in Kontakt stehenden Hauptdichtlippen 130s bzw. 132s über die Innenflächen der Seitenwände 124s bzw. 126s gleiten. Der Dichtring 128s ist ferner benachbart zu der ringförmigen Kammer 34s sowohl radial innen als auch radial außen mit einem Kragen 138s bzw. 140s versehen. Die Kragen 138s und 140s weisen jeweils eine Dichtlippe 142s bzw. 144s auf, die zumindest bei Überdruck in der ringförmigen Kammer 34s, wie dies in Figur 21b dargestellt ist, mit den Innenflächen der Seitenwände 124s bzw. 126s in Kontakt sind und zusätzlich zu den Hauptdichtlippen 130s und 132s eine abdichtende Wirkung erzeugen. Im in Figur 21a gezeigten Ausführungsbeispiel stehen die Dichtlippen 142s und 144s bei Normaldruck nicht in Kontakt mit den Seitenwänden 124s bzw. 126s und werden erst bei einem Überdruck in der Kammer 34s gegen die Innenflächen der Seitenwände 124s bzw. 126s gedrückt. Es versteht sich freilich, dass die Kragen 138s und 140s mit den Dichtlippen 142s und 144s auch bereits bei einem Normaldruck (Umgebungsdruck) in der Kammer 34s in Kontakt mit den Seitenwänden 124s bzw. 126s stehen können.

Um bei einem Überdruck in der Kammer 34s einem Herausdrücken des Dichtrings 128s aus den Seitenwänden 124s bzw. 126s des Ringprofils 122s entgegenzuwirken, ist eine Halterung vorgesehen, die als Anschlag 146s auf der ersten Druckmittelleitung 28s nahe der Mündung derselben in die Kammer 34s realisiert ist. Der Dichtring 128s kann sich axial an dem Anschlag 146s abstützen. Zudem sind im Bereich der offenen Enden der Seitenwände 124s bzw. 126s des Ringprofils 122s auf den Innenflächen der Seitenwände 124s bzw. 126s sich in Umfangsrichtung erstreckende Halterippen 148s bzw. 150s vorhanden, die eine axiale Bewegung des Dichtrings 128s aus dem Ringprofil 122s heraus verhindern, sobald die Hauptdichtlippen 130s bzw. 132s gegen die Halterippen 148s bzw. 150s stoßen. Es versteht sich, dass auf die Halterippen 148s bzw. 150s auch verzichtet werden kann.

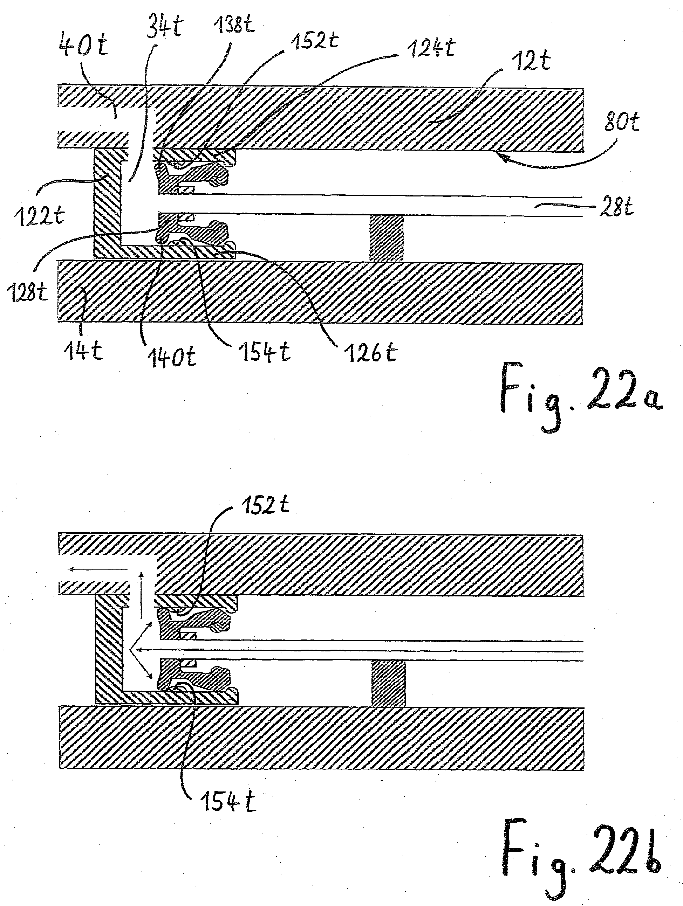

Die Figuren 22a und 22b zeigen weiter, wie einem axialen Herausdrücken des Dichtrings 128t aus den Seitenwänden 124t bzw. 126t des Ringprofils 122t außerdem begegnet werden kann. Das hier gezeigte Ausführungsbeispiel unterscheidet sich von dem in den Figuren 21a und 21b gezeigten Beispiel darin, dass auf den Innenflächen der Seitenwände 124t bzw. 126t sich in Umfangsrichtung erstreckende Rippen 152t bzw. 154t vorhanden sind, an denen sich die Kragen 138t bzw. 140t formschlüssig zumindest bei einem Überdruck in der Kammer 34t axial abstützen. Wie in Figur 22a gezeigt ist, sind die Kragen 138t bzw. 140t bei Normaldruck noch von den Rippen 152t bzw. 154t beabstandet und kommen erst bei einem Überdruck mit den Rippen 152t bzw. 154t in Kontakt. Es versteht sich, dass auch bei Normaldruck ein Kontakt zwischen den Kragen 138t bzw. 140t und den Rippen 152t bzw. 154t bereits bestehen kann.

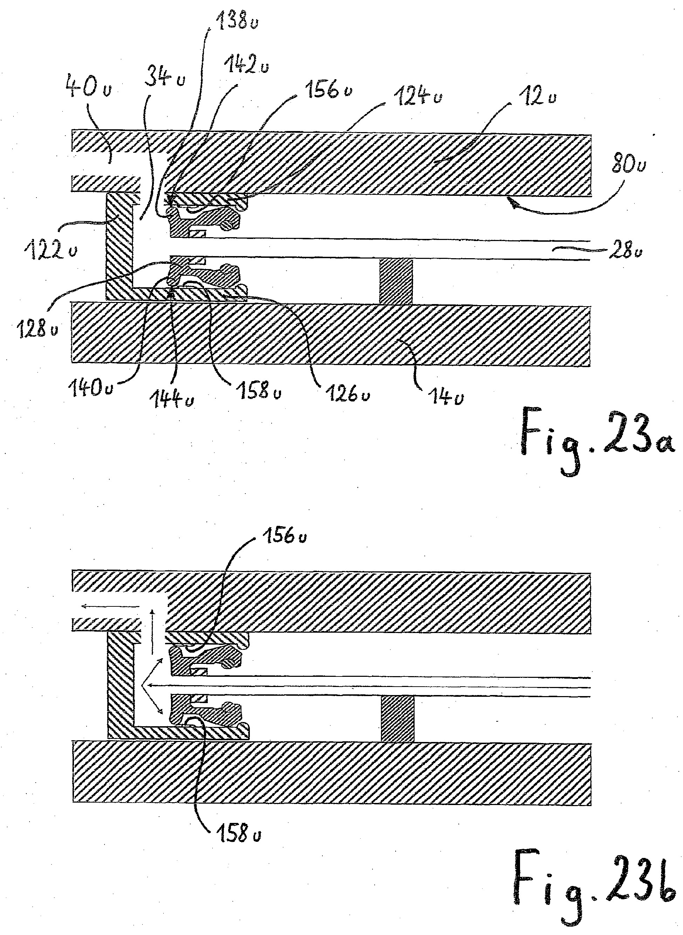

Die Figuren 23a und 23b zeigen eine Variation des Ausführungsbeispiels nach den Figuren 22a und 22b. Der Unterschied besteht hier darin, dass die auf den Innenflächen der Seitenwände 124u bzw. 126u vorhandenen Rippen 156u bzw. 158u als Flachrippen ausgebildet sind. Bei dieser Ausführungsform stützen sich bei einem Überdruck in der Kammer 34u die Kragen 138u bzw. 140u nicht in axialer Richtung an den Flachrippen 156u bzw. 158u ab, sondern werden in axialer Richtung auf die Flachrippen 156u bzw. 158u aufgeschoben, so dass die Kragen 138u und 140u bzw. deren Dichtlippen 142u und 144u radial auf die Flachrippen 156u bzw. 158u gedrückt werden. Diese Ausführungsform ist vor allem dann vorteilhaft, wenn eine Druckregulierung während der Fahrt des Fahrzeugs erfolgen soll. So sind die bei einem Überdruck in der Kammer 34u auftretenden Reibkräfte zwischen den Dichtlippen 142u bzw. 144u und den Flachrippen 156u bzw. 158u deutlich geringer als zwischen den Kragen 138t bzw. 140t und den Rippen 152t bzw. 154t gemäß dem Ausführungsbeispiel der Figuren 22a und 22b.

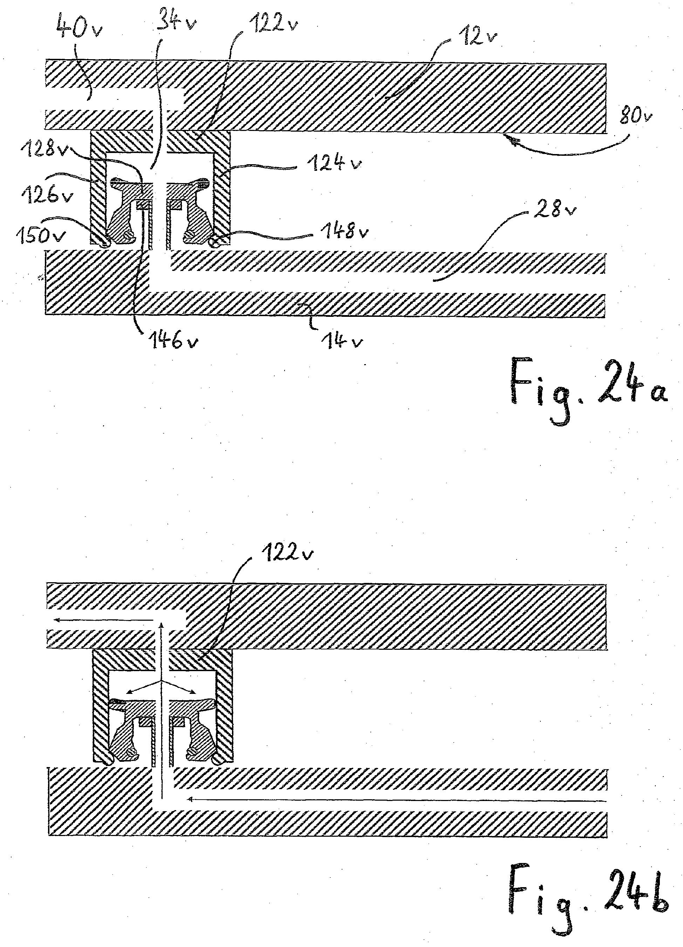

Weitere Ausführungsformen sind in den Figuren 24 bis 26 gegeben. Diese Ausführungsformen gleichen grundsätzlich denen der Figuren 21 bis 23. Ein Unterschied besteht allerdings darin, dass die Seitenwände 124v, 124w, 124x bzw. 126v, 126w, 126x der Ringprofile 122v, 122w, 122x nicht axial, sondern radial verlaufen. Die vorstehend angeführten Erläuterungen zu den Figuren 21 bis 23 sind deshalb analog auf die Figuren 24 bis 26 anzuwenden, mit dem Unterschied, dass diejenigen Elemente bzw. Merkmale, die oben mit axialer Ausrichtung beschrieben wurden nun mit radialer Ausrichtung zu bezeichnen sind, und diejenigen Elemente bzw. Merkmale, die oben mit radialer Ausrichtung beschrieben wurden nun mit axialer Ausrichtung zu bezeichnen sind.

Es versteht sich, dass weitere Variationen dieser Ausführungsbeispiele denkbar sind. Insbesondere ist es möglich, weitere aus den oben beschriebenen Ausführungsbeispielen gemäß den Figuren 3 bis 17 bekannte Merkmale mit den Ausführungsformen der Figuren 21 bis 26 zu kombinieren. So ist es etwa vorstellbar, die Kragen des Dichtrings länger auszuführen, so dass die Kragen in auf den Innenflächen der Seitenwände des Ringprofils vorhandene Ringnuten hineinragen. Bei einem Überdruck in der ringförmigen Kammer werden diese Kragen dann gegen die Wände der Ringnuten gepresst.

Weitere vorteilhafte Ausführungsformen der beschriebenen Fahrzeugachsbaugruppen ergeben sich durch besondere Ausgestaltungen der verwendeten Wellendichtringe bzw. Dichtringe.

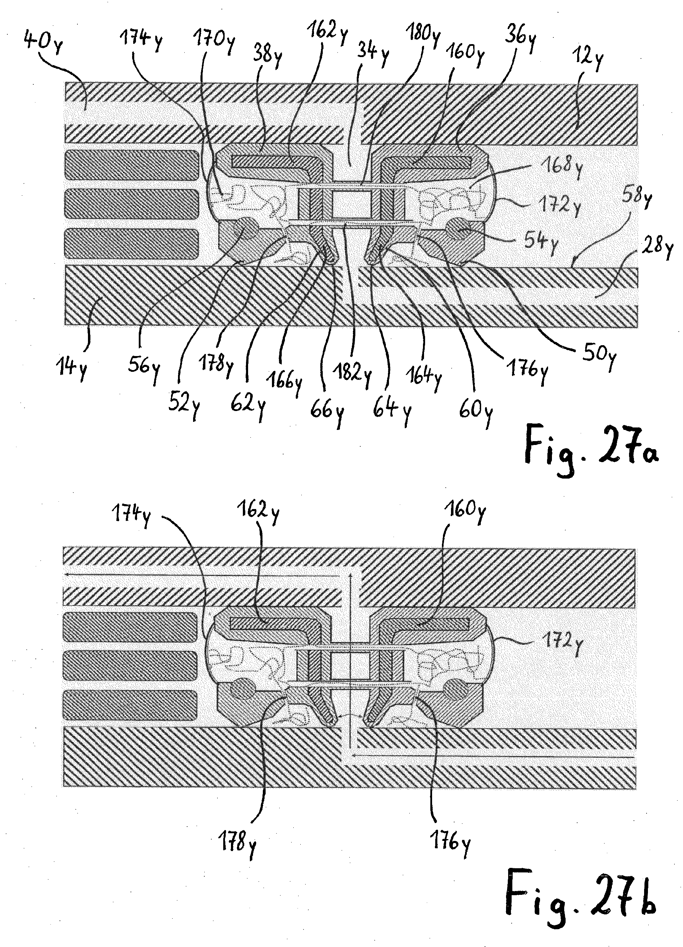

Diesbezüglich greifen die Figuren 27a und 27b noch einmal das Beispiel der zuerst beschriebenen Fahrzeugachsbaugruppe nach den Figuren 3a und 3b auf. Das in den Figuren 27a und 27b gezeigte Ausführungsbeispiel unterscheidet sich von dem Beispiel der Figuren 3a und 3b dadurch, dass die beiden Wellendichtringe 36y und 38y jeweils einen Kern 160y bzw. 162y aus einem die Wellendichtringe 36y und 38y versteifenden Material aufweisen. Die Kerne 160y und 162y bewirken eine Verstärkung der Wellendichtringe 36y und 38y einschließlich deren Kragen 60y und 62y und stabilisieren diese, so dass sie einem Überdruck in der Kammer 34y besser standhalten können und nicht umklappen.

Die Kerne 160y und 162y können beispielsweise als Blechringe ausgeführt sein, die in das Material der Wellendichtringe 36y und 38y eingebettet sind. Im gezeigten Beispiel weisen die Kerne 160y und 162y einen annähernd L-förmigen Querschnitt auf, wobei sich jeweils ein L-Schenkel axial innerhalb desjenigen Schenkels des Wellendichtrings 36y bzw. 38y erstreckt, der radial außen durch Reibschluss an der Nabe 12y haftet. Der jeweils andere L-Schenkel erstreckt sich in im Wesentlichen radialer Richtung innerhalb der der ringförmigen Kammer 34y zugewandten Seite des Wellendichtrings 36y bzw. 38y. Die Abschnitte 164y bzw. 166y der Kerne 160y und 162y im Bereich der Kragen 60y und 62y folgen der Form der Kragen 60y und 62y und erstrecken sich in Richtung zum Achskörper 14y leicht schräg zur ringförmigen Kammer 34y hin.

Die hier beispielhaft dargestellten Kerne 160y und 162y sind einstückig ausgebildet, so dass lediglich eine eingeschränkte Bewegbarkeit der Abschnitte 164y und 166y gegenüber den übrigen Abschnitten der Kerne 160y und 162y gegeben ist. Es ist aber durchaus möglich, im Bereich des Übergangs von den Abschnitten 164y und 166y auf die angrenzenden Abschnitte der Kerne 160y und 162y eine Materialschwächung, beispielweise durch dünneres Material oder durch Aussparungen vorzusehen. Auch können die Kerne 160y und 162y zweiteilig ausgeführt sein, so dass die Abschnitte 164y und 166y von den angrenzenden Abschnitten der Kerne 160y und 162y getrennt sind. Auf diese Weise kann eine Schwenkbarkeit der Abschnitte 164y und 166y bezüglich der angrenzenden Abschnitte der Kerne 160y und 162y realisiert werden, die es erlaubt, dass sich die Kragen 60y und 62y bei einem Überdruck in der Kammer 34y - trotz der erzielten Versteifung - leichter verformen, um mit der Mantelfläche 58y des Achskörpers 14y dichtend in Kontakt zu kommen.

Darüber hinaus unterscheidet sich das Ausführungsbeispiel der Figuren 27a und 27b von dem Beispiel der Figuren 3a und 3b dadurch, dass die Hohlräume 168y und 170y, welche durch die sich im Wesentlichen in axialer Richtung erstreckenden Schenkel der Wellendichtringe 36y und 38y begrenzt sind, als Schmiermitteldepots dienen. Zu diesem Zweck sind die von der ringförmigen Kammer 34y abgewandten Seiten der Wellendichtringe 36y und 38y mit Abdeckungen 172y bzw. 174y versehen. Die Abdeckungen 172y und 174y können beispielsweise als ringförmige Federbleche realisiert sein, die zwischen die sich axial erstreckenden Schenkel der Wellendichtringe 36y und 38y geklemmt sind und so die Hohlräume 168y und 170y nach außen hin verschließen.

Durch die gepunkteten Schlangenlinien ist in der Darstellung der Figuren 27a und 27b angedeutet, dass die Hohlräume 168y und 170y mit einem Schmiermittel befüllt sind. Damit in den Hohlräumen 168y und 170y vorhandenes Schmiermittel zu den Dichtflächen der Wellendichtringe 36y und 38y auf der Mantelfläche 58y des Achskörpers 14y gelangen kann, sind Kanäle 176y bzw. 178y vorgesehen, die sich aus den Hohlräumen 168y und 170y in im Wesentlichen radialer Richtung durch diejenigen Schenkel der Wellendichtringe 36y und 38y erstrecken, die die Kragen 60y und 52y und die Hauptdichtlippen 50y und 52y der Wellendichtringe 36y und 38y miteinander verbinden. Die Hohlräume 168y und 170y dienen so als Schmiermitteldepots, welche nach und nach Schmiermittel zur Schmierung und Kühlung der Dichtflächen der Wellendichtringe 36y und 38y abgeben.

Schließlich sind im gezeigten Ausführungsbeispiel im Unterschied zu dem Beispiel der Figuren 3a und 3b zusätzlich zwei Leitungen 180y und 182y vorgesehen, die den Hohlraum 168y des axial inneren Wellendichtrings 36y mit dem Hohlraum 170y des axial äußeren Wellendichtrings 38y miteinander verbinden. Wie zu sehen ist, sind die Leitungen 180y und 182y durch Verbindungselemente geführt, die die beiden Wellendichtringe 36y und 38y starr miteinander koppeln. Die Leitungen 180y und 182y ermöglichen einen Transport von Schmiermittel von einem der beiden Hohlräume 168y und 170y in den jeweils anderen, so dass sich das Schmiermittel auf beide Hohlräume 168y und 170y verteilen kann. Ist beispielsweise gewünscht, dass Schmiermittel vorwiegend nur von dem Wellendichtring 38y in den Wellendichtring 36y transportiert werden soll, weil z. B. nur der Hohlraum 170y mit einem Schmiermittel vorbefüllt ist, dann können - wenn die Hauptdrehrichtung der Wellendichtringe 36y und 38y in Zeichnungstiefe der Figuren 27a und 27b gesehen vom Betrachter weg verläuft - sich die Leitungen 180y und 182y schräg entgegen der Hauptdrehrichtung erstrecken, d.h. in Zeichnungstiefe der Figuren 27a und 27b gesehen von dem Wellendichtring 38y zu dem Wellendichtring 36y dem Betrachter allmählich entgegenkommen.

Die Verwendung der Abdeckungen 172y und 174y, insbesondere in Gestalt einer Realisierung durch ringförmige Federbleche, birgt zusätzlich den Vorteil, dass auf die Schlauchfedern 54y und 56y der Wellendichtringe 36y und 38y verzichtet werden kann, da die von den Schlauchfedern 54y und 56y erzeugte Anpresskraft, die die Hauptdichtlippen 50y und 52y gegen die Mantelfläche 58y des Achskörpers 14y drückt, auch von den Abdeckungen 172y und 174y aufgebracht werden kann.

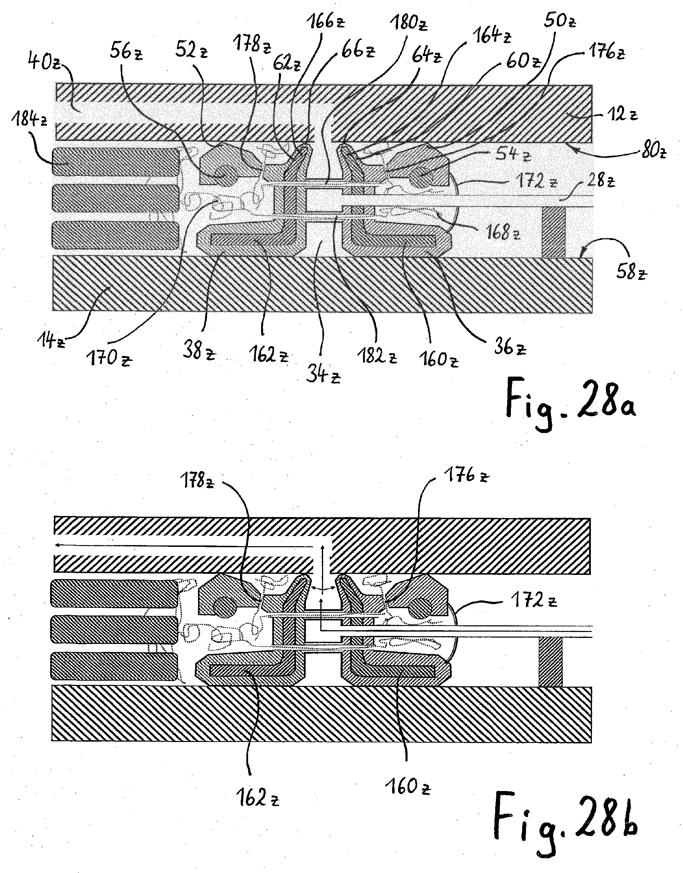

Eine besonders vorteilhafte Ausführungsform ist in den Figuren 28a und 28b veranschaulicht. Das dort gezeigte Ausführungsbeispiel unterscheidet sich von dem Beispiel der Figuren 27a und 27b im Wesentlichen dadurch, dass die beiden Wellendichtringe 36z und 38z einen im Vergleich zu den Wellendichtringen 36y und 38y spiegelverkehrten Querschnitt aufweisen und bezüglich des Achskörpers 14z drehfest sind. Auch erstreckt sich die erste Druckmittelleitung 28z durch den inneren Wellendichtring 36z, um in die ringförmige Kammer 34z zu münden. Eine solche Ausgestaltung des inneren Wellendichtrings 36z ist bereits in dem Beispiel der Figuren 7a und 7b beschrieben, so dass auf die dortigen Erläuterungen verwiesen werden kann. Die dort beschriebene Ausgestaltung des inneren Wellendichtrings 36z ist darüber hinaus analog auf den axial äußeren Wellendichtring 38z zu übertragen. Die erste Druckmittelleitung 28z erstreckt sich im vorliegenden Fall durch die Abdeckung 172z hindurch.

Die bezüglich der Figuren 27a und 27b beschriebenen Merkmale finden sich im Wesentlichen in der Ausführungsform der Figuren 28a und 28b wieder, jedoch jeweils in spiegelverkehrter Form. Insoweit wird auf die obigen Ausführungen zu den Figuren 27a und 27b verwiesen, mit dem Unterschied, dass sich diejenigen Elemente bzw. Merkmale, die oben mit radial äußerer Ausrichtung beschrieben wurden, nun eine radial innere Ausrichtung haben, und diejenigen Elemente bzw. Merkmale, die oben mit radial innerer Ausrichtung beschrieben wurden, nun eine radial äußere Ausrichtung haben. Ebenso versteht es sich, dass sich Formulierungen, die sich auf den Achskörper 14y bzw. die Mantelfläche 58y des Achskörpers 14y beziehen, hier die Nabe 12z bzw. die Innenfläche 80z der Nabe 12z betreffen.

Ein wesentlicher Unterschied zu dem Ausführungsbeispiel nach den Figuren 27a und 27b besteht darin, dass der äußere Wellendichtring 38z im hier dargestellten Beispiel keine Abdeckung aufweist, so dass der Hohlraum 170z in axialer Richtung nach außen hin offen ist. Eine derartige Anordnung ermöglicht es, dass Schmiermittel, welches im Raum eines benachbart zu dem äußeren Wellendichtring 38z angeordneten Kugellagers 184z vorhanden ist, in den Hohlraum 170z und von dort aus durch den Kanal 178z zu den Dichtflächen des Wellendichtrings 38z auf der Innenfläche 80z der Nabe 12z gelangen kann. Gleichermaßen kann das Schmiermittel aus dem Kugellager 184z über die Leitungen 180z und 182z in den Hohlraum 168z des inneren Wellendichtrings 36z gelangen und von dort aus über den Kanal 176z zu den Dichtflächen des Wellendichtrings 36z auf der Innenfläche 80z der Nabe 12z.

Es versteht sich, dass der Wellendichtring 38z auch in dieser Ausführungsform mit einer den Hohlraum 170z verschließenden Abdeckung ausgestattet sein kann, um in dem Hohlraum 170z ein Schmiermitteldepot zu bilden. Auch ist denkbar, eine solche Abdeckung zwar anzubringen, diese aber mit einer oder mehrerer Durchlassöffnungen zu versehen, die erlauben, dass Schmiermittel aus dem Kugellager 184z weiter in den Hohlraum 170z eintreten kann.

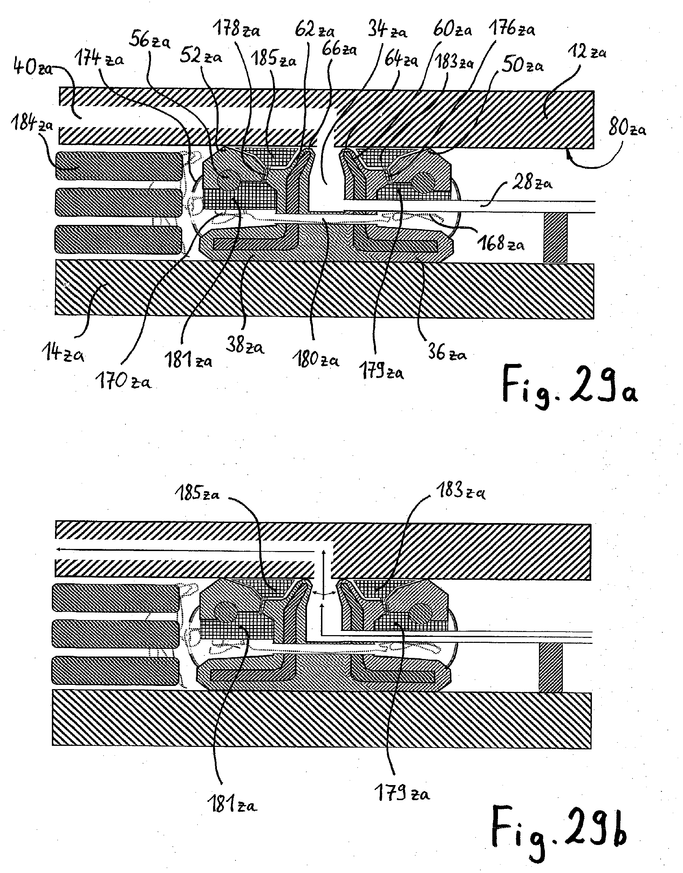

Eine solche Situation ist in dem Beispiel der Figuren 29a und 29b veranschaulicht. Die hier gezeigte Abdeckung 174za ist mit einer Durchlassöffnung versehen, durch welche in dem Kugellager 184za befindliches Schmiermittel in den Hohlraum 170za eintreten kann. Die Abdeckung 174za hat daher im Wesentlichen den konstruktiven Zweck, die Schlauchfeder 56za des Wellendichtrings 38za entbehrlich zu machen, da die Anpresskraft, die die Hauptdichtlippe 52za gegen die Innenfläche 80za der Nabe 12za drückt, durch die Abdeckung 174za aufgebracht werden kann. Auf die Schlauchfeder 56za kann deshalb verzichtet werden.

Abgesehen von diesem Aspekt unterscheidet sich das Ausführungsbeispiel der Figuren 29a und 29b von dem Beispiel der Figuren 28a und 28b auch dadurch, dass die beiden Wellendichtringe 36za und 38za als eine Einheit gegossen sind und die beiden Hohlräume 168za und 170za lediglich durch eine einzige Leitung 180za miteinander verbunden sind. Die Leitung 180za ist hier durch den Abschnitt geführt, der die beiden Wellendichtringe 36za und 38za miteinander verbindet.

Wesentlich unterscheidet sich das Beispiel der Figuren 29a und 29b von dem Beispiel der Figuren 28a und 28b zudem dadurch, dass in den Hohlräumen 168za und 170za schwammartige Schaumstoffe 179za bzw. 181za vorhanden sind, die einen Teil der Hohlräume 168za und 170za ausfüllen und Eintrittsöffnungen der Kanäle 176za und 178za bedecken. Die Schaumstoffe 179za bzw. 181za weisen sich in axialer Richtung erstreckende Abschlussflächen auf, die radial oberhalb der Ein- bzw. Austrittsöffnungen der Leitung 180za gelegen sind. In den schaumstofffreien Teilen der Hohlräume 168za und 170za befindliches Schmiermittel kann somit ungehindert durch die Leitung 180za fließen. Die Schaumstoffe 179za bzw. 181za sorgen dafür, dass in den Hohlräumen 168za und 170za befindliches Schmiermittel nicht unmittelbar durch die Kanäle 176za und 178za abfließt, sondern zunächst von den Schaumstoffen 179za bzw. 181za aufgenommen und gespeichert wird, um dann allmählich in die Kanäle 176za und 178za abgegeben zu werden. Im gezeigten Beispiel sind auch die Kanäle 176za und 178za mit schwammartigen Schaumstoffen ausgefüllt, was aber nicht zwingend erforderlich ist. Darüber hinaus sind schwammartige Schaumstoffe 183za bzw. 185za jeweils in den Zwischenräumen zwischen den Kragen 60za bzw. 62za respektive deren Dichtlippen 64za bzw. 66za, den Hauptdichtlippen 50za bzw. 52za und der Nabe 12za vorhanden. Aus den Hohlräumen 168za und 170za über die Kanäle 176za und 178za in diese Zwischenräume eintretendes Schmiermittel wird von den Schaumstoffen 183za bzw. 185za aufgenommen und anschließend von diesen gleichmäßig an den Dichtflächen der Wellendichtringe 36za und 38za auf der Innenfläche 80za der Nabe 12za verteilt.

Es ist einem Fachmann klar, dass die in Bezug auf die Figuren 27 bis 29 beschriebenen Merkmale beliebig miteinander kombiniert werden können und gleichermaßen auch auf die anderen Ausführungsformen der beschriebenen Fahrzeugachsbaugruppe anwendbar sind. So ist es etwa vorstellbar, auch bei den anhand der Figuren 3 bis 20 beschriebenen Ausführungsformen entsprechende Versteifungen in den Wellendichtringen vorzusehen oder die Wellendichtringe mit Schmiermitteldepots und/oder schwammartigen Schaumstoffen in deren Hohlräumen auszustatten.

Die in den Figuren 28 und 29 gezeigten Ausführungsformen sind besonders vorteilhaft in Situationen, in denen der Fahrzeugachsbaugruppe aus Platzgründen konstruktive Grenzen gesetzt sind. So kann es sein, dass die Materialdicke des Achskörpers nicht ausreichend ist, um die erste Druckmittelleitung darin zu führen. Die gezeigten Ausführungsformen umgehen dieses Problem, indem sie die erste Druckmittelleitung 28z bzw. 28za durch den Wellendichtring 36z bzw. 36za hindurch in die ringförmige Kammer 34z bzw. 34za münden lassen. Da die Kragen 60z und 62z bzw. 60za und 62za beider Wellendichtringe 36z und 38z bzw. 36za und 38za radial außen angeordnet sind, kommen diese Anordnungen mit einem minimalen axialen Platzbedarf aus. Bei Druckzuführung durch die erste Druckmittelleitung 28z bzw. 28za werden die Kragen 60z und 62z bzw. 60za und 62za nämlich auseinandergedrückt, da die Beaufschlagung des Druckmittels aus dem Inneren der ringförmigen Kammer 34z bzw. 34za heraus erfolgt. Die beiden Wellendichtringe 36z und 38z bzw. 36za und 38za können daher ohne weiteres so nah aneinander angeordnet werden, dass deren Kragen 60z und 62z bzw. 60za und 62za sich bei Normaldruck in der Kammer 34z bzw. 34za berühren.

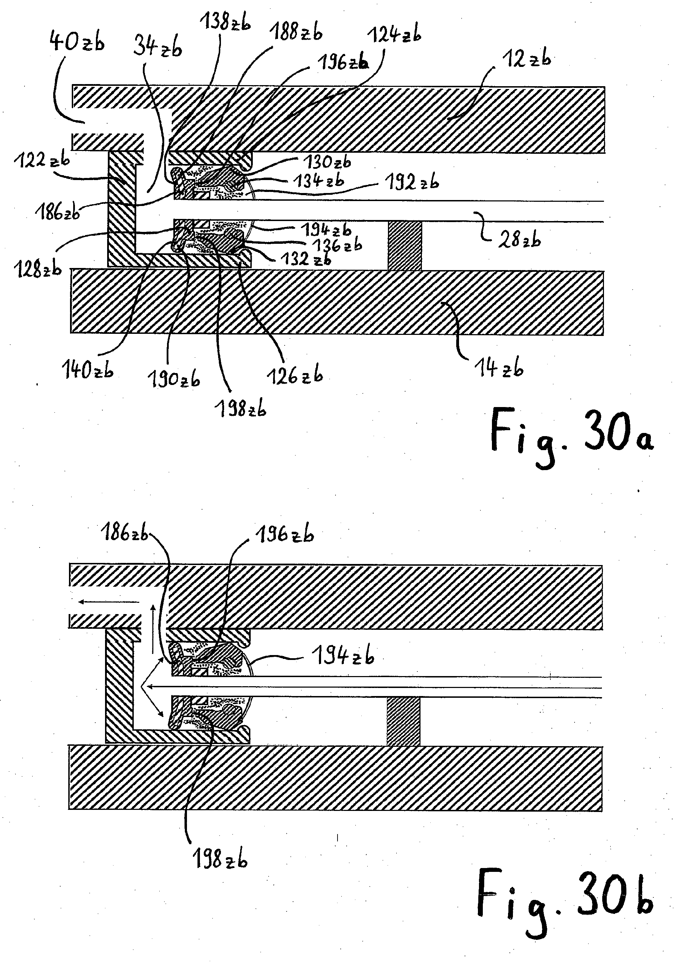

Die im Folgenden beschriebenen Figuren 30 bis 32 greifen nun wieder die Fahrzeugachsbaugruppe auf, die mit nur einem Dichtring auskommt, und erweitern die Ausführungsbeispiele der Figuren 21 bis 26 im Sinne der soeben bezüglich der Figuren 27 und 29 beschriebenen Merkmale.

Die Figuren 30a und 30b erweitern das Ausführungsbeispiel der Figuren 21a und 21b. Dieses Beispiel unterscheidet sich von dem Beispiel der Figuren 21a und 21b dadurch, dass der Dichtring 128zb einen Kern 186zb aus einem den Dichtring 128zb versteifenden Material aufweist. Der Kern 186zb bewirkt eine Verstärkung des Dichtrings 128zb einschließlich dessen Kragen 138zb und 140zb und stabilisiert diese, so dass sie einem Überdruck in der Kammer 34zb besser standhalten können.

Der Kern 186zb kann beispielsweise durch einen Blechring realisiert sein, der in das Material des Dichtrings 128zb eingebettet ist. Im gezeigten Beispielfall erstreckt sich der Kern 186zb im Wesentlichen parallel zu der der ringförmigen Kammer 34zb zugewandten Seite des Dichtrings 128zb. Die Abschnitte 188zb bzw. 190zb des Kerns 186zb im Bereich der Kragen 138zb und 140zb folgen der Form der Kragen 138zb und 140zb und erstrecken sich in Richtung zu den Seitenwänden 124zb und 126zb des Ringprofils 122zb leicht schräg zur ringförmigen Kammer 34zb hin.

Der hier beispielhaft gezeigte Kern 186zb ist einstückig ausgebildet, so dass lediglich eine eingeschränkte Bewegbarkeit der Abschnitte 188zb und 190zb gegenüber den angrenzenden Abschnitten des Kerns 186zb gegeben ist. Es ist aber durchaus möglich, im Bereich des Übergangs von den Abschnitten 188zb und 190zb auf die angrenzenden Abschnitte des Kerns 186zb jeweils eine Materialschwächung vorzusehen, beispielweise durch Verwenden dünneren Materials oder durch Vorsehen von Aussparungen. Auch kann der Kern 186zb dreiteilig ausgeführt sein, so dass die Abschnitte 188zb und 190zb von den angrenzenden Abschnitten des Kerns 186zb getrennt sind. Auf diese Weise kann eine Schwenkbarkeit der Abschnitte 188zb und 190zb bezüglich der angrenzenden Abschnitte des Kerns 186zb realisiert werden, die es erlaubt, dass sich die Kragen 138zb und 140zb bei einem Überdruck in der Kammer 34zb - trotz der Versteifung - leichter verformen, um mit den Seitenwänden 124zb und 126zb des Ringprofils 122zb abdichtend in Kontakt zu kommen.

Darüber hinaus unterscheidet sich das Ausführungsbeispiel der Figuren 30a und 30b von dem der Figuren 21a und 21b dadurch, dass der Hohlraum 192zb, der durch die sich im Wesentlichen axial erstreckenden Schenkel des Dichtrings 128zb gebildet ist, als Schmiermitteldepot dient. Zu diesem Zweck sind die von der ringförmigen Kammer 34zb abgewandten Seiten des Dichtrings 128zb mit einer Abdeckung 194zb versehen. Die Abdeckung 194zb kann beispielsweise als ringförmiges Federblech realisiert sein, das zwischen die sich axial erstreckenden Schenkel des Dichtrings 128zb geklemmt ist und so den Hohlraum 192zb nach außen hin verschließt. Die erste Druckmittelleitung 28zb erstreckt sich dann durch die Abdeckung 194zb hindurch. Es versteht sich, dass bei einer solchen Anordnung auf die Schlauchfedern 134zb und 136zb des Dichtrings 128zb auch verzichtet werden könnte, da die von den Schlauchfedern 134zb und 136zb erzeugte Anpresskraft, die die Hauptdichtlippen 130zb und 132zb gegen die Seitenwände 124zb und 126zb des Ringprofils 122zb drückt, auch von der Abdeckung 194zb aufgebracht werden kann.

Durch die gepunkteten Schlangenlinien ist in der Darstellung der Figuren 30a und 30b angedeutet, dass der Hohlraum 192zb mit einem Schmiermittel befüllt ist. Damit in dem Hohlraum 192zb vorhandenes Schmiermittel zu den Dichtflächen des Dichtrings 128zb auf den Seitenwänden 124zb und 126zb des Ringprofils 122zb gelangen kann, sind Kanäle 196zb bzw. 198zb vorgesehen, die sich aus dem Hohlraum 192zb in im Wesentlichen radialer Richtung durch diejenigen Schenkel des Dichtrings 128zb erstrecken, die die Kragen 138zb und 140zb und die Hauptdichtlippen 130zb und 132zb des Dichtrings 128zb miteinander verbinden. Der Hohlraum 192zb dient so als Schmiermitteldepot, welches nach und nach Schmiermittel zur Schmierung und Kühlung der Dichtflächen des Dichtrings 128zb durch die Kanäle 196zb bzw. 198zb abgibt.

Den Ausführungsbeispielen der Figuren 21 bis 26 und 30 ist gemeinsam, dass die ringförmige Kammer jeweils innerhalb der Seitenwände des mit der Nabe verbundenen Ringprofils gebildet ist. Aus den Figuren ist ersichtlich, dass eine Abdichtung zwischen dem Achskörper und der Nabe durch das Ringprofil alleine nicht gewährleistet ist. Um das Eindringen von Staub und Schmutzpartikeln in ein benachbart zu dem Ringprofil angeordnetes Kugellager sowie einen Austritt von Schmiermittel aus dem Kugellager zu verhindern, können zusätzliche Wellendichtringe axial innerhalb oder axial außerhalb des Ringprofils angeordnet sein.

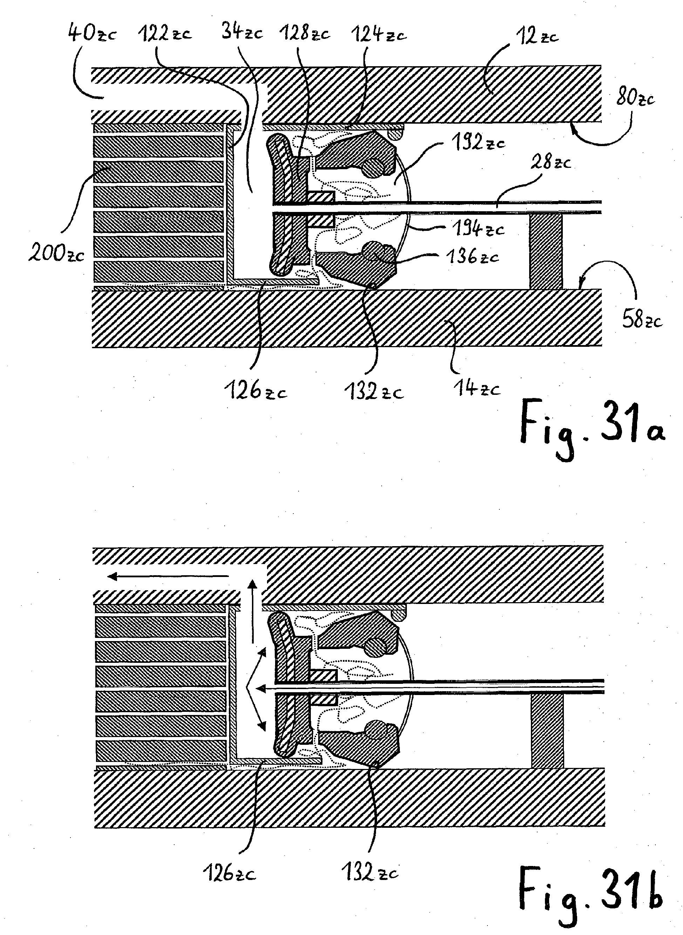

Eine mögliche Ausführungsform, bei der das Anbringen zusätzlicher Wellendichtringe vermieden werden kann, ist in den Figuren 31a und 31b dargestellt. Das dort gezeigte Beispiel gleicht dem Ausführungsbeispiel der Figuren 30a und 30b und unterscheidet sich lediglich dadurch, dass die radial innere Seitenwand 126zc des Ringprofils 122zc kürzer ist als die radial äußere Seitenwand 124zc, so dass die radial innere Hauptdichtlippe 132zc des Dichtrings 128zc mit dem Achskörper 14zc in Kontakt ist. Die Hauptdichtlippe 132zc wird durch die von der Schlauchfeder 136zc bzw. von der Abdeckung 194zc erzeugte Anpresskraft gegen den Achskörper 14zc gedrückt und bewirkt somit eine Abdichtung zwischen dem Achskörper 14zc und der Nabe 12zc. Bei einer Drehung der Nabe 12zc um den Achskörper 14zc gleitet die Hauptdichtlippe 132zc über die Mantelfläche 58zc des Achskörpers 14zc. Es versteht sich, dass der durch den Dichtring 128zc gebildete Hohlraum 192zc in diesem Fall nicht mit Schmiermittel befüllt zu sein braucht, da Schmiermittel, das im Raum eines benachbart zu dem Ringprofil 122zc angeordneten Kugellagers 200zc vorhanden ist, in den Hohlraum 192zc gelangen kann, um sich von dort aus zu den Dichtflächen des Dichtrings 128zc hin zu verteilen.

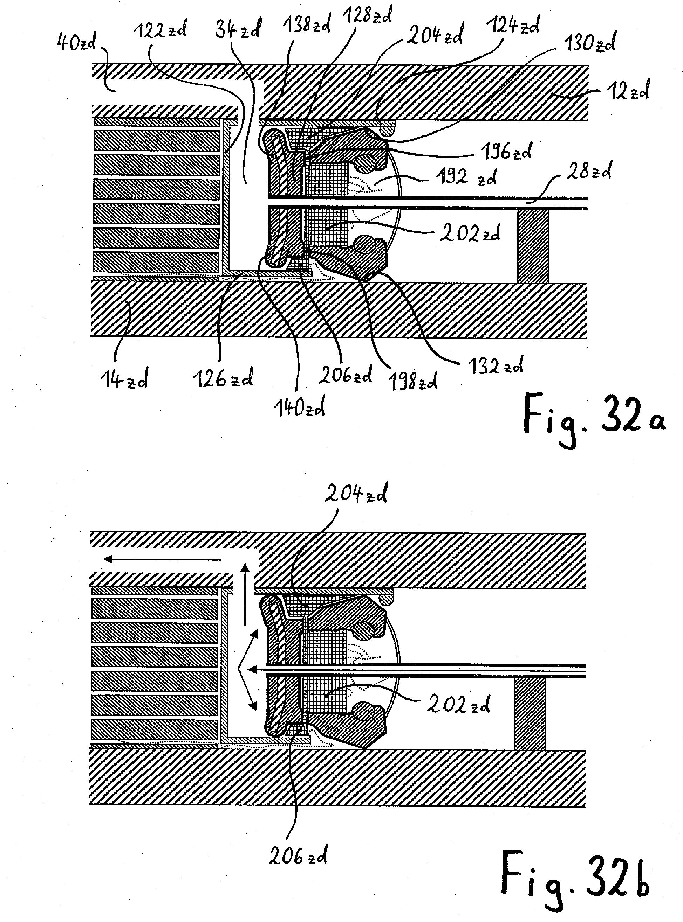

Die Figuren 32a und 32b zeigen schließlich eine Weiterbildung der Ausführungsform der Figuren 31a und 31b. Dieses Beispiel unterscheidet sich von dem vorigen Beispiel dadurch, dass in dem Hohlraum 192zd ein schwammartiger Schaumstoff 202zd vorhanden ist, der einen Teil des Hohlraums 192zd ausfüllt und die Kanäle 196zd und 198zd überdeckt. Der Schaumstoff 202zd weist eine sich in radialer Richtung erstreckende Abschlussfiläche auf und sorgt in erster Linie dafür, dass in dem schaumstofffreien Teil des Hohlraums 192zd befindliches Schmiermittel nicht ungebremst durch die Kanäle 196zd und 198zd abfließen kann, sondern zunächst von dem Schaumstoff 202zd aufgenommen und gespeichert wird, um dann allmählich in die Kanäle 196zd und 198zd abgegeben zu werden. Im gezeigten Beispielfall sind auch die Kanäle 196zd und 198zd mit schwammartigem Schaumstoff ausgefüllt, was aber nicht zwingend erforderlich ist. Darüber hinaus sind schwammartige Schaumstoffe 204zd und 206zd in den Zwischenräumen zwischen den Kragen 138zd bzw. 140zd, den Hauptdichtlippen 130zd bzw. 132zd und den Seitenwänden 124zd und 126zd des Ringprofils 122zd vorhanden. Aus dem Hohlraum 192zd über die Kanäle 196zd und 198zd in diese Zwischenräume eintretendes Schmiermittel wird von den Schaumstoffen 204zd und 206zd aufgenommen und anschließend von diesen gleichmäßig an den Dichtflächen des Dichtrings 128zd auf den Seitenwänden 124zd und 126zd des Ringprofils 122zd verteilt.

Einem Fachmann ist klar, dass die in Bezug auf die Figuren 30 bis 32 beschriebenen Merkmale gleichermaßen auf die anderen Ausführungsformen der beschriebenen Fahrzeugachsbaugruppe anwendbar sind. So ist es möglich, auch für die Ausführungsformen der Figuren 22 und 23 Versteifungen in den Dichtringen vorzusehen oder die Dichtringe mit Schmiermitteldepots und schwammartigem Material in deren Hohlräumen auszustatten. Gleiches gilt für die Ausführungsformen der Figuren 24 bis 26, mit dem Unterschied, dass diejenigen Elemente bzw. Merkmale, die oben mit axialer Ausrichtung beschrieben wurden nun mit radialer Ausrichtung zu bezeichnen sind, und diejenigen Elemente bzw. Merkmale, die oben mit radialer Ausrichtung beschrieben wurden nun mit axialer Ausrichtung zu bezeichnen sind.

## Patentansprüche

1. Fahrzeugachsbaugruppe (10), mit einer Nabe (12; 12a - 12r; 12y; 12z; 12za), die um eine Mittellängsachse (A) drehbar an einem zylindrischen Achskörper (14; 14a - 14r; 14y; 14z; 14za) gelagert ist, und einem axial inneren Wellendichtring (36; 36a - 36q; 114r; 36y; 36z; 36za) und einem axial äußeren Wellendichtring (38; 38a - 38o; 112p; 112q; 118r; 38y; 38z; 38za) zur mittelbaren oder unmittelbaren Abdichtung zwischen dem Achskörper (14; 14a - 14r; 14y; 14z; 14za) und der Nabe (12; 12a - 12r; 12y; 12z; 12za), mit
- einer ringförmigen Kammer (34; 34a - 34r; 34y; 34z; 34za), die zwischen den beiden Wellendichtringen, dem Achskörper (14; 14a - 14r; 14y; 14z; 14za) und der Nabe (12; 12a - 12r; 12y; 12z; 12za) gebildet ist;
- einer ersten Druckmittelleitung (28; 28a - 28r; 28y; 28z; 28za), die sich durch den Achskörper (14; 14a - 14r; 14y; 14z; 14za) oder einen der beiden Wellendichtringe erstreckt und in die ringförmige Kammer (34; 34a - 34r; 34y; 34z; 34za) mündet; und
- einer zweiten Druckmittelleitung (40; 40a - 40r; 40y; 40z; 40za), die sich aus der ringförmigen Kammer (34; 34a - 34r; 34y; 34z; 34za) durch die Nabe (12; 12a - 12r; 12y; 12z; 12za) erstreckt und zur Verbindung mit einem auf der Nabe (12; 12a - 12r; 12y; 12z; 12za) befestigten Rad ausgestaltet ist,
wobei wenigstens einer der Wellendichtringe benachbart zu der ringförmigen Kammer (34; 34a - 34r; 34y; 34z; 34za) radial innen oder radial außen mit einem Kragen (60a - 60g; 601 - 60o; 60y; 60z; 60za, 62a - 62d; 621 - 62o; 62y; 62z; 62za) versehen ist,
**dadurch gekennzeichnet, dass** wenigstens einer der Wellendichtringe (36y; 36z; 36za, 38y; 38z; 38za) zumindest einen Kanal (176y; 176z; 176za, 178y; 178z; 178za) aufweist, der sich aus einem inneren Hohlraum (168y; 168z; 168za, 170y; 170z; 170za) des Wellendichtrings (36y; 36z; 36za, 38y; 38z; 38za) in im Wesentlichen radialer Richtung zu einem in einem Bereich zwischen dem Kragen (60y; 60z; 60za, 62y; 62z; 62za) und einer Hauptdichtlippe (50y; 50z; 50za, 52y; 52z; 52za) des Wellendichtrings (36y; 36z; 36za, 38y; 38z; 38za) liegenden Seitenabschnitt des Wellendichtrings (36y; 36z; 36za, 38y; 38z; 38za) erstreckt.

2. Fahrzeugachsbaugruppe nach Anspruch 1, **dadurch gekennzeichnet, dass** der Kragen (60a; 60b; 60e; 60n; 60o; 60y; 60z; 60za, 62a; 62b; 62n; 62o; 62y; 62z; 62za) eine Dichtlippe (64a; 64b; 64e; 64n; 64o; 64y; 64z; 64za, 66a; 66b; 66n; 66o; 66y; 66z; 66za) aufweist, die zumindest bei einem Überdruck in der Kammer (34a; 34b; 34e; 34n; 34o; 34y; 34z; 34za) mit dem Achskörper (14a; 14b; 14e; 14n; 14o; 14y; 14z; 14za) respektive der Nabe (12a; 12b; 12e; 12n; 12o; 12y; 12z; 12za) in Kontakt ist.

3. Fahrzeugachsbaugruppe nach Anspruch 1,
**dadurch gekennzeichnet, dass** auf der Mantelfläche (58c) des Achskörpers (14c) gegenüber einem radial inneren Kragen (60c, 62c) eine Ringnut (72c, 74c) vorhanden ist, in die der Kragen (60c, 62c) radial hineinragt
und/oder
dass auf einer Innenfläche (80f) der Nabe (12f) gegenüber einem radial äußeren Kragen (60f) eine Ringnut (72f) vorhanden ist, in die der Kragen (60f) radial hineinragt.

4. Fahrzeugachsbaugruppe nach Anspruch 1,
**dadurch gekennzeichnet, dass** auf der Mantelfläche (58d; 58l; 58m) des Achskörpers (14d; 14l; 14m) eine sich in Umfangsrichtung erstreckende Rippe (76d; 76l; 76m, 78d; 78l; 78m) vorhanden ist, an der sich ein radial innerer Kragen (60d; 60l; 60m, 62d; 62l; 62m) zumindest bei einem Überdruck in der Kammer (34d; 341; 34m) axial abstützt
und/oder
dass auf einer Innenfläche (80g) der Nabe (12g) eine sich in Umfangsrichtung erstreckende Rippe (76g) vorhanden ist, an der sich ein radial äußerer Kragen (60g) zumindest bei einem Überdruck in der Kammer (34g) axial abstützt.

5. Fahrzeugachsbaugruppe nach Anspruch 4,
**dadurch gekennzeichnet, dass** die Rippe (76d; 76g; 76l; 76m, 78d; 78g; 781; 78m) einstückig mit dem Achskörper (14d; 14l; 14m) oder der Nabe (12g) ausgebildet ist
oder
dass die Rippe (76d; 76g; 76l; 76m, 78d; 78g; 78l; 78m) durch einen in eine Nut eingesetzten Sprengring oder O-Ring gebildet ist.

6. Fahrzeugachsbaugruppe nach einem der Ansprüche 4 oder 5,
**dadurch gekennzeichnet, dass** ein radial innerer Kragen (60d; 60l; 60m, 62d; 62l; 62m) eine Dichtlippe aufweist, die zumindest bei einem Überdruck in der Kammer (34d; 34l; 34m) mit dem Achskörper (14d; 14l; 14m) oder der Rippe (76d; 76l; 76m, 78d; 78l; 78m) in Kontakt ist, und/oder ein radial äußerer Kragen (60g) eine Dichtlippe aufweist, die zumindest bei einem Überdruck in der Kammer (34g) mit der Nabe (12g) oder der Rippe (76g) in Kontakt ist.

7. Fahrzeugachsbaugruppe nach einem der vorhergehenden Ansprüche, **dadurch gekennzeichnet, dass** zwischen den beiden Wellendichtringen (36h; 36i, 38h; 38i) auf der Mantelfläche (58h; 58i) des Achskörpers (14h; 14i) ein Ringflansch (84h; 84i) mit zwei elastischen, radialen Seitenwänden (86h; 86i, 88h; 88i) angebracht ist, wobei die erste Druckmittelleitung (28h; 28i) im Ringflansch (84h; 84i) zwischen den beiden Seitenwänden (86h; 86i, 88h; 88i) in die ringförmige Kammer (34h; 34i) mündet.

8. Fahrzeugachsbaugruppe nach Anspruch 7,
**dadurch gekennzeichnet, dass** auf einer Innenfläche (80i) der Nabe (12i) gegenüber dem Ringflansch (84i) ein Ring (90i) mit U-förmigem Querschnitt befestigt ist, dessen Seitenwände (92i, 94i) radial einwärts gerichtet sind und die zweite Druckmittelleitung (40i) sich durch den Ring (90i) zwischen seinen Seitenwänden (92i, 94i) in die Nabe (12i) erstreckt.

9. Fahrzeugachsbaugruppe nach einem der vorhergehenden Ansprüche, **dadurch gekennzeichnet, dass** die beiden Wellendichtringe (36j; 36l; 36o; 36y; 36z; 36za, 38j; 38l; 38o; 38y; 38z; 38za) axial starr miteinander gekoppelt sind
und/oder
dass die beiden Wellendichtringe (36k; 36m; 36n; 36o, 38k; 38m; 38n; 38o) axial elastisch miteinander gekoppelt sind
und/oder
dass wenigstens einer der beiden Wellendichtringe (114r, 112p; 112q; 118r) in ein zwischen dem Achskörper (14p; 14q; 14r) und der Nabe (12p; 12q; 12r) angeordnetes Kugellager (104p; 104q; 104r, 116r) integriert ist
und/oder
dass ein Ventil zur Druckentlastung der ringförmigen Kammer (34; 34a - 34r; 34y; 34z; 34za) vorhanden ist
und/oder
dass wenigstens einer der Wellendichtringe (36y; 36z; 36za, 38y; 38z; 38za), insbesondere im Bereich des Kragens (60y; 60z; 60za, 62y; 62z; 62za), einen Kern (160y; 160z, 162y; 162z) aus einem den Wellendichtring (36y; 36z; 36za, 38y; 38z; 38za) versteifenden Material aufweist.

10. Fahrzeugachsbaugruppe nach Anspruch 9,
**dadurch gekennzeichnet, dass** ein im Bereich des Kragens (60y; 60z; 60za, 62y; 62z;
62za) vorhandener Abschnitt (164y; 164z, 166y; 166z) des Kerns (160y; 160z, 162y; 162z) bezüglich des übrigen Kerns (160y; 160z, 162y; 162z) schwenkbar ist.

11. Fahrzeugachsbaugruppe nach Anspruch 1,
**dadurch gekennzeichnet, dass** der Hohlraum (168y; 168z; 168za, 170y; 170z; 170za) auf der von der ringförmigen Kammer (34y; 34z; 34za) abgewandten Seite des Wellendichtrings (36y; 36z; 36za, 38y; 38z; 38za) mit einer Abdeckung (172y; 172z, 174y; 174za) versehen ist und der Hohlraum (168y; 168z; 168za, 170y; 170z; 170za) mit einem Schmiermittel befüllt ist.

12. Fahrzeugachsbaugruppe nach einem der vorhergehenden Ansprüche, **dadurch gekennzeichnet, dass** in dem Hohlraum (168za, 170za) ein schwammartiger Schaumstoff (179za, 181za) vorhanden ist, der wenigstens einen Teil des Hohlraums (168za, 170za) ausfüllt und eine Eintrittsöffnung des zumindest einen Kanals (176za, 178za) überdeckt
und/oder
dass ein Zwischenraum zwischen dem Kragen (60za, 62za) und der Hauptdichtlippe (50za, 52za) zumindest teilweise mit einem schwammartigen Schaumstoff (183za, 185za) ausgefüllt ist
und/oder
dass ein innerer Hohlraum (168y; 168z; 168za) des axial inneren Wellendichtrings (36y; 36z; 36za) und ein innerer Hohlraum (170y; 170z; 170za) des axial äußeren Wellendichtrings (38y; 38z; 38za) durch wenigstens eine Leitung (180y; 180z; 180za, 182y; 182z) miteinander verbunden sind.

13. Fahrzeugachsbaugruppe nach Anspruch 12,
**dadurch gekennzeichnet, dass** die Leitung (180y; 180z; 180za, 182y; 182z) von einem Wellendichtring (36y; 36z; 36za, 38y; 38z; 38za) in Richtung des anderen Wellendichtrings (36y; 36z; 36za, 38y; 38z; 38za) radial ansteigt und/oder sich schräg entgegen einer Hauptdrehrichtung der Nabe (12y; 12z; 12za) erstreckt.

14. Fahrzeugachsbaugruppe (10), mit einer Nabe (12s - 12x; 12zb - 12zd), die um eine Mittellängsachse (A) drehbar an einem zylindrischen Achskörper (14s - 14x; 14zb - 14zd) gelagert ist,
mit
- einem mit einer Innenfläche (80s - 80x; 80zb - 80zd) der Nabe (12s - 12x; 12zb - 12zd) verbundenes Ringprofil (122s - 122x; 122zb - 122zd) mit U-förmigem Querschnitt, dessen Seitenwände (124s - 124x; 124zb - 124zd, 126s - 126x; 126zb - 126zd) axial oder radial verlaufen;
- einem zwischen den Seitenwänden (124s - 124x; 124zb - 124zd, 126s - 126x; 126zb - 126zd) angeordneten, bezüglich des Achskörpers (14s - 14x; 14zb - 14zd) drehfesten Dichtring (128s - 128x; 128zb - 128zd), der in dem Ringprofil (122s - 122x; 122zb - 122zd) eine ringförmige Kammer (34s - 34x; 34zb - 34zd) begrenzt;
- einer ersten Druckmittelleitung (28s - 28x; 28zb - 28zd), die sich durch den Dichtring (128s - 128x; 128zb - 128zd) erstreckt und in die ringförmige Kammer (34s - 34x; 34zb - 34zd) mündet; und
- einer zweiten Druckmittelleitung (40s - 40x; 40zb - 40zd), die sich aus der ringförmigen Kammer (34s - 34x; 34zb - 34zd) durch das Ringprofil (122s - 122x; 122zb - 122zd) und die Nabe (12s - 12x; 12zb - 12zd) erstreckt und zur Verbindung mit einem auf der Nabe (12s - 12x; 12zb - 12zd) befestigten Rad ausgestaltet ist, **dadurch gekennzeichnet, dass** der Dichtring (128zb - 128zd) zumindest einen Kanal (196zb; 196zd, 198zb; 198zd) aufweist, der sich aus einem inneren Hohlraum (192zb - 192zd) des Dichtrings (128zb - 128zd) bei einem Ringprofil (122zb - 122zd) mit axial verlaufenden Seitenwänden (124zb - 124zd, 126zb - 126zd) in im Wesentlichen radialer Richtung und bei einem Ringprofil mit radial verlaufenden Seitenwänden in im Wesentlichen axialer Richtung zu einem in einem Bereich zwischen einem Kragen (138zb; 138zd, 140zb; 140zd) und einer Hauptdichtlippe (130zb; 130zd, 132zb - 132zd) des Dichtrings (128zb - 128zd) liegenden Seitenabschnitt des Dichtrings (128zb - 128zd) erstreckt.

15. Fahrzeugachsbaugruppe nach Anspruch 14,
**dadurch gekennzeichnet, dass** das Ringprofil (122s - 122x; 122zb - 122zd) einstückig mit der Nabe (12s - 12x; 12zb - 12zd) ausgebildet ist, insbesondere gegossen ist
und/oder
dass eine Halterung (146s; 146v, 148s; 148v, 150s; 150v) vorgesehen ist, die bei einem Ringprofil (122s - 122u) mit axial verlaufenden Seitenwänden (124s - 124u, 126s - 126u) die axiale Position des Dichtrings (128s - 128u) fixiert und bei einem Ringprofil (122v - 122x) mit radial verlaufenden Seitenwänden (124v - 124x, 126v - 126x) die radiale Position des Dichtrings (128v - 128x) fixiert
und/oder
dass bei einem Ringprofil (122s - 122u; 122zb - 122zd) mit axial verlaufenden Seitenwänden (124s - 124u; 124zb - 124zd, 126s - 126u; 126zb - 126zd) der Dichtring (128s - 128u; 128zb - 128zd) benachbart zu der ringförmigen Kammer (34s - 34u; 34zb - 34zd) radial innen und radial außen mit einem Kragen (138s - 138u; 138zb - 138zd, 140s - 140u; 140zb - 140zd) versehen ist und, dass bei einem Ringprofil (122v - 122x) mit radial verlaufenden Seitenwänden (124v - 124x, 126v - 126x) der Dichtring (128v - 128x) benachbart zu der ringförmigen Kammer (34v - 34x) axial innen und axial außen mit einem Kragen (138v - 138x, 140v - 140x) versehen ist.

16. Fahrzeugachsbaugruppe nach Anspruch 15,
**dadurch gekennzeichnet, dass** bei einem Ringprofil (122t) mit axial verlaufenden Seitenwänden (124t, 126t) an den Seitenwänden (124t, 126t) des Ringprofils (122t) eine Stützstruktur (152t, 154t) vorhanden ist, an der sich der radial innere und der radial äußere Kragen (138t, 140t) zumindest bei einem Überdruck in der Kammer (34t) axial abstützt und, dass bei einem Ringprofil (122w) mit radial verlaufenden Seitenwänden (124w, 126w) an den Seitenwänden (124w, 126w) des Ringprofils (122w) eine Stützstruktur (152w, 154w) vorhanden ist, an der sich der axial innere und der axial äußere Kragen (138w, 140w) zumindest bei einem Überdruck in der Kammer (34w) radial abstützt.

17. Fahrzeugachsbaugruppe nach Anspruch 15 oder 16,
**dadurch gekennzeichnet, dass** der Dichtring (128zb - 128zd), insbesondere im Bereich wenigstens eines der beiden Kragen (138zb; 138zd, 140zb; 140zd), einen Kern (186zb) aus einem den Dichtring (128zb - 128zd) versteifenden Material aufweist.

18. Fahrzeugachsbaugruppe nach Anspruch 17,
**dadurch gekennzeichnet, dass** ein im Bereich eines Kragens (138zb; 138zd, 140zb; 140zd) vorhandener Abschnitt (188zb, 190zb) des Kerns (186zb) bezüglich des übrigen Kerns (186zb) schwenkbar ist.

19. Fahrzeugachsbaugruppe nach Anspruch 14,
**dadurch gekennzeichnet, dass** der Hohlraum (192zb - 192zd) auf der von der ringförmigen Kammer (34zb - 34zd) abgewandten Seite des Dichtrings (128zb - 128zd) mit einer Abdeckung (194zb; 194zc) versehen ist und der Hohlraum (192zb - 192zd) mit einem Schmiermittel befüllt ist.

20. Fahrzeugachsbaugruppe nach einem der Ansprüche 14 bis 19,
**dadurch gekennzeichnet, dass** in dem Hohlraum (192zd) ein schwammartiger Schaumstoff (202zd) vorhanden ist, der wenigstens einen Teil des Hohlraums (192zd) ausfüllt und eine Eintrittsöffnung des zumindest einen Kanals (196zd, 198zd) überdeckt
und/oder
dass ein Zwischenraum zwischen dem Kragen (138zd, 140zd) und der Hauptdichtlippe (130zd, 132zd) zumindest teilweise mit einem schwammartigen Schaumstoff (204zd, 206zd) ausgefüllt ist.

## Claims

1. Vehicle axle assembly (10), comprising a hub (12; 12a - 12r; 12y; 12z; 12za), which is mounted on a cylindrical axle body (14; 14a - 14r; 14y; 14z; 14za) so that it can rotate about a central longitudinal axis (A), and an axially inner shaft sealing ring (36; 36a - 36q; 114r; 36y; 36z; 36za) and an axially outer shaft sealing ring (38; 38a - 38o; 112p; 112q; 118r; 38y; 38z; 38za) for indirect or direct sealing between the axle body (14; 14a - 14r; 14y; 14z; 14za) and the hub (12' 12a - 12r; 12y; 12z; 12za),
comprising
- an annular chamber (34; 34a - 34r; 34y; 34z; 34za) that is formed between the two shaft sealing rings, the axle body (14; 14a - 14r; 14y; 14z; 14za) and the hub (12; 12a - 12r; 12y; 12z; 12za);
- a first pressure medium line (28; 28a - 28r; 28y; 28z; 28za) that extends through the axle body (14; 14a - 14r; 14y; 14z; 14za) or one of the two shaft sealing rings and opens out into the annular chamber (34; 34a - 34r; 34y; 34z; 34za); and
- a second pressure medium line (40; 40a - 40r; 40y; 40z; 40za) that extends out of the annular chamber (34; 34a - 34r; 34y; 34z; 34za) through the hub (12; 12a - 12r; 12y; 12z; 12za) and is designed to be connected to a wheel that is secured on the hub (12; 12a - 12r; 12y; 12z; 12za),
wherein at least one of the shaft sealing rings adjacent to the annular chamber (34; 34a - 34r; 34y; 34z; 34za) is provided radially inside or radially outside with a collar (60a - 60g; 60l - 60o; 60y; 60z; 60za, 62a - 62d; 62l - 62o; 62y; 62z; 62za), **characterized in that** at least one of the shaft sealing rings (36y; 36z; 36za, 38y; 38z; 38za) has at least one channel (176y; 176z; 176za, 178y; 178z; 178za), which extends out of an inner hollow space (168y; 168z; 168za, 170y; 170z; 170za) of the shaft sealing ring (36y; 36z; 36za, 38y; 38z; 38za) in substantially radial direction to a lateral portion of the shaft sealing ring (36y; 36z; 36za, 38y; 38z; 38za) that is situated in a region between the collar (60y; 60z; 60za, 62y; 62z; 62za) and a main sealing lip (50y; 50z; 50za, 52y; 52z; 52za) of the shaft sealing ring (36y; 36z; 36za, 38y; 38z; 38za).

2. Vehicle axle assembly according to claim 1,
**characterized in that** the collar (60a; 60b; 60e; 60n; 60o; 60y; 60z; 60za, 62a; 62b; 62n; 62o; 62y; 62z; 62za) has a sealing lip (64a; 64b; 64e; 64n; 64o; 64y; 64z; 64za, 66a; 66b; 66n; 66o; 66y; 66z; 66za), which at least in the event of an overpressure in the chamber (34a; 34b; 34e; 34n; 34o; 34y; 34z; 34za) is in contact with the axle body (14a; 14b; 14e; 14n; 14o; 14y; 14z; 14za) and/or the hub (12a; 12b; 12e; 12n; 12o; 12y; 12z; 12za).

3. Vehicle axle assembly according to claim 1,
**characterized in that** on the lateral surface (58c) of the axle body (14c) opposite a radially inner collar (60c, 62c) there is an annular groove (72c, 74c), into which the collar (60c, 62c) radially projects,
and/or
**in that** on an inner surface (80f) of the hub (12f) opposite a radially outer collar (60f) there is an annular groove (72f), into which the collar (60f) radially projects.

4. Vehicle axle assembly according to claim 1,
**characterized in that** on the lateral surface (58d; 58l; 58m) of the axle body (14d; 14l; 14m) there is a rib (76d; 76l; 76m, 78d; 781; 78m), which extends in peripheral direction and against which a radially inner collar (60d; 60l; 60m, 62d; 62l; 62m) is axially supported at least in the event of an overpressure in the chamber (34d; 341; 34m),
and/or
**in that** on an inner surface (80g) of the hub (12g) there is a rib (76g), which extends in peripheral direction and against which a radially outer collar (60g) is axially supported at least in the event of an overpressure in the chamber (34g).

5. Vehicle axle assembly according to claim 4,
**characterized in that** the rib (76d; 76g; 761; 76m, 78d; 78g; 781; 78m) is formed integrally with the axle body (14d; 14l; 14m) or the hub (12g),
or
**in that** the rib (76d; 76g; 76l; 76m, 78d; 78g; 781; 78m) is formed by a retaining ring or O-ring that is inserted into a groove.

6. Vehicle axle assembly according to one of claims 4 or 5,
**characterized in that** a radially inner collar (60d; 601; 60m, 62d; 62l; 62m) has a sealing lip, which at least in the event of an overpressure in the chamber (34d; 34l; 34m) is in contact with the axle body (14d; 14l; 14m) or the rib (76d; 76l; 76m, 78d; 78l; 78m), and/or a radially outer collar (60g) has a sealing lip, which at least in the event of an overpressure in the chamber (34g) is in contact with the hub (12g) or the rib (76g).

7. Vehicle axle assembly according to one of the preceding claims, **characterized in that** between the two shaft sealing rings (36h; 36i, 38h; 38i) on the lateral surface (58h; 58i) of the axle body (14h; 14i) an annular flange (84h; 84i) with two flexible, radial side walls (86h; 86i, 88h; 88i) is mounted, wherein the first pressure medium line (28h; 28i) opens out in the annular flange (84h; 84i) between the two side walls (86h; 86i, 88h; 88i) into the annular chamber (34h; 34i).

8. Vehicle axle assembly according to claim 7,
**characterized in that** on a inner surface (80i) of the hub (12i) opposite the annular flange (84i) a ring (90i) with a U-shaped cross section is fastened, the side walls (92i, 94i) of which are directed radially inwards, and the second pressure medium line (40i) extends through the ring (90i) between the side walls (92i, 94i) thereof into the hub (12i).

9. Vehicle axle assembly according to one of the preceding claims, **characterized in that** the two shaft sealing rings (36j; 361; 36o; 36y; 36z; 36za, 38j, 38l; 38o; 38y; 38z; 38za) are coupled axially rigidly to one another,#
and/or
**in that** the two shaft sealing rings (36k; 36m; 36n; 36o, 38k; 38m; 38n; 38o) are coupled axially flexibly to one another,
and/or
**in that** at least one of the two shaft sealing rings (114r, 112p; 112q; 118r) is integrated into a ball bearing (104p; 104q; 104r, 116r), which is disposed between the axle body (14p; 14q; 14r) and the hub (12p; 12q; 12r),
and/or
**in that** a valve is provided for pressure relief of the annular chamber (34; 34a - 34r; 34y; 34z; 34za),
and/or
**in that** at least one of the shaft sealing rings (36y; 36z; 36za, 38y; 38z; 38za), particularly in the region of the collar (60y; 60z; 60za, 62y; 62z; 62za), has a core (160y; 160z, 162y; 162z) made of a material that stiffens the shaft sealing ring (36y; 36z; 36za, 38y; 38z; 38za).

10. Vehicle axle assembly according to claim 9,
**characterized in that** a portion (164y; 164z, 166y; 166z) of the core (160y; 160z, 162y; 162z) that is disposed in the region of the collar (60y; 60z; 60za, 62y; 62z; 62za) is pivotable relative to the rest of the core (160y; 160z, 162y; 162z).

11. Vehicle axle assembly according to claim 1,
**characterized in that** the hollow space (168y; 168z; 168za, 170y; 170z; 170za) at the side of the shaft sealing ring (36y; 36z; 36za, 38y; 38z; 38za) remote from the annular chamber (34y; 34z; 34za) is provided with a cover (172y; 172z; 174y; 174za), and **in that** the hollow space (168y; 168z; 168za, 170y; 170z; 170za) is filled with a lubricant.

12. Vehicle axle assembly according to one of the preceding claims, **characterized in that** in the hollow space (168za, 170za) there is a sponge-like foam material (179za, 181za), which fills at least part of the hollow space (168za, 170za) and overlaps an inlet opening of the at least one channel (176za, 178za),
and/or
**in that** an intermediate space between the collar (60za, 62za) and the main sealing lip (50za, 52za) is filled at least partially with a sponge-like foam material (183za, 185za),
and/or
**in that** an inner hollow space (168y; 168z; 168za) of the axially inner shaft sealing ring (36y; 36z; 36za) and an inner hollow space (170y; 170z; 170za) of the axially outer shaft sealing ring (38y; 38z; 38za) are connected to one another by at least one line (180y; 180z; 180za, 182y; 182z).

13. Vehicle axle assembly according to claim 12,
**characterized in that** the line (180y; 180z; 180za, 182y; 182z) ascends radially from one shaft sealing ring (36y; 36z; 36za, 38y; 38z; 38za) in the direction of the other shaft sealing ring (36y; 36z; 36za, 38y; 38z; 38za) and/or extends obliquely counter to a main direction of rotation of the hub (12y; 12z; 12za).

14. Vehicle axle assembly (10), comprising a hub (12s - 12x; 12zb - 12zd), which is mounted on a cylindrical axle body (14s - 14x; 14zb - 14zd) so that it can rotate about a central longitudinal axis (A),
comprising
- an annular profile (122s - 122x; 122zb - 122zd) with a U-shaped cross section, which is connected to an inner surface (80s - 80x; 80zb - 80zd) of the hub (12s - 12x; 12zb - 12zd) and the side walls (124s - 124x; 124zb - 124zd, 126s - 126x; 126zb - 126zd) of which extend axially or radially;
- a sealing ring (128s - 128x; 128zb - 128zd), which is disposed between the side walls (124s - 124x; 124zb - 124zd, 126s - 126x; 126zb - 126zd), is locked against rotation relative to the axle body (14s - 14x; 14zb - 14zd) and in the annular profile (122s - 122x; 122zb - 122zd) delimits an annular chamber (34s - 34x; 34zb - 34zd);
- a first pressure medium line (28s - 28x; 28zb - 28zd), which extends through the sealing ring (128s - 128x; 128zb - 128zd) and opens out into the annular chamber (34s - 34x; 34zb - 34zd); and
- a second pressure medium line (40s - 40x; 40zb - 40zd), which extends out of the annular chamber (34s - 34x; 34zb - 34zd) through the annular profile (122s - 122x; 122zb - 122zd) and the hub (12s - 12x; 12zb - 12zd) and is designed to be connected to a wheel that is secured on the hub (12s - 12x; 12zb - 12zd), **characterized in that** the sealing ring (128zb - 128zd) has at least one channel (196zb; 196zd, 198zb; 198zd), which extends out of an inner hollow space (192zb - 192zd) of the sealing ring (128zb - 128zd) in the case of an annular profile (122zb - 122zd) with axially extending side walls (124zb - 124zd, 126zb - 126zd) in substantially radial direction and in the case of an annular profile with radially extending side walls in substantially axial direction to a lateral portion of the sealing ring (128zb - 128zd) that is situated in a region between a collar (138zb; 138zd, 140zb; 140zd) and a main sealing lip (130zb; 130zd, 132zb - 132zd) of the sealing ring (128zb - 128zd).

15. Vehicle axle assembly according to claim 14,
**characterized in that** the annular profile (122s - 122x; 122zb - 122zd) is formed integrally, in particular cast, with the hub (12s - 12x; 12zb - 12zd),
and/or
**in that** a bracket (146s; 146v, 148s; 148v, 150s; 150v) is provided, which in the case of an annular profile (122s - 122u) with axially extending side walls (124s - 124u, 126s - 126u) fixes the axial position of the sealing ring (128s - 128u) and in the case of an annular profile (122v - 122x) with radially extending side walls (124v - 124x, 126v - 126x) fixes the radial position of the sealing ring (128v - 128x), and/or
**in that** in the case of an annular profile (122s - 122u; 122zb - 122zd) with axially extending side walls (124s - 124u; 124zb - 124zd, 126s - 126u; 126zb - 126zd) the sealing ring (128s - 128u; 128zb - 128zd) adjacent to the annular chamber (34s - 34u; 34zb - 34zd) is provided radially inside and radially outside with a collar (138s - 138u; 138zb - 138zd, 140s - 140u; 140zb - 140zd), and that in the case of an annular profile (122v - 122x) with radially extending side walls (124v - 124x, 126v - 126x) the sealing ring (128v - 128x) adjacent to the annular chamber (34v - 34x) is provided axially inside and axially outside with a collar (138v - 138x, 140v - 140x).

16. Vehicle axle assembly according to claim 15,
**characterized in that** in the case of an annular profile (122t) with axially extending side walls (124t, 126t) there is on the side walls (124t, 126t) of the annular profile (122t) a support structure (152t, 154t), against which the radially inner and the radially outer collar (138t, 140t) are axially supported at least in the event of an overpressure in the chamber (34t), and that in the case of an annular profile (122w) with radially extending side walls (124w, 126w) there is on the side walls (124w, 126w) of the annular profile (122w) a support structure (152w, 154w), against which the axially inner and the axially outer collar (138w, 140w) are radially supported at least in the event of an overpressure in the chamber (34w).

17. Vehicle axle assembly according to claim 15 or 16,
**characterized in that** the sealing ring (128zb - 128zd), particularly in the region of at least one of the two collars (138zb; 138zd, 140zb; 140zd), has a core (186zb) made of a material that stiffens the sealing ring (128zb - 128zd).

18. Vehicle axle assembly according to claim 17,
**characterized in that** a portion (188zb, 190zb) of the core (186zb) that is disposed in the region of a collar (138zb; 138zd, 140zb; 140zd) is pivotable relative to the rest of the core (186zb).

19. Vehicle axle assembly according to claim 14,
**characterized in that** the hollow space (192zb - 192zd) at the side of the sealing ring (128zb - 128zd) remote from the annular chamber (34zb - 34zd) is provided with a cover (194zb; 194zc), and **in that** the hollow space (192zb - 192zd) is filled with a lubricant.

20. Vehicle axle assembly according to one of claims 14 to 19,
**characterized in that** in the hollow space (192zd) there is a sponge-like foam material (202zd), which fills at least part of the hollow space (192zd) and overlaps an inlet opening of the at least one channel (196zd, 198zd),
and/or
**in that** an intermediate space between the collar (138zd, 140zd) and the main sealing lip (130zd, 132zd) is filled at least partially with a sponge-like foam material (204zd, 206zd).

## Revendications

1. Ensemble essieu (10) de véhicule, comprenant un moyeu (12; 12a à 12r; 12y; 12z; 12za) monté rotatif autour d'un axe longitudinal médian (A) sur un corps de pont (14; 14a à 14r; 14y; 14z; 14za) cylindrique, et une bague d'étanchéité pour arbre tournant (36; 36a à 36q; 114r; 36y; 36z; 36za) axialement intérieure et une bague d'étanchéité pour arbre tournant (38; 38a à 38o; 112p; 112q; 118r; 38y; 38z; 38za) axialement extérieure servant à assurer l'étanchéité directe ou indirecte entre le corps de pont (14; 14a à 14r; 14y; 14z; 14za) et le moyeu (12; 12a à 12r; 12y; 12z; 12za),
comprenant
- une chambre (34; 34a à 34r; 34y; 34z; 34za) annulaire qui est formée entre les deux bagues d'étanchéité pour arbre tournant, le corps de pont (14; 14a à 14r; 14y; 14z; 14za) et le moyeu (12; 12a à 12r; 12y; 12z; 12za);
- une première conduite de fluide sous pression (28; 28a à 28r; 28y; 28z; 28za), qui s'étend à travers le corps de pont (14; 14a à 14r; 14y; 14z; 14za) ou l'une des deux bagues d'étanchéité pour arbre tournant, et qui débouche dans la chambre (34; 34a à 34r; 34y; 34z; 34za) annulaire; et
- une deuxième conduite de fluide sous pression (40; 40a à 40r; 40y; 40z; 40za), qui s'étend à travers le moyeu (12; 12a à 12r; 12y; 12z; 12za) à partir de la chambre annulaire (34; 34a à 34r; 34y; 34z; 34za) et qui est conçue pour être reliée à une roue fixée sur le moyeu (12; 12a à 12r; 12y; 12z; 12za),
au moins une des bagues d'étanchéité pour arbre tournant contiguës à la chambre annulaire (34; 34a à 34r; 34y; 34z; 34za) étant pourvue radialement à l'intérieur ou radialement à l'extérieur d'un col (60a à 60g; 601 à 60o, 60y; 60z; 60za, 62a à 62d; 621 à 62o; 62y; 62z; 62za),
**caractérisé en ce qu'**au moins une des bagues d'étanchéité pour arbre tournant (36y; 36z; 36za; 38y; 38z; 38za) présente au moins un canal (176y; 176z; 176za, 178y; 178z; 178za) qui s'étend à partir d'une cavité intérieure (168y; 168z; 168za, 170y; 170z; 170za) de la bague d'étanchéité pour arbre tournant (36y; 36z; 36za, 38y; 38z; 38za) dans une direction sensiblement radiale par rapport à une partie latérale de la bague d'étanchéité pour arbre tournant (36y; 36z; 36za, 38y; 38z; 38za) située dans une zone comprise entre le col (60y; 60z; 60za, 62y; 62z; 62za) et une lèvre d'étanchéité principale (50y; 50z; 50za, 52y; 52z; 52za) de la bague d'étanchéité pour arbre tournant (36y; 36z; 36za, 38y; 38z; 38za).

2. Ensemble essieu de véhicule selon la revendication 1,
**caractérisé en ce que** le col (60a; 60b; 60e; 60n; 60o; 60y; 60z; 60za, 62a; 62b; 62n; 62o; 62y; 62z; 62za) présente une lèvre d'étanchéité (64a; 64b; 64e; 64n; 64o; 64y; 64z; 64za, 66a; 66b; 66n; 66o; 66y; 66z; 66za) qui, tout au moins en cas de surpression à l'intérieur de la chambre (34a; 34b; 34e; 34n; 34o; 34y; 34z; 34za), est en contact avec le corps de pont (14a; 14b; 14e; 14n; 14o; 14y; 14z; 14za) et le moyeu (12a; 12b; 12e; 12n; 12o; 12y; 12z; 12za).

3. Ensemble essieu de véhicule selon la revendication 1,
**caractérisé en ce qu'**est ménagée sur la surface d'enveloppe (58c) du corps de pont (14c), à l'opposé d'un col radialement intérieur (60c, 62), une gorge annulaire (72c, 74c) dans laquelle le col (60c, 62c) fait saillie radialement,
et/ou
**en ce qu'**est ménagée sur une surface intérieure (80f) du moyeu (12f), à l'opposé d'un col (60f) radialement extérieur, une gorge annulaire (72f) dans laquelle le col (60f) fait saillie radialement.

4. Ensemble essieu de véhicule selon la revendication 1,
**caractérisé en ce qu'**est ménagée sur la surface d'enveloppe (58d; 581; 58m) du corps de pont (14d; 14l; 14m) une nervure (76d; 76l; 76m; 78d; 781; 78m), qui s'étend dans la direction périphérique et sur laquelle s'appuie axialement un col (60d; 601; 60m, 62d; 62l; 62m) radialement intérieur, tout au moins en cas de surpression à l'intérieur de la chambre (34d; 341; 34m),
et/ou
**en ce qu'**est ménagée sur une surface intérieure (80g) du moyeu (12g) une nervure (76g), qui s'étend dans la direction périphérique et sur laquelle s'appuie axialement un col (60g) radialement extérieur, tout au moins en cas de surpression à l'intérieur de la chambre (34g).

5. Ensemble essieu de véhicule selon la revendication 4,
**caractérisé en ce que** la nervure (76d; 76g; 76l; 76m, 78d; 78g; 781; 78m) est réalisée d'un seul tenant avec le corps de pont (14d; 14l; 14m) ou le moyeu (12g),
ou
**en ce que** la nervure (76d; 76g; 76l; 76m, 78d; 78g; 78l; 78m) est formée par un circlips ou par un joint torique monté dans une gorge.

6. Ensemble essieu de véhicule selon l'une des revendications 4 ou 5, **caractérisé en ce qu'**un col radialement intérieur (60d; 60l; 60m, 62d; 62l; 62m) présente une lèvre d'étanchéité qui, tout au moins en cas de surpression à l'intérieur de la chambre (34d; 34l; 34m), est en contact avec le corps de pont 14d; 14l; 14m) ou la nervure (76d; 761; 76m, 78d; 78l; 78m), et/ou **en ce qu'**un col radialement extérieur (60g) présente une lèvre d'étanchéité qui, tout au moins en cas de surpression à l'intérieur de la chambre (34g), est en contact avec le moyeu (12g) ou la nervure (76g).

7. Ensemble essieu de véhicule selon l'une des revendications précédentes,
**caractérisé en ce qu'**une bride annulaire (84h; 84i) comportant deux parois latérales (86h; 86i; 88h; 88i) radiales élastiques est montée entre les deux bagues d'étanchéité pour arbre tournant (36h; 36i, 38h; 38i) sur la surface d'enveloppe (58h; 58i) du corps de pont (14h; 14i), la première conduite de fluide sous pression (28h; 28i) débouchant dans la chambre annulaire (34h; 34i) entre les deux parois latérales (86h; 86i, 88h; 88i) de la bride annulaire (84h; 84i).

8. Ensemble essieu de véhicule selon la revendication 7,
**caractérisé en ce qu'**une bague (90i) ayant une section en forme de U et dotée de parois latérales (92i, 94i) orientées radialement vers l'intérieur est fixée sur une surface intérieure (80i) du moyeu (12i), à l'opposé de la bride annulaire (84i), et **en ce que** la deuxième conduite de fluide sous pression (40i) s'étend dans le moyeu (12i) à travers cette bague (90i), entre les parois latérales (92i; 94i) de celle-ci.

9. Ensemble essieu de véhicule selon l'une des revendications précédentes,
**caractérisé en ce que** les deux bagues d'étanchéité pour arbre tournant (36j; 36l; 36o; 36y; 36z; 36za, 38j; 38l; 38o; 38y; 38z; 38za) sont axialement couplées l'une à l'autre de manière rigide,
et/ou
**en ce que** les deux bagues d'étanchéité pour arbre tournant (36k; 36m; 36n; 36o, 38k; 38m; 38n; 38o) sont axialement couplées l'une à l'autre de manière élastique,
et/ou
**en ce qu'**au moins une des deux bagues d'étanchéité pour arbre tournant (114r, 112p; 112q; 118r) est montée dans un roulement à billes (104p; 104q; 104r; 116r) disposé entre le corps de pont (14p; 14q; 14r) et le moyeu (12p; 12q; 12r),
et/ou
**en ce qu'**il est prévu une soupape pour la décompression de la chambre annulaire (34; 34a à 34r; 34y; 34z; 34za)
et/ou,
**en ce qu'**au moins une des deux bagues d'étanchéité pour arbre tournant (36y; 36z; 36za, 38y; 38z; 38za) présente, plus particulièrement dans la zone du col (60y; 60z; 60za, 62y; 62z; 62za), un noyau (160y; 160z, 162y; 162z) constitué à partir d'un matériau renforçant le bague d'étanchéité pour arbre tournant (36y; 36z; 36za, 38y; 38z; 38za).

10. Ensemble essieu de véhicule selon la revendication 9,
**caractérisé en ce qu'**une partie (164y; 164z, 166y; 166z) du noyau (160y; 160z, 162y; 162z) située dans la zone du col (60y; 60z; 60za, 62y; 62z; 62za) peut pivoter par rapport au reste du noyau (160y; 160z, 162y; 162z).

11. Ensemble essieu de véhicule selon la revendication 1,
**caractérisé en ce que** la cavité (168y; 168z; 168za, 170y; 170z; 170za) du côté de la bague d'étanchéité pour arbre tournant (36y; 36z; 36za, 38y; 38z; 38za) opposé à la chambre annulaire (34y; 34z; 34za) est pourvue d'un capot (172y; 172z, 174y; 174za) et que cette cavité (168y; 168z; 168za, 170y; 170z; 170za) est remplie de lubrifiant.

12. Ensemble essieu de véhicule selon l'une des revendications précédentes,
**caractérisé en ce qu'**une mousse (179za, 181za) ayant une structure spongieuse est placée à l'intérieur de la cavité (168za, 170za), laquelle mousse remplit au moins une partie de la cavité (168za, 170za) et recouvre un ouverture d'entrée dudit au moins un canal (176za, 178za),
et/ou
**en ce qu'**un espace entre le col (60za, 62za) et la lèvre d'étanchéité principale (50za, 52za) est rempli au moins partiellement d'une mousse (183za, 185za) ayant une structure spongieuse,
et/ou
**en ce qu'**une cavité intérieure (168y; 168z; 168za) de la bague d'étanchéité pour arbre tournant (36y; 36z; 36za) axialement intérieure et une cavité intérieure (170y; 170z; 170za) de la bague d'étanchéité pour arbre tournant (38y; 38z; 38za) axialement extérieure sont reliées l'une à l'autre par au moins une conduite (180y; 180z; 180za, 182y; 182z).

13. Ensemble essieu de véhicule selon la revendication 12,
**caractérisé en ce que** la conduite (180y; 180z; 180za, 182; 182z) s'étend vers le haut depuis une bague d'étanchéité pour arbre tournant (36y; 36z; 36za, 38y; 38z; 38za) en direction de l'autre bague d'étanchéité pour arbre tournant (36y; 36z; 36za, 38y; 38z; 38za) et/ou s'étend de manière inclinée à l'inverse du sens de rotation principal du moyeu (12y; 12z; 12za).

14. Ensemble essieu de véhicule (10), comprenant un moyeu (12s à 12x; 12zb à 12zd) monté rotatif autour d'un axe longitudinal médian (A) sur un corps de pont (14s à 14x; 14zb à 14zd) cylindrique,
comprenant
- un profil de bague (122s à 122x; 122zb à 122zd) ayant une section en forme de U, qui est relié à une surface interne (80s à 80x; 80zb à 80zd) du moyen (12s à 12x; 12zb à 12zd) et dont les parois latérales (124s à 124x; 124zb à 124zd, 126s à 126x; 126zb à 126zd) s'étendent axialement ou radialement;
- une bague d'étanchéité (128s à 128x; 128zb à 128zd) qui est disposée entre lesdites parois latérales (124s à 124x; 124zb à 124zd, 126s à 126x; 126zb à 126zd) et montée fixe en rotation par rapport au corps de pont (14s à 14x; 14zb à 14zd) et qui délimite une chambre annulaire (34s à 34x; 34zb à 34zd) dans le profil de bague (122s à 122x; 122zb à 122zd);
- une première conduite de fluide sous pression (28s à 28x; 28zb à 28zd), qui s'étend à travers la bague d'étanchéité (128s à 128x; 128zb à 128zd) et débouche dans la chambre annulaire (34s à 34x; 34zb à 34zd); et
- une deuxième conduite de fluide sous pression (40s à 40x; 40zb à 40zd), qui s'étend à travers le profil de bague (122s à 122x; 122zb à 122zd) et le moyeu (12s à 12x; 12zb à 12zd) à partir de la chambre annulaire (34s à 34x; 34zb à 34zd) et qui est conçue pour être reliée à une roue fixée sur le moyeu (12s à 12x; 12zb à 12zd), **caractérisé en ce que** la bague d'étanchéité (128zb à 128zd) présente au moins un canal (196zb; 196zd, 198zb; 198zd) qui s'étend à partir d'une cavité intérieure (192zb à 192zd) de la bague d'étanchéité (128zb à 128zd) dans une direction sensiblement radiale dans le cas d'un profil de bague (122zb à 122zd) doté de parois latérales (124zb à 124zd, 126zb à 126zd) s'étendant axialement, et, dans le cas d'un profil de bague doté de parois latérales s'étendant radialement, dans une direction sensiblement axiale par rapport à une partie latérale de la bague d'étanchéité (128zb à 128zd) située dans une zone comprise entre un col (138zb; 138zd, 140zb; 140zd) et une lèvre d'étanchéité principale (130zb; 130zd, 132zb à 132zd).

15. Ensemble essieu de véhicule selon la revendication 14,
**caractérisé en ce que** le profil de bague (122s à 122x; 122zb à 122zd) est réalisé, plus particulièrement par moulage, d'un seul tenant avec le moyeu (12s à 12x; 12zb à 12zd),
et/ou
**en ce qu'**il est prévu une fixation (146s; 146v, 148s; 148v, 150s; 150v) qui, dans le cas d'un profil de bague (122s à 122u) doté de parois latérales (124s à 124u, 126s à 126u) s'étendant axialement, fixe la position axiale de la bague d'étanchéité (128s à 128u) et qui, dans le cas d'un profil de bague (122v à 122x) doté de parois latérales (124v à 124x, 126v à 126x) s'étendant radialement, fixe la position radiale de la bague d'étanchéité (128v à 128x),
et/ou
**en ce que** dans le cas d'un profil de bague (122s à 122u; 122zb à 122zd) doté de parois latérales (124s à 124u; 124zb à 124zd, 126s à 126u; 126zb à 126zd) s'étendant axialement, la bague d'étanchéité (128s à 128u; 128zb à 128zd) contiguë à la chambre annulaire (34s à 34u; 34zb à 34zd) est pourvue radialement à l'intérieur et radialement à l'extérieur d'un col (138s à 138u; 138zb à 138zd, 140s à 140u; 140zb à 140zd), et **en ce que** dans le cas d'un profil de bague (122v à 122x) doté de parois latérales (124v à 124x, 126v à 126x) s'étendant radialement, la bague d'étanchéité (128v à 128x) contiguë à la chambre annulaire (34v à 34x) est pourvue axialement à l'intérieur et axialement à l'extérieur d'un col (138v à 138x; 140v à 140x).

16. Ensemble essieu de véhicule selon la revendication 15,
**caractérisé en ce que** dans le cas d'un profil de bague (122t) doté de parois latérales (124t, 126t) s'étendant axialement, est placée sur les parois latérales (124t, 126t) du profil de bague (122t) une structure de support (152t, 154t) sur laquelle s'appuient axialement le col radialement intérieur et le col radialement extérieur (138t, 140t), tout au moins en cas de surpression à l'intérieur de la chambre (34t), et **en ce que** dans le cas d'un profil de bague (122w) doté de parois latérales (124w, 126w) s'étendant radialement, est placée sur les parois latérales (124w ,126w) du profil de bague (122w) une structure de support (152w, 154w) sur laquelle s'appuient radialement le col axialement intérieur et le col axialement extérieur (138w, 140w), tout au moins en cas de surpression à l'intérieur de la chambre (34w).

17. Ensemble essieu de véhicule selon la revendication 15 ou 16,
**caractérisé en ce que** la bague d'étanchéité (128zb à 128zd) présente, plus particulièrement dans la zone d'au moins un des deux cols (138zb; 138zd, 140zb; 140zd), un noyau (186zb) constitué à partir d'un matériau renforçant la bague d'étanchéité (128zb à 128zd).

18. Ensemble essieu de véhicule selon la revendication 17,
**caractérisé en ce qu'**une partie (188zb, 190zb) du noyau (186zb) située dans la zone d'un col (138zb; 138zd, 140zb; 140zd) peut pivoter par rapport au reste du noyau (186zb).

19. Ensemble essieu de véhicule selon la revendication 14,
**caractérisé en ce que** la cavité (192zb à 192zd) du côté de la bague d'étanchéité (128zb à 128zd) opposé à la chambre annulaire (34zb à 34zd) est pourvue d'un capot (194zb; 194zc) et que cette cavité (192zb à 192zd) est remplie de lubrifiant.

20. Ensemble essieu de véhicule selon l'une des revendications 14 à 19, **caractérisé en ce qu'**une mousse (202zd) ayant une structure spongieuse est placée à l'intérieur de la cavité (192zd), laquelle mousse remplit au moins une partie de la cavité (192zd) et recouvre un ouverture d'entrée dudit au moins un canal (196zd, 198zd)
et/ou
**en ce qu'**un espace entre le col (138zd, 140zd) et la lèvre d'étanchéité principale (130zd, 132zd) est rempli au moins partiellement d'une mousse (204zd, 206zd) ayant une structure spongieuse.
